(19) Europäisches Patentamt / European Patent Office / Office européen des brevets

(11) **EP 3 896 638 A1**

(12) **EUROPEAN PATENT APPLICATION**

(43) Date of publication:
**20.10.2021 Bulletin 2021/42**

(21) Application number: **20201161.5**

(22) Date of filing: **04.05.2017**

(51) Int Cl.:
*G06Q 40/00* (2012.01)          *H04L 9/32* (2006.01)
*G06Q 20/38* (2012.01)          *G06Q 20/40* (2012.01)
*G06Q 30/02* (2012.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **04.05.2016   US 201662331654 P
09.05.2016   US 201662333340 P
31.05.2016   US 201662343369 P
02.06.2016   US 201662344667 P
07.06.2016   US 201662346775 P
16.06.2016   US 201662351011 P
22.06.2016   US 201662353482 P
24.06.2016   US 201662354195 P
19.07.2016   US 201662363970 P
01.08.2016   US 201662369447 P
24.08.2016   US 201662378753 P
02.09.2016   US 201662383299 P
13.09.2016   US 201662394091 P
27.09.2016   US 201662400361 P
03.10.2016   US 201662403403 P
20.10.2016   US 201662410721 P
03.11.2016   US 201662416959 P
16.11.2016   US 201662422883 P
06.02.2017   US 201762455444 P
14.02.2017   US 201762458746 P
16.02.2017   US 201762459652 P**

(62) Document number(s) of the earlier application(s) in
accordance with Art. 76 EPC:
**17793332.2 / 3 452 975**

(71) Applicant: **Algorand Inc.
Boston, MA 02116 (US)**

(72) Inventors:
• **Chen, Jing**
**Boston, Massachusetts 02215 (US)**
• **Micali, Silvio**
**Port Jefferson, New York 11777 (US)**

(74) Representative: **Freischem & Partner
Patentanwälte mbB
Salierring 47-53
50677 Köln (DE)**

Remarks:
•This application was filed on 09-10-2020 as a
divisional application to the application mentioned
under INID code 62.
•Claims filed after the date of receipt of the divisional
application (Rule 68(4) EPC).

(54) **DISTRIBUTED TRANSACTION PROPAGATION AND VERIFICATION SYSTEM**

(57)     In a transaction system in which transactions are organized in blocks, an entity to constructs a new block of valid transactions, relative to a sequence of prior blocks, by having the entity determine a quantity Q from the prior blocks, having the entity use a secret key in order to compute a string S uniquely associated to Q and the entity, having the entity compute from Q a quantity T that is S itself, a function of S, and/or hash value of S, having the entity determine whether T possesses a given property, and, if T possesses the given property, having the entity digitally sign the new block and make available S and a digitally signed version of the new block. The secret key may be a secret signing key corresponding to a public key of the entity. S may be a digital signature of Q by the entity.

$$ESIG_b(B_b^r) \; \sigma_b^{r,1} \qquad ESIG(B_d^r) \; \sigma_d^{r,1} \qquad ESIG(B_h^r) \; \sigma_h^{r,1}$$

Smallest Credential and Input Block for the Agreement Protocol

$$\sigma_d^{r,1} \qquad B_d^r$$

FIG. 2

**Description**

CROSS REFERENCE TO RELATED APPLICATIONS

This application claims priority to U.S. Prov. App. No. 62/331,654, filed May 4, 2016, and entitled "ALGORAND: A VERY EFFICIENT MONEY PLATFORM", and to U.S. Prov. App. No. 62/333,340, filed May 9, 2016, and entitled "ALGORAND: A VERY EFFICIENT MONEY PLATFORM", and to U.S. Prov. App. No. 62/343,369, filed May 31, 2016, and entitled "ALGORAND: THE EFFICIENT BLOCK CHAIN", and to U.S. Prov. App. No. 62/344,667, filed June 2, 2016, and entitled "ALGORAND THE EFFICIENT BLOCK CHAIN", and to U.S. Prov. App. No. 62/346,775, filed June 7, 2016, and entitled "ALGORAND THE EFFICIENT BLOCK CHAIN", and to U.S. Prov. App. No. 62/351,011, filed June 16, 2016, and entitled "ALGORAND THE EFFICIENT AND DEMOCRATIC LEDGER", and to U.S. Prov. App. No. 62/353,482, filed June 22, 2016, and entitled "ALGORAND THE EFFICIENT AND DEMOCRATIC LEDGER", and to U.S. Prov. App. No. 62/354,195, filed June 24, 2016, and entitled "ALGORAND THE EFFICIENT AND DEMOCRATIC LEDGER", and to U.S. Prov. App. No. 62/363,970, filed July 19, 2016, entitled "ALGORAND THE EFFICIENT AND DEMOCRATIC LEDGER", and to U.S. Prov. App. No. 62/369,447, filed August 1, 2016, entitled "ALGORAND THE EFFICIENT AND DEMOCRATIC LEDGER", and to U.S. Prov. App. No. 62/378,753, filed August 24, 2016, entitled "ALGORAND THE EFFICIENT PUBLIC LEDGER", and to U.S. Prov. App. No. 62/383,299, filed September 2, 2016, entitled "ALGORAND", and to U.S. Prov. App. No. 62/394,091, filed September 13, 2016, entitled "ALGORAND", and to U.S. Prov. App. No. 62/400,361, filed September 27, 2016, entitled "ALGORAND", and to U.S. Prov. App. No. 62/403,403, filed October 3, 2016, entitled "ALGORAND", and to U.S. Prov. App. No. 62/410,721, filed October 20, 2016, entitled "ALGORAND", and to U.S. Prov. App. No. 62/416,959, filed November 3, 2016, entitled "ALGORAND", and to U.S. Prov. App. No. 62/422,883, filed November 16, 2016, entitled "ALGORAND", and to U.S. Prov. App. No. 62/455,444, filed February 6, 2017, entitled "ALGORAND", and to U.S. Prov. App. No. 62/458,746, filed February 14, 2017, entitled "ALGORAND", and to U.S. Prov. App. No. 62/459,652, filed February 16, 2017, entitled "ALGORAND", which are all incorporated by reference herein.

TECHNICAL FIELD

This application relates to the field of electronic transactions and more particularly to the field of distributed public ledgers, securing the contents of sequence of transaction blocks, and the verification of electronic payments.

BACKGROUND OF THE INVENTION

A public ledger is a tamperproof sequence of data that can be read and augmented by everyone. Shared public ledgers stand to revolutionize the way a modern society operates. They can secure all kinds of traditional transactions -such as payments, asset transfers, and titling- in the exact order in which they occur; and enable totally new transactions -such as cryptocurrencies and smart contracts. They can curb corruption, remove intermediaries, and usher in a new paradigm for trust. The uses of public ledgers to construct payment systems and cryptocurrencies are particular important and appealing.

In Bitcoin and other prior distributed systems, users have public keys (and know the corresponding secret keys) of a digital signature scheme. It is useful to humanize each key, and think of it as a user. Indeed, the public keys in the system are known, but the users behind those keys are not directly known, providing the users with some level of privacy. Money is directly associated to each public key. At each point in time, as deducible for the sequence of blocks so far, each public key owns a given amount of money. A payment from one public key (the "payer") to another public key (the "payee") is digitally signed by the payer. Similarly, all transactions are digitally signed. Furthermore, to be valid, a payment must transfer an amount of money that does not exceed the money that, at that time, the payer owns. Payments (and, more generally, transactions) are organized in blocks. A block is valid if all its payments (and transactions) are collectively valid. That is, the total amount of money paid by any payer in a given block does not exceed the amount of money then available to the payer. Bitcoin is a *permissionless* system. That is, it allows new users to freely join the system. A new user joins the system when he appears as the payee of payment in a (valid) block. Accordingly, in Bitcoin, a user may enhance whatever privacy he enjoys by owning multiple keys, which he may use for different type of payments. In a permissionless system, he can easily increase his number of keys by transferring some money from a key he owns to a new key. Permissionlessness is an important property. Permissionless systems can also operate as permissioned systems, but the viceversa need not be true. In a permissioned system new users cannot automatically join, but must be approved. (A special case of a permissioned system is one in which the set of users is fixed.) Permissionless systems are more applicable and realistic but also more challenging. In Bitcoin and similar distributed systems, users communicate by propagating messages (that is by "gossiping"). Messages are sent to a few, randomly picked, "neighbors", each of which, in turn, sends them to a few random neighbors, and so forth. To avoid loops, one does not send twice the same message. A distributed (or shared) ledger consists of the sequence of blocks of (valid) transactions generated so far. Typically, the first block, the *genesis blocl,* is assumed to be common knowledge, by being part of the specification of the system. Shared ledgers differ in the way in which new blocks are "generated".

As currently implemented, however, public ledgers do not achieve their enormous potential. Centralized public ledgers put all trust on a single entity, who can arbitrarily refuse to publicize payments made by given keys, and are very vulnerable to cyber attacks. Indeed, once the single central authority is compromised, so is the entire system. Decentralized systems, like Bitcoin, are very expensive to run, waste computation and other valuable resources, concentrate power in the hands of new entities (miners), suffer from considerable ambiguity (forks), and have long latency and small thruput. Other decentralized implementations are permissioned, or assume the ability of punishing misbehaving users, or both, and/or trust that some subset of users are immune to cyber attacks for a suitably long time.

It is thus desirable to provide public ledgers and electronic money systems that do not need to trust a central authority, and do not suffer from the inefficiencies and insecurities of known decentralized approaches.

SUMMARY OF THE INVENTION

According to the system described herein, in a transaction system in which transactions are organized in blocks, an entity to constructs a new block $B^r$ of valid transactions, relative to a sequence of prior blocks, $B^0,...,B^{r-1}$, by having the entity determine a quantity Q from the prior blocks, having the entity use a secret key in order to compute a string S uniquely associated to Q and the entity, having the entity compute from S a quantity T that is at least one of: S itself, a function of S, and hash value of S, having the entity determine whether T possesses a given property, and, if T possesses the given property, having the entity digitally sign $B^r$ and make available S and a digitally signed version of $B^r$. The secret key may be a secret signing key corresponding to a public key of the entity and S may be a digital signature of Q by the entity. T may be a binary expansion of a number and may satisfy the property if T is less than a given number p. S may be made available by making S deducible from $B^r$. Each user may have a balance in the transaction system and p may vary for each user according to the balance of each user.

According further to the system described herein, in a transaction system in which transactions are organized in blocks and blocks are approved by a set of digital signatures, an entity approves a new block of transactions, $B^r$, given a sequence of prior blocks, $B^0,..., B^{r-1}$, by having the entity determine a quantity Q from the prior blocks, having the entity compute a digital signature S of Q, having the entity compute from S a quantity T that is at least one of: S itself, a function of S, and hash value of S, having the entity determine whether T possesses a given property, and, if T possesses the given property, having the entity make S available to others. T may be a binary expansion of a number and satisfies the given property if T is less than a pre-defined threshold, p, and the entity may also make S available. The entity may have a balance in the transaction system and p may vary according to the balance of the entity. The entity may act as an authorized representative of at least an other entity. The value of p may depend on the balance of the entity and/or a combination of the balance of the entity and a balance of the other entity. The other user may authorize the user with a digital signature. The entity may digitally sign $B^r$ only if $B^r$ is an output of a Byzantine agreement protocol executed by a given set of entities. A particular one of the entities may belong to the given set of entities if a digital signature of the particular one of the entities has a quantity determined by the prior blocks that satisfies a given property.

According further to the system described herein, in a transaction system in which transactions are organized in a sequence of generated and digitally signed blocks, $B^0,..., B^{r-1}$, where each block $B^r$ contains some information $INFO^r$ that is to be secured and contains securing information $S^r$, contents of a block are prevented from being undetectably altered by every time that a new block $B^i$ is generated, inserting information $INFO^i$ of $B^i$ into a leaf i of a binary tree, merklefying the binary tree to obtain a Merkle tree $T_i$, and determining the securing information $S^i$ of block $B^i$ to include a content $R_i$ of a root of $T_i$ and an authenticating path of contents of the leaf i in $T_i$. Securing information of $S^{i1}$ of a preceding block $B^{i1}$ may be stored and the securing information $S^i$ may be obtained by hashing, in a predetermined sequence, values from a set including at least one of: the values of $S^{i1}$, the hash of $INFO^i$, and a given value. A first entity may prove to a second entity having the securing information $S^z$ of a block $B^z$ that the information $INFO^r$ of the block $B^r$ preceding a block $B^z$ is authentic by causing the second entity to receive the authenticating path of $INFO^i$ in the Merkle tree $T^z$.

According further to the system described herein, in a payment system in which users have a balance and transfer money to one another via digitally signed payments and balances of an initial set of users are known, where a first set of user payments is collected into a first digitally signed block, $B^1$, a second set of user payments is collected into a second digitally signed block, $B^2$, becoming available after $B^1$, etc., an entity E provides verified information about a balance ari that a user i has available after all the payments the user i has made and received at a time of an rth block, $B^r$, by computing, from information deducible from information specified in the sequence of block $B^0,..., B^{r-1}$, an amount $a_x$ for every user x, computing a number, n, of users in the system at the time of an rth block, $B^r$ being made available, ordering the users x in a given order, for each user x, if x is the ith user in the given order, storing $a_x$ in a leaf i of a binary tree T with at least n leaves, determining Merkle values for the tree T to compute a value R stored at a root of T, producing a digital signature S that authenticates R, and making S available as proof of contents of any leaf i of T by providing contents of every node that is a sibling of a node in a path between leaf 1 and the root of T.

According further to the system described herein, in a payment system in which users have a balance and transfer money to one another via digitally signed payments and balances of an initial set of users are known, where a first set of user payments is collected into a first digitally signed block, $B^1$, a second set of user payments is collected into a second digitally signed block, $B^2$, becoming available after $B^1$, etc., a set of entities E provides information that enables one to verify the balance $a_i$ that a user $i$ has available after all the payments the user $i$ has made and received at a time of an rth block, $B^r$, by determining the balance of each user $i$ after the payments of the first $r$ blocks, generating a Merkle-balanced-search-tree $T^r$, where the balance of each user is a value to be secured of at least one node of $T^r$, having each member of the set of entities generate a digital signature of information that includes the securing value $hv_\varepsilon$ of the root of $T^r$, and providing the digital signatures of $hv_\varepsilon$ to prove the balance of at least one of the users after the payments of the first $r$. The set of entities may consist of one entity. The set of entities are may be selected based on values of digital signatures thereof.

According further to the system described herein, in a payment system in which users have a balance and transfer money to one another via digitally signed payments and balances of an initial set of users are known, where a first set of user payments is collected into a first digitally signed block, $B^1$, a second set of user payments is collected into a second digitally signed block, $B^2$, becoming available after $B^1$, etc., an entity E proves the balance $a_i$ that a user $i$ has available after all the payments the user $i$ has made and received at a time of an rth block, $B^r$, by obtaining digital signatures of members of a set of entities of the securing information $hv_\varepsilon$ of the root of a Merkle-balanced-search tree $T^r$, wherein the balance of each user is an information value of at least one node of $T^r$ and by computing an authentication path and the content of every node that a given search algorithm processes in order to search in $T^r$ for the user $i$, and providing the authenticating paths and contents and the digital signatures to enable another entity to verify the balance of $i$.

According further to the system described herein, computer software, provided in a non-transitory computer-readable medium, includes executable code that implements any of the methods described herein.

A shared public ledger should generate a common sequence of blocks of transactions, whose contents are secure and can be easily proved. The present invention thus provides a new way to generate a common sequence of blocks, *Algorand,* with a new way to secure the contents of a sequence of blocks, *Blocktrees,* that also enable to easily prove their contents.

**Algorand** At high level, letting $B^1,..., B^{r-1}$ be the first r-1 blocks, in Algorand, the new block, $B^r$, is generated by the following two (mega) steps

- A user, the block leader, $\ell^r$, is randomly selected and trusted with the task to assemble a new block $B^r$ of valid transactions, to authenticate it, and to propagate it through the network. If proposed by an honest leader $\ell^r$, the block $B^r$ includes all the new valid transactions seen by $\ell^r$.

- A subset of users, $C^r$, collectively considered a "committee", are randomly selected and tasked to reach consensus of the block proposed by $\ell^r$, authenticate it, and propagate their authentication to the network. A block enters the public ledger only if it is properly certified, that is, digitally signed by at least a given number of proven members of $C^R$.

We now detail how public keys are selected, how $C^r$ reaches consensus, and how the given number of digital signatures necessary to certify a block is chosen.

Preferably, a public key is selected, as a leader or a member of the committee for block $B^r$, via a *secret cryptographic sortition.* In essence, a user *selects himself,* by running his own lottery, so that (a) he cannot cheat (even if he wanted) and select himself with a higher probability that the one envisioned; (b) obtains a proof $P_i$ of been selected, which can be inspected by everyone; (c) he is the only one to know that he has been selected (until he decides to reveal to other that this is the case, by exhibiting his proof $P_i$).

To enhance the odds that a public key he owns is selected, a user might be tempted to increase the number of the public keys he owns (so called Sybil attacks), which is very easy to do in a permissionless system, as already discussed. To prevent such attacks, the chosen secret cryptographic sortition ensures that the probability of a given public key to be selected is proportional to the money it owns. This way, a user has the same probability of having one of his public keys to be selected whether he keeps all his money associated to a single key or distributes it across several keys. (In particular, a user owning -say- $1M in a single key or owning 1M keys, each with $1, has the same chance of being selected.)

More precisely, to determine whether a public key *pk* he owns is selected, as a leader or a committee member, a user digitally signs (via the corresponding secret key *sk*) some information derivable from all prior blocks. In the preferred embodiment, he actually digitally signs a quantity $Q^r$ derivable from the last block, $B^{r-1}$, hash it, and check whether the hash is less that a given (probability) threshold $p$ (which depends on the amount of money owned by the user's public key). If this is the case, this digital signature of the user can be used as a proof that the public key *pk* has been selected. Indeed, everyone can check the user signature, hash it, and compare it to the given threshold *p*.

By varying the selection thresholds *p*, the system controls how many users are selected, for each role. Let us first consider selecting the public keys of a committee $C^r$. For instance, assume that, in the system, there are 1M keys, each owing the same amount of money, and that we wish $C^R$ to have roughly 1K members. Then we can choose *p* = 1/1, 000 to be a common selection threshold. In fact, the hash of a signature can be considered as the binary expansion of a random number between 0 and 1, and thus will be less than or equal to 1/1,000 with probability equal to *p* = 1/1,000. Thus, the total expected number of selected users will be 1M/1K=1/1K. As we shall see, we can still achieve to select a given number of committee members when different public keys own different amounts of money.

Let us know consider selecting a single leader $\ell^r$ for the rth block. Then, the system may first use secret cryptographic sortition to select -say- 100 public keys, and then let the leader be the public key whose (hashed) proof is smaller. More precisely, assume, for simplicity only, that the selected keys are $pk_1$, ... , $pk_{100}$, and that their corresponding proofs of selections are $P_1$,... , $P_{100}$. Then, the owner, *i*, of each selected key, assembles his own block of new valid transactions, $B_i^r$, and propagates $P_i$ as well as the properly authenticated block $B_i^r$. Then the leader $\ell^r$ will be the key whose proof is lexicographically smaller, and the block $B^r$ will the block on which the committee $C^r$ reaches consensus as being the block proposed by $\ell^r$.

A big advantage of using secret cryptographic sortition to select block leaders is that an adversary who monitors the activity of the system and is capable of successfully gaining control of any user he wants, cannot easily corrupt the leader $\ell^r$ so as to chose the block $\ell^r$ proposes. In fact, when the 100 potential leaders secretly select themselves, by running their own lotteries. Thus the adversary does not know who the (expected) 100 public key will be. However, once each i propagates his credential and proposed block, the adversary can quickly figure out who the leader $\ell^r$ is. But, at that point, there is little advantage in corrupting him. His block and proof are virally propagating over the network, and cannot be stopped. (Not even a nation state could put back in the bottle a message sent by -say- WikiLeaks.) One last move may still be available to the adversary. Namely, he might corrupt $\ell^r$ and, having taken control of him, oblige him to assemble, authenticate, and propagate a different block. Yet, even this opportunity will be closed to the adversary. Indeed, a user keeps his secret signing key that he uses to authenticate his payments and transactions, and to generate his selection proof (when and if he is selected). But he uses a set of different and ephemeral keys to authenticate the block he proposes, when he is selected a leader. More precisely, he selects in advance a set of -say- 1M public-secret key pairs $(pk_i^r, sk_i^r)$, and keeps safe each secret key $sk_i^r$ that he might still use. The inventive system guarantees that anyone can recognize that $pk_i^r$ is the only possible public key relative to which i can sign a proposed rth block, anyone can verify a digital signature of *i* relative to $pk_i^r$, but only *i* can generate such a signature, because he is the only one to know the corresponding secret key $sk_i^r$. If *i* is honest and is selected to propose a block $B_i^r$, then *i* digitally signs it relative to his public key pair $(pk_i^r, sk_i^r)$, and destroys $sk_i^r$ immediately after. This way, should the adversary succeed to corrupt *i*, he will not find the necessary secret key $sk_i^r$ with which he can force the now corrupted *i* to authenticate a second and different block. The same advantage exists for committee members. Let us now see how the members of the committee $C^r$ reach consensus on the block propagated by the leader $\ell^r$.

The preferred way for $C^r$ to reach consensus on a new proposed block is via *Byzantine agreement* (BA). A BA protocol is a communication protocol that enables a fixed set of players, each starting with his own value. to reach consensus on a common value. A player is honest if he follows all his prescribed instructions, and malicious otherwise. Malicious player can controlled and perfectly coordinated by a single entity, the *Adversary.* So long as only a minority -e.g., 1/3- of the payers are malicious, a BA protocol satisfies two fundamental properties: (1) All honest players output the same value, and (2) if all players start with the same input value, then all honest players output that value.

There are several challenges in using BA in a permissionless distributed-ledger system. A main one is that BA protocol protocols are very slow. (Typically, BA protocols involve at most a few dozen of users.) Algorand overcomes this challenge by means of a new protocol that, in the worst case, takes *only 9 steps* in expectation. Furthermore, in each of these steps, a participating player need only to propagate a *single* and *short* message!

However, a different challenge remains. Since to reach Byzantine agreement on a new block takes more than one step, although the adversary may not be able to attack committee members before they start sending their first messages (since they select themselves via secret cryptographic sortition), he could corrupt *all* members of the committee

$C^r$ after they propagate their first message in the BA protocol. In fact, with their first message, they propagate also their proofs of belonging to the committee. Fortunately, the inventive consensus protocol enjoys an additional and new advantage: it is *player replaceable.* That is, each of the expected few steps of the protocol can be executed by a different set of players, who need not share any secret information or any hidden internal state with the players selected to perform any prior step. Indeed, Algorand's consensus protocol is a *state-less* Byzantine agreement (BA) protocol. Accordingly, a different set of users can be selected, via secret cryptographic sortition, to run each step of the new BA protocol.

One last challenge remains. As we have seen, public keys select themselves to have a role in the generation of the block $B^r$ by digitally signing a quantity $Q^r$, that is preferably part of the previous block, $B^{r-1}$, already publicly known, and verifying whether their signature satisfies a special property: namely, its hash must be less than a given selection threshold. The problem is that, since Algorand is permissionless, an adversary may keep on generating many public-secret key pairs, until he finds one whose signature of $Q^r$ has the desired property. As he finds such a key, he may bring it into the system, so as to guarantee that one of his keys is the leader in charge of selecting block $B^r$, or most of the committee $C^r$ contains keys that he controls, enabling him to subvert the BA properties. To prevent this possibility, Algorand relies on a two-prong strategy. First of all, it does not allow a newly introduced key to be eligible to be selected right away as a block leader or a committee member. Rather, to have a role in the generation of block $B^r$, a key *pk* must be around for a while. More precisely, it must appear for the first time in the block $B^{r-k}$, or in an older block, where *k* is a sufficiently large integer. (For instance, *k* = 70 suffices, when at least 80% of the money is in honest hands, in each of our detailed embodiments.) Second, he defines $Q^r$ inductively, in terms, that is, of the previous quantity, $Q^{r-1}$. More precisely, in our preferred embodiment, $Q^r$ is the hash digital signature of the leader of block $B^r$ of the pair $(Q^{r-1}, r)$. This digital signature is actually made explicit part of the block $B^{r-1}$. The reason this works is as follows. When an adversary, in some block $B^{r-k}$, decides to bring into the system a new key *pk*, by making a payment from a public key he controls to *pk*, the earliest block for which *pk* can play a role is $B^r$. But we shall prove that, *k* blocks before $B^r$, no one can predict what $Q^{r-1}$ might be significantly better than by random guessing. Therefore, an adversary cannot choose *pk* in any strategic way!

**Blocktrees (and StatusTrees)** A blockchain guarantees the tamperproofness of its blocks, but also makes operating on its blocks (e.g., proving whether a given payment is part of a given block) quite cumbersome. Shared public ledgers are not synonyms of blockchains, and will in fact benefit from better ways to structure blocks. Algorand works with traditional blockchains, but also with a new way of structuring blocks of information, *blocktrees.* This inventive way may be of independent interest.

A main advantage of blocktrees is enabling one to *efficiently prove* the content of an individual past block, without having to exhibit the entire blockchain.

We construct blocktrees via a novel application of Merkle trees.

Furthermore, in case of a distributed payment system, where payments transfers money from a public key to another public key, and payments are organized in a sequence of blocks, we provide efficient methods to prove what is the balance (money on account) available to a given key after the first r blocks of payments. We refer to these methods as *statustrees.*

BRIEF DESCRIPTION OF THE DRAWINGS

Embodiments of the system described herein are explained in more details in accordance with the figures of the drawings, which are briefly described as follows.

FIG. 1 is a schematic representation of a network and computing stations according to an embodiment of the system described herein.

FIG. 2 is a schematic and conceptual summary of the first step of Algorand system, where a new block of transactions is proposed.

FIG. 3 is a schematic and conceptual summary of the agreement and certification of a new block in the Algorand system.

FIG. 4 is a schematic diagram illustrating a Merkle tree and an autenticating path for a value contained in one of its nodes.

FIG. 5 is a schematic diagram illustrating the Merkle trees corresponding to the first blocks constructed in a blocktree.

FIG. 6 is a schematic diagram illustrating the values sufficient to construct the securing information of the first blocks in a blocktree.

DETAILED DESCRIPTION OF VARIOUS EMBODIMENTS

The system described herein provides a mechanism for distributing transaction verification and propagation so that no entity is solely responsible for performing calculations to verify and/or propagate transaction information.

Instead, each of the participating entities shares in the calculations that are performed to propagate transaction in a verifiable and reliable manner.

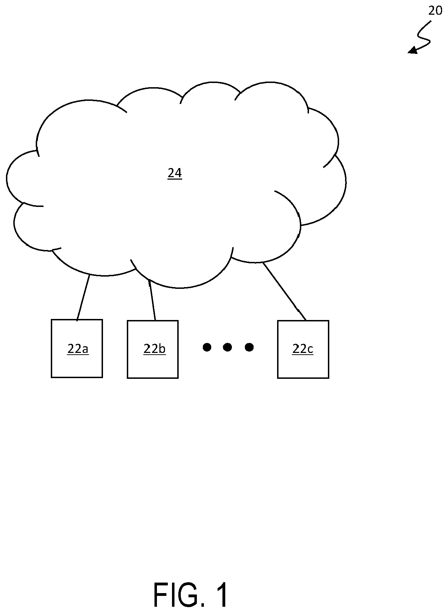

Referring to FIG. 1, a diagram shows a plurality of computing workstations 22a-22c connected to a data network 24, such as the Internet. The workstations 22a-22c communicate with each other via the network 24 to provide distributed transaction propagation and verification, as described in more detail elsewhere herein. The system may accommodate any number of workstations capable of providing the functionality described herein, provided that the workstations 22a-22c are capable of communicating with each other. Each of the workstations 22a-22c may independently perform processing to propagate transactions to all of the other workstations in the system and to verify transactions, as described in more detail elsewhere herein.

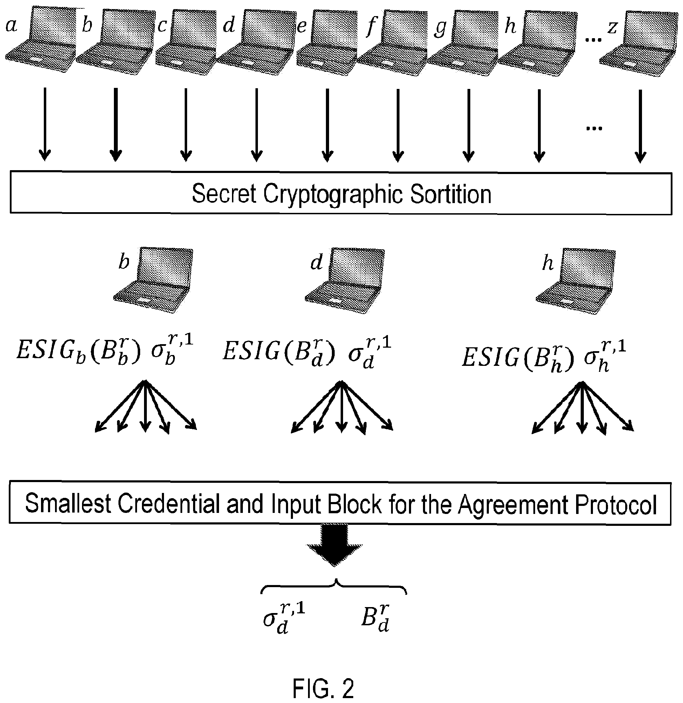

FIG. 2 diagrammatically and conceptually summarizes the first step of a round r in the Algorand system, where each of a few selected users proposes his own candidate for the rth block. Specifically, the step begins with the users in the system, $a, ..., z$, individually undergo the secret cryptographic sortition process, which decides which users are selected to propose a block, and where each selected user secretly computes a credential proving that he is entitled to produce a block. In the example of FIG. 2, only users $b, d,$ and $h$ are selected to propose a block, and their respectively computed credentials are $\sigma_b^{r,1}$, $\sigma_d^{r,a1}$, and $\sigma_h^{r,1}$. Each selected user i assembles his own proposed block, $B_i^r$, ephemerally signs it (i.e., digitally signs it with an ephemeral key, as explained later on), and propagates to the network together with his own credential. The leader of the round is the selected user whose credential has the smallest hash.

The figure indicates the leader to be user d. Thus his proposed block, $B_d^r$, is the one to be given as input to the Binary agreement protocol.

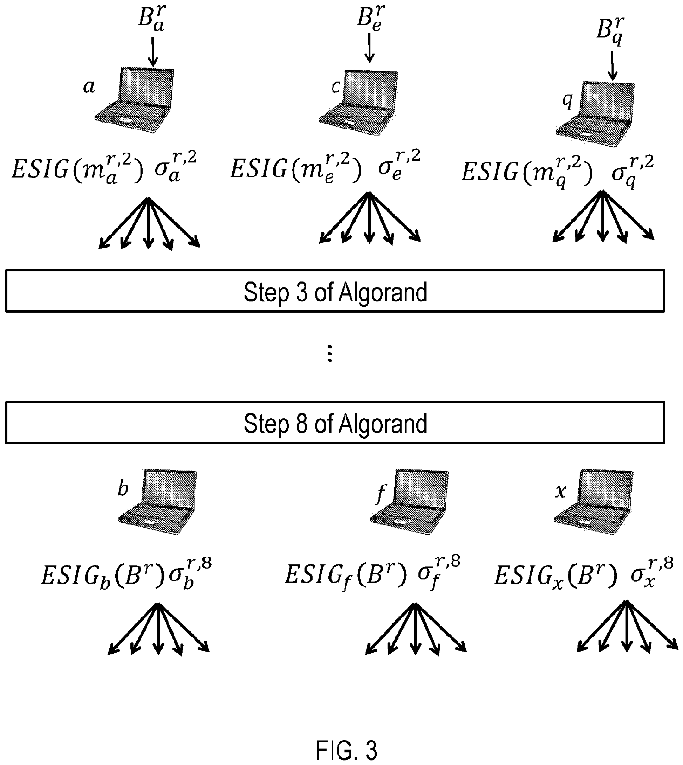

FIG. 3 diagrammatically and conceptually summarizes Algorand's process for reaching agreement and certifying a proposed block as the official rth block, $B^r$. Since the first step of Algorand consists of proposing a new block, this process starts with the second step. This step actually coincides with the first step of Algorand's preferred Byzantine agreement protocol, *BA\**. Each step of this protocol is executed by a different "committee" of players, randomly selected by secret cryptographic sortition (not shown in this figure). Accordingly, the users selected to perform each step may be totally different. The number of Steps of *BA\** may vary. Fig. 3 depicts an execution of *BA\** involving 7 steps: from Algorand's 2 through Algorand's step 8. In the example of FIG. 3, the users selected to perform step 2 are $a, e,$ and $q$.

Each user $i \in \{a, e, q\}$ propagates to the network his credential, $\sigma_i^{r,2}$, that proves that i is indeed entitled to send a message in step 2 of round r of Algorand, and his message proper of this step, $m_i^{r,s}$, ephemerally signed. Steps 3-7 are not shown. In the last step 8, the figure shows that the corresponding selected users, $b, f,$ and $x$, having reached agreement on $B^r$ as the official block of round r, propagate their own ephemeral signatures of block $B^r$ (together, these signatures certify $B^r$) and their own credentials, proving that they are entitled to act in Step 8.

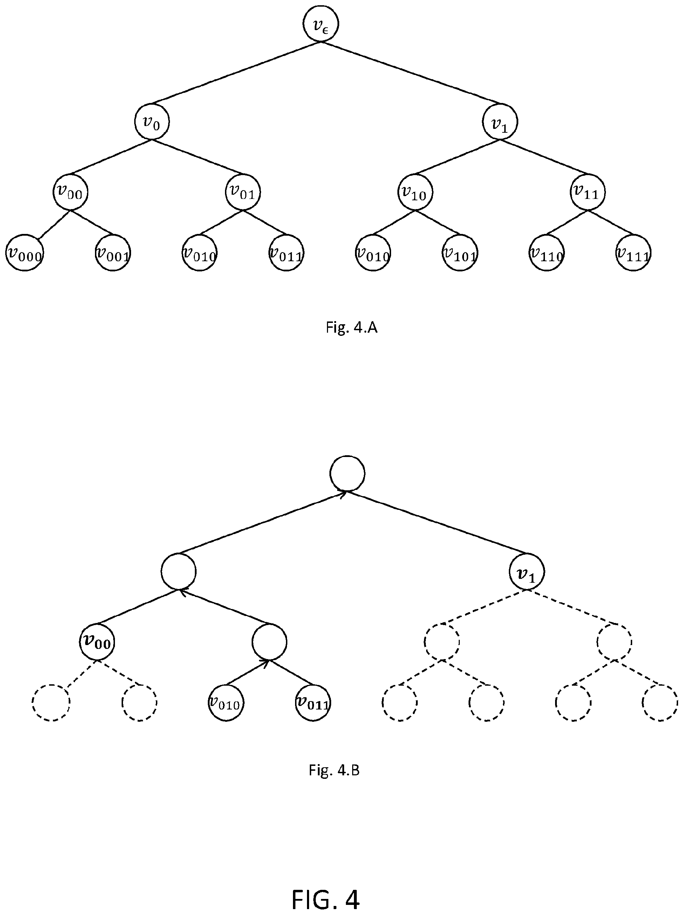

FIG. 4 schematically illustrates a Merkle tree and one of its autenticating path. Specifically, Fig. 4.A illustrates a full Merkle tree of depth 3. Each node $x$, where $x$ is denoted by a binary string of length $\leq 3$, stores a value $v_x$. If $x$ has length $\leq 2$, then $v_x = H(v_{x0}, v_{x1})$. For the Merkle tree of Fig. 4.a, Fig. 4.B illustrates the authenticating path of the value $v_{010}$.

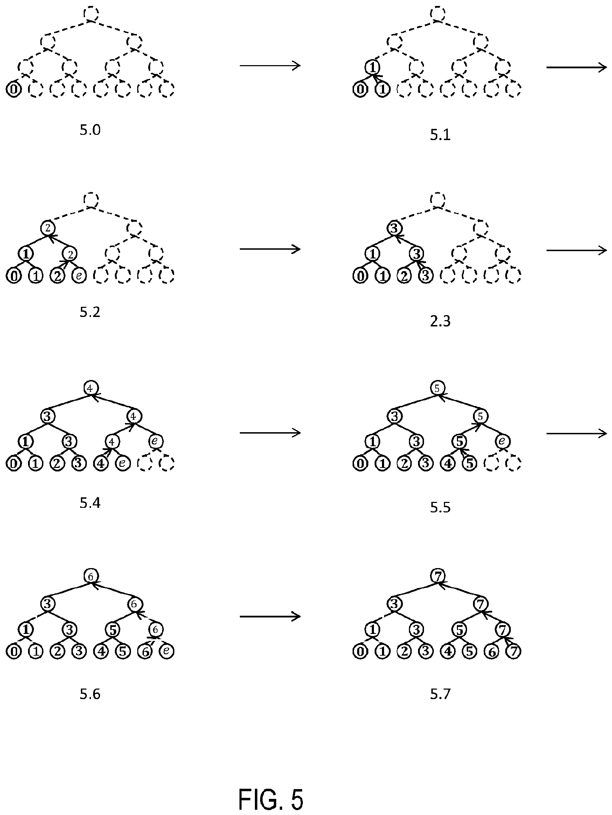

FIG. 5 schematically illustrates the Merkle trees, corresponding to the first 8 blocks constructed in a blocktree, constructed within a full binary tree of depth 3. In Fig. 5.$i$, nodes marked by an integer belong to Merkle tree $T_i$. Contents of nodes marked by $i$ (respectively, by $i$) are temporary (respectively, permanent).

For concreteness only, we shall assume in our description that all transactions are payments, and focus on describing Algorand only as a money platform. Those skilled in the art will realize that Algorand can handle all kinds of transactions as well.

Algorand has a very flexible design and can be implemented in various, but related, ways. We illustrate its flexibility by detailing two possible embodiments of its general design. From them, those skilled in the art can appreciate how to derive all kinds of other implementations as well.

To facilitate understanding the invention, and allow to internal cross reference of its various parts, we organize its presentation in numbered and titled sections. The first sections are common to both of the detailed embodiments.

## 1 Introduction

Money is becoming increasingly virtual. It has been estimated that about 80% of United States dollars today only exist as ledger entries. Other financial instruments are following suit.

In an ideal world, in which we could count on a universally trusted central entity, immune to all possible cyber attacks, money and other financial transactions could be solely electronic. Unfortunately, we do not live in such a world.

Accordingly, decentralized cryptocurrencies, such as Bitcoin, and "smart contract" systems, such as Ethereum, have been proposed. At the heart of these systems is a shared *ledger* that reliably records a sequence of transactions, as varied as payments and contracts, in a tamperproof way. The technology of choice to guarantee such tamperproofness is the *blockchain.* Blockchains are behind applications such as cryptocurrencies, financial applications, and the Internet of Things. Several techniques to manage blockchain-based ledgers have been proposed: *proof of work, proof of stake, practical Byzantine fault-tolerance,* or some combination.

Currently, however, ledgers can be inefficient to manage. For example, Bitcoin's *proof-of-work* approach requires a vast amount of computation, is wasteful and scales poorly. In addition, it *de facto* concentrates power in very few hands.

We therefore wish to put forward a new method to implement a public ledger that offers the convenience and efficiency of a centralized system run by a trusted and inviolable authority, without the inefficiencies and weaknesses of current decentralized implementations. We call our approach *Algorand,* because we use algorithmic randomness to select, based on the ledger constructed so far, a set of *verifiers* who are in charge of constructing the next block of valid transactions. Naturally, we ensure that such selections are provably immune from manipulations and unpredictable until the last minute, but also that they ultimately are universally clear.

Algorand's approach is quite democratic, in the sense that neither in principle nor *de facto* it creates different classes of users (as "miners" and "ordinary users" in Bitcoin). In Algorand "all power resides with the set of all users".

One notable property of Algorand is that its transaction history may fork only with very small probability (e.g., one in a trillion, that is, or even $10^{-18}$). Algorand can also address some legal and political concerns.

The Algorand approach applies to blockchains and, more generally, to any method of generating a tamperproof sequence of blocks. We actually put forward a new method -alternative to, and more efficient than, blockchains- that may be of independent interest.

## 1.1 Bitcoin's Assumption and Technical Problems

Bitcoin is a very ingenious system and has inspired a great amount of subsequent research. Yet, it is also problematic. Let us summarize its underlying assumption and technical problems -which are actually shared by essentially all cryptocurrencies that, like Bitcoin, are based on *proof-of-work.*

For this summary, it suffices to recall that, in Bitcoin, a user may own multiple public keys of a digital signature scheme, that money is associated with public keys, and that a payment is a digital signature that transfers some amount of money from one public key to another. Essentially, Bitcoin organizes all processed payments in a chain of blocks, $B_1$, $B_2$,..., each consisting of multiple payments, such that, all payments of $B_1$, taken in any order, followed by those of $B_2$, in any order, etc., constitute a sequence of valid payments. Each block is generated, on average, every 10 minutes.

This sequence of blocks is a *chain,* because it is structured so as to ensure that any change, even in a single block, percolates into all subsequent blocks, making it easier to spot any alteration of the payment history. (As we shall see, this is achieved by including in each block a *cryptographic hash* of the previous one.) Such block structure is referred to as a *blockchain.*

**Assumption: Honest Majority of Computational Power** Bitcoin assumes that no malicious entity (nor a coalition of coordinated malicious entities) controls the majority of the computational power devoted to block generation. Such an entity, in fact, would be able to modify the blockchain, and thus re-write the payment history, as it pleases. In particular, it could make a payment $\wp$, obtain the benefits paid for, and then "erase" any trace of $\wp$.

**Technical Problem 1: Computational Waste** Bitcoin's proof-of-work approach to block generation requires an extraordinary amount of computation. Currently, with just a few hundred thousands public keys in the system, the top 500 most powerful supercomputers can only muster a mere 12.8% percent of the total computational power required from the Bitcoin players. This amount of computation would greatly increase, should significantly more users join the system.

**Technical Problem 2: Concentration of Power** Today, due to the exorbitant amount of computation required, a user, trying to generate a new block using an ordinary desktop (let alone a cell phone), expects to lose money. Indeed, for computing a new block with an ordinary computer, the expected cost of the necessary electricity to power the computation exceeds the expected reward. Only using *pools* of specially built computers (that do nothing other than "mine new blocks"), one might expect to make a profit by generating new blocks. Accordingly, today there are, *de facto,* two disjoint classes of users: ordinary users, who only make payments, and specialized mining pools, that only search for new blocks.

It should therefore not be a surprise that, as of recently, the total computing power for block generation lies within just five pools. In such conditions, the assumption that a majority of the computational power is honest becomes less credible.

**Technical Problem 3: Ambiguity** In Bitcoin, the blockchain is not necessarily unique. Indeed its latest portion often *forks:* the blockchain may be -say-$B_1,\ldots,B_k$, $B'_{k+1}$, $B'_{k+2}$, according to one user, and $B_1,\ldots,B_k$, $B''_{k+1}$, $B''_{k+2}$, $B''_{k+3}$ according another user. Only after several blocks have been added to the chain, can one be reasonably sure that the first $k+3$ blocks will be the same for all users. Thus, one cannot rely right away on the payments contained in the last block of the chain. It is more prudent to wait and see whether the block becomes sufficiently deep in the blockchain and thus sufficiently stable.

Separately, *law-enforcement* and *monetary-policy* concerns have also been raised about Bitcoin.[1]

[1]The (pseudo) anonymity offered by Bitcoin payments may be misused for money laundering and/or the financing of criminal individuals or terrorist organizations. Traditional banknotes or gold bars, that in principle offer perfect anonymity, should pose the same challenge, but the physicality of these currencies substantially slows down money transfers, so as to permit some degree of monitoring by law-enforcement agencies.

The ability to "print money" is one of the very basic powers of a nation state. In principle, therefore, the massive adoption of an independently floating currency may curtail this power. Currently, however, Bitcoin is far from being a threat to governmental monetary policies, and, due to its scalability problems, may never be.

## 1.2 Algorand, in a Nutshell

Setting Algorand works in a very tough setting. Briefly,

(a) *Permissionless and Permissioned Environments.* Algorand works efficiently and securely even in a totally permissionless environment, where arbitrarily many users are allowed to join the system at any time, without any vetting or permission of any kind. Of course, Algorand works even better in a *permissioned* environment.

(b) *Very Adversarial Environments.* Algorand withstands a very powerful Adversary, who can

(1) *instantaneously* corrupt *any user* he wants, at *any time* he wants, provided that, in a permissionless environment, 2/3 of the money in the system belongs to honest user. (In a permissioned environment, irrespective of money, it suffices that 2/3 of the users are honest.)

(2) *totally control and perfectly coordinate* all corrupted users; and

(3) *schedule the delivery of all messages,* provided that each message $m$ sent by a honest user reaches reaches all (or sufficiently many of) the honest users within a time $\lambda_m$, which solely depends on the size of $m$.

**Main Properties** Despite the presence of our powerful adversary, in Algorand

- *The amount of computation required is minimal.* Essentially, no matter how many users are present in the system, each of fifteen hundred users must perform at most a few seconds of computation.

- *A new block is generated quickly and will* de facto *never leave the blockchain.* That is, Algorand's blockchain *may fork only with negligible probability* (i.e., less than one in a trillion or $10^{-18}$). Thus, users can relay on the payments contained in a new block as soon as the block appears.

- *All power resides with the users themselves.* Algorand is a truy distributed system. In particular, there are no exogenous entities (as the "miners" in Bitcoin), who can control which transactions are recognized.

## Algorand's Techniques.

1. A NEW AND FAST BYZANTINE AGREEMENT PROTOCOL. Algorand generates a new block via an *inventive* cryptographic, *message-passing,* binary Byzantine agreement (BA) protocol, *BA\*.* Protocol *BA\** not only satisfies some additional properties (that we shall soon discuss), but is also very fast. Roughly said, its binary-input version consists of a 3-step loop, in which a player $i$ sends a *single* message $m_i$ to all other players. Executed in a complete and synchronous network, with more than 2/3 of the players being honest, with probability > 1/3, after each loop the protocol ends in agreement. (We stress that protocol *BA\** satisfies the original definition of Byzantine agreement, without any weakenings.)

Algorand leverages this binary BA protocol to reach agreement, in our different communication model, on each new block. The agreed upon block is then *certified,* via a prescribed number of digital signature of the proper verifiers, and propagated through the network.

2. SECRET CRYPTOGRAPHIC SORTITION. Although very fast, protocol *BA\** would benefit from further speed when played by millions of users. Accordingly, Algorand chooses the players of *BA\** to be a much smaller subset of the set of all users. To avoid a different kind of concentration-of-power problem, each new block $B^r$ will be constructed and agreed upon, via a new execution of *BA\*,* by a separate set of *selected verifiers, $SV^r$.* In principle, selecting such a set might be as hard as selecting $B^r$ directly. We traverse this potential problem by a novel approach that we term *secret cryptographic sortition.* Sortition is the practice of selecting officials at random from a large set of eligible individuals. (Sortition was practiced across centuries: for instance, by the republics of Athens, Florence, and Venice. In modern judicial systems, random selection is often used to choose juries. Random sampling has also been advocated for elections.) In a decentralized system, of course, choosing the random coins necessary to randomly select the members of each verifier set $SV^r$ is problematic. We thus resort to cryptography in order to select each verifier set, from the population of all users, in a way that is guaranteed to be automatic (i.e., requiring no message exchange) and random. In a similar fashion we select a user, the *leader,* in charge of proposing the new block $B^r$, and the verifier set $SV^r$, in charge to reach agreement on the block proposed by the leader. The inventive system leverages some information, $Q^{r-1}$, that is deducible from the content of the previous block and is non-manipulatable even in the presence of a very strong adversary.

3. THE QUANTITY (SEED) $Q^r$. We use the the last block $B^{r-1}$ in the blockchain in order to automatically determine the next verifier set and leader in charge of constructing the new block $B^r$. The challenge with this approach is that, by just choosing a slightly different payment in the previous round, our powerful Adversary gains a tremendous control over the next leader. Even if he only controlled only 1/1000 of the players/money in the system, he could ensure that all leaders are malicious. (See the Intuition Section 4.1.) This challenge is central to all proof-of-stake approaches, and, to the best of our knowledge, it has not, up to now, been satisfactorily solved.

To meet this challenge, we purposely construct, and continually update, a separate and carefully defined quantity, $Q^r$, which *provably* is, not only unpredictable, but also not influentiable, by our powerful Adversary. We may refer to $Q^r$ as the rth *seed,* as it is from $Q^r$ that Algorand selects, via secret cryptographic sortition, all the users that will play a special role in the generation of the rth block. The seed $Q^r$ will be deducible from the block $B^{r-1}$.

4. SECRET CREDENTIALS. Randomly and unambiguously using the current last block, $B^{r-1}$, in order to choose the verifier set and the leader in charge of constructing the new block, $B^r$, is not enough. Since $B^{r-1}$ must be known before generating $B^r$, the last non-influentiable quantity $Q^{r-1}$ deducible from $B^{r-1}$ must be known too. Accordingly, so are the verifiers and the leader in charge to compute the block $B^r$. Thus, our powerful Adversary might immediately corrupt *all of them,* before they engage in any discussion about $B^r$, so as to get full control over the block they certify. To prevent this problem, leaders (and actually verifiers too) *secretly* learn of their role, but can compute a proper *credential,* capable of proving to everyone that indeed have that role. When a user privately realizes that he is the leader for the next block, first he secretly assembles his own proposed new block, and then disseminates it (so that can be certified) together with his own credential. This way, though the Adversary will immediately realize who the leader of the next block is, and although he can corrupt him right away, it will be too late for the Adversary to influence the choice of a new block. Indeed, he cannot "call back" the leader's message no more than a powerful government can put back into the bottle a message virally spread by WikiLeaks.

As we shall see, we cannot guarantee leader uniqueness, nor that everyone is sure who the leader is, including the leader himself! But, in Algorand, unambiguous progress will be guaranteed.

5. PLAYER REPLACEABILITY. After he proposes a new block, the leader might as well "die" (or be corrupted by the Adversary), because his job is done. But, for the verifiers in $SV^r$, things are less simple. Indeed, being in charge of certifying the new block $B^r$ with sufficiently many signatures, they must first run Byzantine agreement on the block proposed by the leader. The problem is that, no matter how efficient it is, *BA\** requires *multiple* steps and the honesty of > 2/3 of its players. This is a problem, because, for efficiency reasons, the player set of *BA\** consists the small set $SV^r$ randomly selected among the set of all users. Thus, our powerful Adversary, although unable to corrupt 1/3 of *all the users,* can certainly corrupt *all members of $SV^r$*!

Fortunately we'll prove that protocol *BA\*,* executed by propagating messages in a peer-to-peer fashion, is *player-replaceable.* This novel requirement means that the protocol correctly and efficiently reaches consensus even if each of its step is executed by a totally new, and randomly and independently selected, set of players. Thus, with millions of users, each small set of players associated to a step of *BA\** most probably has empty intersection with the next set.

In addition, the sets of players of different steps of *BA\** will probably have totally different *cardinalities.* Furthermore, the members of each set do not know who the next set of players will be, and do not secretly pass any internal state.

The replaceable-player property is actually crucial to defeat the dynamic and very powerful Adversary we envisage. We believe that replaceable-player protocols will prove crucial in lots of contexts and applications. In particular, they will be crucial to execute securely small sub-protocols embedded in a larger universe of players with a dynamic adversary, who, being able to corrupt even a small fraction of the total players, has no difficulty in corrupting all the players in the smaller sub-protocol.

**An Additional Property/Technique: Lazy Honesty** A honest user follows his prescribed instructions, which include being online and run the protocol. Since, Algorand has only modest computation and communication requirement, being online and running the protocol "in the background" is not a major sacrifice. Of course, a few "absences" among honest players, as those due to sudden loss of connectivity or the need of rebooting, are automatically tolerated (because we can always consider such few players to be temporarily malicious). Let us point out, however, that Algorand can be simply adapted so as to work in a new model, in which honest users to be offline most of the time. Our new model can be informally introduced as follows.

*Lazy Honesty.* Roughly speaking, a user i is lazy-but-honest if (1) he follows all his prescribed instructions, when he is asked to participate to the protocol, and (2) he is asked to participate to the protocol only rarely, and with a suitable advance notice. With such a relaxed notion of honesty, we may be even more confident that honest people will be at hand when we need them, and Algorand guarantee that, when this is the case,

*The system operates securely even if, at a given point in time, the majority of the participating players are malicious.*

## 2 Preliminaries

### 2.1 Cryptographic Primitives

Ideal Hashing. We shall rely on an efficiently computable cryptographic hash function, *H*, that maps arbitrarily long strings to binary strings of fixed length. Following a long tradition, we model *H* as a *random oracle,* essentially a function mapping each possible string *s* to a randomly and independently selected (and then fixed) binary string, *H(s)*, of the chosen length.

In our described embodiments, *H* has 256-bit long outputs. Indeed, such length is short enough to make the system efficient and long enough to make the system secure. For instance, we want *H* to be *collision-resilient.* That is, it should be hard to find two different strings *x* and *y* such that *H(x) = H(y).* When *H* is a random oracle with 256-bit long outputs, finding any such pair of strings is indeed difficult. (Trying at random, and relying on the birthday paradox, would require $2^{256/2} = 2^{128}$ trials.)

**Digital Signing.** Digital signatures allow users to to authenticate information to each other without sharing any sharing any secret keys. A *digital signature scheme* consists of three fast algorithms: a probabilistic *key generator G,* a *signing algorithm S,* and a *verification algorithm V.*

Given a security parameter *k,* a sufficiently high integer, a user i uses *G* to produce a pair of *k*-bit keys (i.e., strings): a "public" key $pk_i$ and a matching "secret" signing key $sk_i$. Crucially, a public key does not "betray" its corresponding secret key. That is, even given knowledge of $pk_i$, no one other than *i* is able to compute $sk_i$ in less than astronomical time.

User *i* uses $sk_i$ to digitally sign messages. For each possible message (binary string) *m*, *i* first hashes *m* and then runs algorithm *S* on inputs *H(m)* and $sk_i$ so as to produce the *k*-bit string

$$sig_{pk_i}(m) \triangleq S(H(m), sk_i) \ .^2$$

[2]Since *H* is collision-resilient it is practically impossible that, by signing *m* one "accidentally signs" a different message *m'*. The binary string $sig_{pk_i}(m)$ is referred to as *i*'s digital signature of *m* (relative to $pk_i$), and can be more simply denoted by $sig_i(m)$, when the public key $pk_i$ is clear from context.

Everyone knowing $pk_i$ can use it to verify the digital signatures produced by i. Specifically, on inputs (a) the public key $pk_i$ of a player i, (b) a message *m*, and (c) a string *s*, that is, *i*'s alleged digital signature of the message *m*, the verification algorithm V outputs either YES or NO.

**[0071]** The properties we require from a digital signature scheme are:

    1. *Legitimate signatures are always verified:* If $s = sig_i(m)$, then $V(pk_i, m, s) = YES$; and

    2. *Digital signatures are hard to forge:* Without knowledge of $sk_i$ the time to find a string *s* such that $V(pk_i, m, s) =$

*YES,* for a message *m* never signed by i, is astronomically long.

(Following strong security requirements, this is true even if one can obtain the signature of any other message.) Accordingly, to prevent anyone else from signing messages on his behalf, a player i must keep his signing key $sk_i$ secret (hence the term "secret key"), and to enable anyone to verify the messages he does sign, i has an interest in publicizing his key $pk_i$ (hence the term "public key").

**Signatures with Message Retrievability** In general, a message *m* is not retrievable from its signature $sig_i(m)$. In order to virtually deal with digital signatures that satisfy the conceptually convenient *"message retrievability" property* (i.e., to guarantee that the signer and the message are easily computable from a signature, we define

$$SIG_{pk_i}(m) = (i, m, sig_{pk_i}(m)) \quad \text{and} \quad SIG_i(m) = (i, m, sig_i(m)), \text{ if } pk_i \text{ is clear.}$$

if *pk$_i$* is clear.

**Unique Digital Signing.** We also consider digital signature schemes (*G, S,* V) satisfying the following additional property.

*3. Uniqueness.* It is hard to find strings *pk', m,* s, and *s'* such that

$$s \neq s' \quad \text{and} \quad V(pk', m, s) = V(pk', m, s') = 1.$$

(Note that the uniqueness property holds also for strings *pk'* that are not legitimately generated public keys. In particular, however, the uniqueness property implies that, if one used the specified key generator *G* to compute a public key *pk* together with a matching secret key *sk,* and thus knew *sk,* it would be essentially impossible also for him to find two different digital signatures of a same message relative to *pk.*)

**Remarks**

- FROM UNIQUE SIGNATURES TO VERIFIABLE RANDOM FUNCTIONS. Relative to a digital signature scheme with the uniqueness property, the mapping $m \to H(sig_i(m))$ associates to each possible string *m*, a unique, randomly selected, 256-bit string, and the correctness of this mapping can be proved given the signature $sig_i(m)$. That is, ideal hashing and digital signature scheme satisfying the uniqueness property essentially provide an elementary implementation of a *verifiable random function* (VRF).

  A VRF is a special kind of digital signature. We may write $VRF_i(m)$ to indicate such a special signature of *i* of a message *m*. In addition to satisfy the uniqueness property, verifiable random functions produce outputs that are guaranteed to be sufficiently random. That is, $VRF_i(m)$ is essentially random, and unpredictable until it is produced. By contrast, $SIG_i(m)$ need not be sufficiently random. For instance, user *i* may choose his public key so that $SIG_i(m)$ always is a *k*-bit string that is (lexicographically) small (i.e., whose first few bits could always be 0s). Note, however, that, since *H* is an ideal hash function, $H(SIG_i(m))$ will always be a random 256-bit string. In our preferred embodiments we make extensive use of hashing digital signatures satisfying the uniqueness property precisely to be able to associate to each message *m* and each user i a unique random number. Should one implement Algorand with VRFs, one can replace $H(SIG_i(m))$ with $VRF_i(m)$. In particular, a user i need not first to compute $SIG_i(mi)$, then $H(SIG_i(m))$ (in order, -say- to compare $H(SIG_i(m))$ with a number *p*). He might directly compute $VRF_i(m)$. In sum, it should be understood that $H(SIG_i(m))$ can be interpreted as $VRF_i(m)$, or as a sufficiently random number, easily computed by player *i*, but unpredictable to anyone else, unambiguously associated to i and *m*.

- THREE DIFFERENT NEEDS FOR DIGITAL SIGNATURES. In Algorand, a user i relies on digital signatures for

  (1) *Authenticating i's own payments.* In this application, keys can be "long-term" (i.e., used to sign many messages over a long period of time) and come from a ordinary signature scheme.

  (2) *Generating credentials proving that i is entitled to act at some step s of a round r.* Here, keys can be long-term, but must come from a scheme satisfying the uniqueness property.

  (3) *Authenticating the message i sends in each step in which he acts.* Here, keys must be ephemeral (i.e., destroyed after their first use), but can come from an ordinary signature scheme.

- A SMALL-COST SIMPLIFICATION. For simplicity, we envision each user i to have a single long-term key. Accordingly, such a key must come from a signature scheme with the uniqueness property. Such simplicity has a small computational cost. Typically, in fact, unique digital signatures are slightly more expensive to produce and verify than ordinary signatures.

## 2.2 The Idealized Public Ledger

Algorand tries to mimic the following payment system, based on an *idealized public ledger.*

*1. The Initial Status.* Money is associated with individual public keys (privately generated and owned by users). Letting $pk_1,\dots, pk_j$ be the initial public keys and $a_1,\dots, a_j$ their respective initial amounts of money units, then the *initial status* is

$$S_0 = (pk_1, a_1),\dots,(pk_j, a_j)\ ,$$

which is assumed to be common knowledge in the system.

2. *Payments.* Let *pk* be a public key currently having $a \geq 0$ money units, *pk'* another public key, and *a'* a non-negative number no greater than *a.* Then, a (valid) payment $\wp$ is a digital signature, relative to *pk,* specifying the transfer of *a'* monetary units from *pk* to *pk',* together with some additional information. In symbols,

$$\wp = SIG_{pk}(pk, pk', a', I, H(\mathcal{I})),$$

where *I* represents any additional information deemed useful but not sensitive (e.g., time information and a payment identifier), and *I* any additional information deemed sensitive (e.g., the reason for the payment, possibly the identities of the owners of *pk* and the *pk',* and so on).

We refer to *pk* (or its owner) as the *payer,* to each *pk'* (or its owner) as a *payee,* and to *a'* as the *amount* of the payment $\wp$.

**Free Joining Via Payments.** Note that users may join the system whenever they want by generating their own public/secret key pairs. Accordingly, the public key *pk'* that appears in the payment $\wp$ above may be a newly generated public key that had never "owned" any money before.

3. *The Magic Ledger.* In the Idealized System, all payments are valid and appear in a tamper-proof list *L* of sets of payments "posted on the sky" for everyone to see:

$$L = PAY^1, PAY^2,\dots,$$

Each block $PAY^{r+1}$ consists of the set of all payments made since the appearance of block $PAY^r$. In the ideal system, a new block appears after a fixed (or finite) amount of time.

**Discussion.**

- *More General Payments and Unspent Transaction Output.* More generally, if a public key *pk* owns an amount a, then a valid payment $\wp$ of *pk* may transfer the amounts $a'_1, a'_2,\dots,$ respectively to the keys $pk'_1, pk'_2,\dots,$ so long as $\sum_j a'_j \leq a.$

In Bitcoin and similar systems, the money owned by a public key *pk* is segregated into separate amounts, and a payment $\wp$ made by *pk* must transfer such a segregated amount *a* in its entirety. If *pk* wishes to transfer only a fraction *a' < a* of *a* to another key, then it must also transfer the balance, the *unspent transaction output,* to another key, possibly *pk* itself.

Algorand also works with keys having segregated amounts. However, in order to focus on the novel aspects of Algorand, it is conceptually simpler to stick to our simpler forms of payments and keys having a single amount associated to them.

- *Current Status.* The Idealized Scheme does not directly provide information about the current status of the system (i.e., about how many money units each public key has). This information is deducible from the Magic Ledger. In the ideal system, an active user continually stores and updates the latest status information, or he would otherwise have to reconstruct it, either from scratch, or from the last time he computed it. (Yet, we later on show how to augment Algorand so as to enable its users to reconstruct the current status in an efficient manner.)

- *Security and "Privacy".* Digital signatures guarantee that no one can forge a payment of another user. In a payment $\wp$, the public keys and the amount are not hidden, but the sensitive information $\mathcal{I}$ is. Indeed, only $H(\mathcal{I})$ appears in $\wp$, and since $H$ is an ideal hash function, $H(\mathcal{I})$ is a random 256-bit value, and thus there is no way to figure out what $\mathcal{I}$ was better than by simply guessing it. Yet, to prove what $\mathcal{I}$ was (e.g., to prove the reason for the payment) the payer may just reveal $\mathcal{I}$. The correctness of the revealed $\mathcal{I}$ can be verified by computing $H(\mathcal{I})$ and comparing the resulting value with the last item of $\wp$. In fact, since $H$ is *collision resilient,* it is hard to find a second value $\mathcal{I}'$ such that $H(\mathcal{I}) = H(\mathcal{I}')$.

## 2.3 Basic Notions and Notations

Keys, Users, and Owners Unless otherwise specified, each public key ("key" for short) is long-term and relative to a digital signature scheme with the uniqueness property. A public key $i$ joins the system when another public key $j$ already in the system makes a payment to $i$.

For color, we personify keys. We refer to a key i as a "he", say that i is honest, that i sends and receives messages, etc. *User* is a synonym for key. When we want to distinguish a key from the person to whom it belongs, we respectively use the term "digital key" and "owner".

**Permissionless and Permissioned Systems.** A system is *permissionless,* if a digital key is free to join at any time and an owner can own multiple digital keys; and its *permissioned,* otherwise.

**Unique Representation** Each object in Algorand has a unique representation. In particular, each set {(*x,y,z,...* ) : $x \in X$, $y \in Y$, $z \in Z$,...} is ordered in a pre-specified manner: e.g., first lexicographically in *x,* then in *y,* etc.

**Same-Speed Clocks** There is no global clock: rather, each user has his own clock. User clocks need not be synchronized in any way. We assume, however, that they all have the same speed.

For instance, when it is 12pm according to the clock of a user *i,* it may be 2:30pm according to the clock of another user *j,* but when it will be 12:01 according to *i*'s clock, it will 2:31 according to *j*'s clock. That is, "one minute is the same (sufficiently, essentially the same) for every user".

Rounds Algorand is organized in logical units, *r* = 0,1,..., called *rounds.*

We consistently use superscripts to indicate rounds. To indicate that a non-numerical quantity $Q$ (e.g., a string, a public key, a set, a digital signature, etc.) refers to a round r, we simply write $Q^r$. Only when $Q$ is a genuine number (as opposed to a binary string interpretable as a number), do we write $Q^{(r)}$, so that the symbol $r$ could not be interpreted as the exponent of $Q$.

At (the start of a) round $r > 0$, the set of all public keys is *PK^r,* and the system status is

$$S^r = \left\{ \left( i, a_i^{(r)}, \ldots \right) : i \in PK^r \right\},$$

where $a_i^{(r)}$ is the amount of money available to the public key *i.* Note that *PK^r* is deducible from *S^r,* and that *S^r* may also specify other components for each public key *i.*

For round 0, *PK^0* is the set of *initial public keys,* and *S^0* is *the initial status.* Both *PK^0* and *S^0* are assumed to be common knowledge in the system. For simplicity, at the start of round *r,* so are *PK^1,..., PK^r* and *S^1,..., S^r.*

In a round r, the system status transitions from *S^r* to *S^{r+1}*: symbolically,
Round r: $S^r \rightarrow S^{r+1}$.

**Payments** In Algorand, the users continually make payments (and disseminate them in the way described in subsection 2.7). A payment $\wp$ of a user i $\in$ *PK^r* has the same format and semantics as in the Ideal System. Namely,

$$\wp = SIG_i(i, i', a, I, H(\mathcal{I})) \ .$$

Payment $\wp$ is *individually valid at a round r* (is a *round-r payment,* for short) if (1) its amount $a$ is less than or equal to $a_i^{(r)}$, and (2) it does not appear in any official payset $PAY^{r'}$ for $r' < r$. (As explained below, the second condition means that $\wp$ has not already become effective.

A set of round-$r$ payments of $i$ is *collectively valid* if the sum of their amounts is at most $a_i^{(r)}$.

**Paysets** A round-r *payset* $\mathcal{P}$ is a set of round-r payments such that, for each user $i$, the payments of i in $\mathcal{P}$ (possibly none) are collectively valid. The set of all round-r paysets is $\mathbb{PAY}(r)$. A round-r payset $\mathcal{P}$ is *maximal* if no superset of $\mathcal{P}$ is a round-r payset.

We actually suggest that a payment $\wp$ also specifies a round $\rho$, $\wp = SIG_i(\rho, i, i', a, I, H(\mathcal{I}))$, and cannot be valid at any round outside [$\rho$, $\rho$+ $k$], for some fixed non-negative integer $k$.[3]
[3]This simplifies checking whether $\wp$ has become "effective" (i.e., it simplifies determining whether some payset $PAY^r$ contains $\wp$. When $k = 0$, if $\wp = SIG_i(r, i, i', a, I, H(\mathcal{I}))$, and $\wp \notin PAY^r$, then $i$ must re-submit $\wp$.

**Official Paysets** For every round r, Algorand publicly selects (in a manner described later on) a single (possibly empty) payset, $PAY^r$, the round's *official payset*. (Essentially, $PAY^r$ represents the round-r payments that have *"actually"* happened.)

As in the Ideal System (and Bitcoin), (1) the only way for a new user $j$ to enter the system is to be the recipient of a payment belonging to the official payset $PAY^r$ of a given round $r$; and (2) $PAY^r$ determines the status of the next round, $S^{r+1}$, from that of the current round, $S^r$. Symbolically,
$PAY^r: S^r \to S^{r+1}$.

Specifically,

1. the set of public keys of round $r + 1$, $PK^{r+1}$, consists of the union of $PK^r$ and the set of all payee keys that appear, for the first time, in the payments of $PAY^r$; and

2. the amount of money $a_i^{(r+1)}$ that a user $i$ owns in round $r + 1$ is the sum of $a_i(r)$ -i.e., the amount of money i owned in the previous round (0 if $i \notin PK^r$)- and the sum of amounts paid to $i$ according to the payments of $PAY^r$.

In sum, as in the Ideal System, each status $S^{r+1}$ is deducible from the previous payment history: $PAY^0,...,PAY^r$.

**2.4 Blocks and Proven Blocks**

In $Algorand_0$, the block $B^r$ corresponding to a round $r$ specifies: $r$ itself; the set of payments of round $r$, $PAY^r$; a quantity $SIG_\ell(Q^{r-1})$, to be explained, and the hash of the previous block, $H(B^{r-1})$. Thus, starting from some fixed block $B^0$, we have a traditional blockchain:

$$B^1 = (1, PAY^1, SIG_{\ell^1}(Q^0), H(B^0)), \quad B^2 = (2, PAY^2, SIG_{\ell^2}(Q^1), H(B^1)), \quad \ldots$$

In Algorand, the authenticity of a block is actually vouched by a separate piece of information, a "block certificate" $CERT^r$, which turns $B^r$ into a *proven block,* $\overline{B^r}$. The Magic Ledger, therefore, is implemented by the sequence of the proven blocks,
$\overline{B^1}, \overline{B^2},...$

**Discussion** As we shall see, $CERT^r$ consists of a set of digital signatures for $H(B^r)$, those of a majority of the members of $SV^r$, together with a proof that each of those members indeed belongs to $SV^r$. We could, of course, include the certificates $CERT^r$ in the blocks themselves, but find it conceptually cleaner to keep it separate.)

In Bitcoin each block must satisfy a special property, that is, must "contain a solution of a crypto puzzle", which makes block generation computationally intensive and forks both inevitable and not rare. By contrast, Algorand's blockchain has two main advantages: it is generated with minimal computation, and it will not fork with overwhelmingly high probability. Each block $B^i$ is safely *final* as soon as it enters the blockchain.

### 2.5 Acceptable Failure Probability

To analyze the security of Algorand we specify the probability, $F,$ with which we are willing to accept that something goes wrong (e.g., that a verifier set $SV^r$ does not have an honest majority). As in the case of the output length of the cryptographic hash function $H$, also $F$ is a parameter. But, as in that case, we find it useful to set $F$ to a concrete value, so as to get a more intuitive grasp of the fact that it is indeed possible, in Algorand, to enjoy simultaneously sufficient security and sufficient efficiency. To emphasize that $F$ is parameter that can be set as desired, in the first and second embodiments we respectively set

$F = 10^{-12}$ and $F = 10^{-18}$ .

**Discussion** Note that $10^{-12}$ is actually less than one in a trillion, and we believe that such a choice of $F$ is adequate in our application. Let us emphasize that $10^{-12}$ is *not* the probability with which the Adversary can forge the payments of an honest user. All payments are digitally signed, and thus, if the proper digital signatures are used, the probability of forging a payment is far lower than $10^{-12}$, and is, in fact, essentially 0. The bad event that we are willing to tolerate with probability $F$ is that Algorand's blockchain *forks.* Notice that, with our setting of $F$ and one-minute long rounds, a fork is expected to occur in Algorand's blockchain as infrequently as (roughly) once in 1.9 million years. By contrast, in Bitcoin, a forks occurs quite often.

A more demanding person may set $F$ to a lower value. To this end, in our second embodiment we consider setting $F$ to $10^{-18}$. Note that, assuming that a block is generated every *second,* $10^{18}$ is the estimated number of seconds taken by the Universe so far: from the Big Bang to present time. Thus, with $F = 10^{-18}$, if a block is generated in a second, one should expect for the age of the Universe to see a fork.

### 2.6 The Adversarial Model

Algorand is designed to be secure in a very adversarial model. Let us explain.

**Honest and Malicious Users** A user is *honest* if he follows all his protocol instructions, and is perfectly capable of sending and receiving messages. A user is *malicious* (i.e., *Byzantine,* in the parlance of distributed computing) if he can deviate arbitrarily from his prescribed instructions.

**The Adversary** The *Adversary* is an efficient (technically polynomial-time) algorithm, personified for color, who can *immediately* make malicious *any user* he wants, at *any time* he wants (subject only to an upperbound to the number of the users he can corrupt).

The Adversary totally controls and perfectly coordinates all malicious users. He takes all actions on their behalf, including receiving and sending all their messages, and can let them deviate from their prescribed instructions in arbitrary ways. Or he can simply isolate a corrupted user sending and receiving messages. Let us clarify that no one else automatically learns that a user $i$ is malicious, although $i$'s maliciousness may transpire by the actions the Adversary has him take.

This powerful adversary however,

- Does not have unbounded computational power and cannot successfully forge the digital signature of an honest user, except with negligible probability; and

- Cannot interfere in any way with the messages exchanges among honest users.

Furthermore, his ability to attack honest users is bounded by one of the following assumption.

**Honesty Majority of Money** We consider a continuum of Honest Majority of Money (HMM) assumptions: namely, for each non-negative integer $k$ and real $h > 1/2$,

$HHM_k > h$: the honest users in every round r owned a fraction greater than h of all money in the system at round r - k.

**Discussion.** Assuming that all malicious users perfectly coordinate their actions (as if controlled by a single entity, the Adversary) is a rather pessimistic hypothesis. Perfect coordination among too many individuals is difficult to achieve. Perhaps coordination only occurs within separate groups of malicious players. But, since one cannot be sure about the level of coordination malicious users may enjoy, we'd better be safe than sorry.

Assuming that the Adversary can secretly, dynamically, and immediately corrupt users is also pessimistic. After all, realistically, taking full control of a user's operations should take some time.

The assumption $HMM_k > h$ implies, for instance, that, if a round (on average) is implemented in one minute, then, the majority of the money at a given round will remain in honest hands for at least two hours, if $k = 120$, and at least one week, if $k = 10, 000$.

Note that the HMM assumptions and the previous Honest Majority of Computing Power assumptions are related in the sense that, since computing power can be bought with money, if malicious users own most of the money, then they can obtain most of the computing power.

**2.7 The Communication Model**

We envisage message propagation -i.e., "peer-to-peer gossip"[4-] to be the only means of communication, and assume that every propagated message reaches almost all honest users in a timely fashion. We essentially assume that each message $m$ propagated by honest user reaches, within a given amount of time that depends on the length of $m$, all honest users. (It actually suffices that $m$ reaches a sufficiently high percentage of the honest users.)

[4]Essentially, as in Bitcoin, when a user propagates a message $m$, every active user i receiving $m$ for the first time, randomly and independently selects a suitably small number of active users, his "neighbors", to whom he forwards $m$, possibly until he receives an acknowledgement from them. The propagation of $m$ terminates when no user receives $m$ for the first time.

**3 The BA Protocol BA\* in a Traditional Setting**

As already emphasized, Byzantine agreement is a key ingredient of Algorand. Indeed, it is through the use of such a BA protocol that Algorand is unaffected by forks. However, to be secure against our powerful Adversary, Algorand must rely on a BA protocol that satisfies the new player-replaceability constraint. In addition, for Algorand to be efficient, such a BA protocol must be very efficient.

BA protocols were first defined for an idealized communication model, *synchronous complete networks* (SC networks). Such a model allows for a simpler design and analysis of BA protocols. Accordingly, in this section, we introduce a new BA protocol, *BA\*,* for SC networks and ignoring the issue of player replaceability altogether. The protocol *BA\** is a contribution of separate value. Indeed, it is the most efficient cryptographic BA protocol for SC networks known so far.

To use it within our Algorand protocol, we modify *BA\** a bit, so as to account for our different communication model and context.

We start by recalling the model in which *BA\** operates and the notion of a Byzantine agreement.

**3.1 Synchronous Complete Networks and Matching Adversaries**

In a SC network, there is a common clock, ticking at each integral times $r$ = 1,2,...

At each even time click $r$, each player $i$ instantaneously and simultaneously sends a single message $m_{i,j}^r$ (possibly the empty message) to each player $j$, including himself. Each $m_{i,j}^r$ is correctly received at time click $r$ + 1 by player $j$, together with the identity of the sender $i$.

Again, in a communication protocol, a player is *honest* if he follows all his prescribed instructions, and *malicious* otherwise. All malicious players are totally controlled and perfectly coordinated by the Adversary, who, in particular, immediately receives all messages addressed to malicious players, and chooses the messages they send.

The Adversary can immediately make malicious any honest user he wants at any odd time click he wants, subject only to a possible upperbound $t$ to the number of malicious players. That is, the Adversary "cannot interfere with the messages already sent by an honest user $i$", which will be delivered as usual.

The Adversary also has the additional ability to see instantaneously, at each even round, the messages that the currently honest players send, and instantaneously use this information to choose the messages the malicious players send at the same time tick.

**3.2 The Notion of a Byzantine Agreement**

The notion of Byzantine agreement might have been first introduced for the *binary* case, that is, when every initial value consists of a bit. However, it was quickly extended to arbitrary initial values. By a BA protocol, we mean an arbitrary-value one.

**Definition 3.1.** *In a synchronous network, let* $\mathcal{P}$ *be a n-player protocol, whose player set is common knowledge among the players, t a positive integer such that n $\geq$ 2t + 1. We say that* $\mathcal{P}$ *is an* arbitrary-value *(respectively,* binary*) (n, t)-Byzantine agreement protocol with* soundness $\sigma \in (0,1)$ *if, for every set of values V not containing the special*

*symbol ⊥ (respectively, for V = {0,1}), in an execution in which at most t of the players are malicious and in which every player i starts with an initial value $v_i \in$ V, every honest player j halts with probability 1, outputting a value out$_i \in$ V U {⊥} so as to satisfy, with probability at least σ, the following two conditions:*

1. Agreement: *There exists out $\in$ V U {⊥} such that out$_i$ = out for all honest players i.*

2. Consistency: *if, for some value v $\in$ V, v$_i$ = v for all players i, then out = v.*

*We refer to out as* $\mathcal{P}$ *'s output, and to each out$_i$ as player i's output.*

**3.3 The BA Notation #**

In our BA protocols, a player is required to count how many players sent him a given message in a given step. Accordingly, for each possible value *v* that might be sent,

$$\#_i^s(v)$$

(or just #$_i$(v) when s is clear) is the number of players *j* from which *i* has received *v* in step *s*.

Recalling that a player *i* receives exactly one message from each player *j*, if the number of players is *n*, then, for all *i* and *s,* $\sum_v \#_i^s(v) = n.$

**3.4 The New Binary BA Protocol *BBA\****

In this section we present a new *binary* BA protocol, *BBA\*,* which relies on the honesty of more than two thirds of the players and is very fast: no matter what the malicious players might do, each execution of its main loop not only is trivially executed, but brings the players into agreement with probability 1/3.

In *BBA\*,* each player has his own public key of a digital signature scheme satisfying the unique-signature property. Since this protocol is intended to be run on synchronous complete network, there is no need for a player *i* to sign each of his messages.

Digital signatures are used to generate a sufficiently common random bit in Step 3. (In Algorand, digital signatures are used to authenticate all other messages as well.)

The protocol requires a minimal set-up: a common random string r, independent of the players' keys. (In Algorand, *r* is actually replaced by the quantity $Q^r$.)

Protocol *BBA\** is a 3-step loop, where the players repeatedly exchange Boolean values, and different players may exit this loop at different times. A player *i* exits this loop by propagating, at some step, either a special value 0\* or a special value 1\*, thereby instructing all players to "pretend" they respectively receive 0 and 1 from *i* in all future steps. (Alternatively said: assume that the last message received by a player *j* from another player *i* was a bit *b*. Then, in any step in which he does not receive any message from *i*, *j* acts as if *i* sent him the bit *b*.)

The protocol uses a counter γ, representing how many times its 3-step loop has been executed. At the start of *BBA\*,* γ = 0. (One may think of γ as a global counter, but it is actually increased by each individual player every time that the loop is executed.)

There are $n \geq 3t + 1$, where *t* is the maximum possible number of malicious players. A binary string *x* is identified with the integer whose binary representation (with possible leadings 0s) is *x;* and 1sb(*x*) denotes the least significant bit of *x*.

PROTOCOL *BBA\**

(COMMUNICATION) STEP 1. [Coin-Fixed-To-0 Step] *Each player* i *sends b$_i$.*

*1.1 If* $\#_i^1(0) \geq 2t + 1,$ *then i sets b$_i$ = 0, sends 0\*, outputs out$_i$ = 0, and HALTS.*

*1.2 If* $\#_i^1(1) \geq 2t + 1,$ *then, then i sets b$_i$ = 1.*

*1.3 Else, i sets b$_i$ = 0.*

(COMMUNICATION) STEP 2. [Coin-Fixed-To-1 Step] *Each player* i *sends* $b_i$.

*2.1 If* $\#_i^2(1) \geq 2t+1,$ *then i sets* $b_i$ = 1, *sends* 1*, *outputs* $out_i$ = 1, *and HALTS.*

*2.2 If* $\#_i^2(0) \geq 2t+1,$ *then i set* $b_i$ = 0.

*2.3 Else, i sets* $b_i$ = 1.

(COMMUNICATION) STEP 3. [Coin-Genuinely-Flipped Step] *Each player* i *sends* $b_i$ *and* $SIG_i(r, \gamma)$.

*3.1 If* $\#_i^3(0) \geq 2t+1,$ *then i sets* $b_i$ = 0.

*3.2 If* $\#_i^3(1) \geq 2t+1,$ $\geq$ *then i sets* $b_i$ = 1.

*3.3 Else, letting* $S_i$ = {j $\in$ N who have sent i a proper message in this step 3}, i sets

$$b_i = c \triangleq \mathtt{lsb}(\min_{j \in S_i} H(SIG_i(r,\gamma)));$$ *increases* $\gamma_i$ *by 1; and returns to Step 1.*

**Theorem 3.1.** *Whenever n* ≥ *3t* + 1, *BBA\* is a binary (n, t)-BA protocol with soundness 1.*

A proof of Theorem 3.1 can be found in https://people.csail.mit.edu/silvio/ Selected-ScientificPapers/DistributedComputation/BYZANTINEAGREEMENTMADETRIVIAL. 15 pdf.

**3.5 Graded Consensus and the Protocol GC**

Let us recall, for arbitrary values, a notion of consensus much weaker than Byzantine agreement.

**Definition 3.2.** *Let* $\mathcal{P}$ *be a protocol in which the set of all players is common knowledge, and each player i privately knows an arbitrary* initial value $v_i'$.

*We say that* $\mathcal{P}$ *is an* (n, t)-graded consensus protocol *if, in every execution with n players, at most t of which are malicious, every honest player i halts outputting* a value-grade *pair* ($v_i$, $g_i$), *where* $g_i$ $\in$ {0,1,2}, *so as to satisfy the following three conditions:*

*1. For all honest players i and j,* $|g_i - g_j|$ ≤ 1.

*2. For all honest players i and j,* $g_i$, $g_j$ > 0 ⇒ $v_i$ = $v_j$.

*3. If* $v_1' = \cdots = v_n' = v$ *for some value v, then* $v_i$ = v *and* $g_i$ = 2 *for all honest players i.*

The following two-step protocol *GC* is a graded consensus protocol in the literature. To match the steps of protocol $Algorand_1'$ of section 4.1, we respectively name 2 and 3 the steps of *GC*. (Indeed, the first step of $Algorand_1'$ is concerned with something else: namely, proposing a new block.)

PROTOCOL *GC*

STEP 2. *Each player i sends* $v_i'$ *to all players.*

STEP 3. *Each player i sends to all players the string x if and only if* $\#_i^2(x) \geq 2t+1.$

OUTPUT DETERMINATION. *Each player i outputs the pair* ($v_i$, $g_i$) *computed as follows:*

- *If, for some x,* $\#_i^3(x) \geq 2t+1,$ *then* $v_i$ = x *and* $g_i$ = 2.

- *If, for some x,* $\#_i^3(x) \geq t+1,$ *then* $v_i$ = x *and* $g_i$ = 1.

- *Else, $v_i = \perp$ and $g_i = 0$.*

Since protocol *GC* is a protocol in the literature, it is known that the following theorem holds.

**Theorem 3.2.** *If $n \geq 3t + 1$, then GC is a $(n, t)$-graded broadcast protocol.*

**3.6 The Protocol *BA***

We now describe the arbitrary-value BA protocol *BA\** via the binary BA protocol *BBA\** and the graded-consensus protocol *GC*. Below, the initial value of each player $i$ is $v'_i$.

PROTOCOL *BA\**

STEPS 1 AND 2. *Each player i executes GC, on input $v'_i$, so as to compute a pair $(v_i, g_i)$.*

STEP 3, ... *Each player i executes BBA\* -with initial input 0, if $g_i = 2$, and 1 otherwise- so as to compute the bit $out_i$.*

OUTPUT DETERMINATION. *Each player i outputs $v_i$, if $out_i = 0$, and $\perp$ otherwise.*

**Theorem 3.3.** *Whenever $n \geq 3t + 1$, BA\* is a $(n, t)$-BA protocol with soundness 1.*

*Proof.* We first prove Consistency, and then Agreement.

PROOF OF CONSISTENCY. Assume that, for some value $v \in V$, $v'_i = v$. Then, by property 3 of graded consensus, after the execution of *GC,* all honest players output $(v, 2)$. Accordingly, 0 is the initial bit of all honest players in the end of the execution of *BBA\**. Thus, by the Agreement property of binary Byzantine agreement, at the end of the execution of *BA\**, $out_i = 0$ for all honest players. This implies that the output of each honest player $i$ in *BA\** is $v_i = v$. $\square$

PROOF OF AGREEMENT. Since *BBA\** is a binary BA protocol, either

(A) $out_i = 1$ for all honest player $i$, or
(B) $out_i = 0$ for all honest player $i$.

In case A, all honest players output $\perp$ in *BA\**, and thus Agreement holds. Consider now case B. In this case, in the execution of *BBA\**, the initial bit of at least one honest player $i$ is 0. (Indeed, if initial bit of all honest players were 1, then, by the Consistency property of *BBA\**, we would have $out_j = 1$ for all honest $j$.) Accordingly, after the execution of *GC*, i outputs the pair $(v, 2)$ for some value $v$. Thus, by property 1 of graded consensus, $g_j > 0$ for all honest players $j$. Accordingly, by property 2 of graded consensus, $v_j = v$ for all honest players $j$. This implies that, at the end of *BA\**, every honest player $j$ outputs $v$. Thus, Agreement holds also in case B. $\square$

Since both Consistency and Agreement hold, *BA\** is an arbitrary-value BA protocol. ∎

Protocol *BA\** works also in gossiping networks, and in fact satisfies the player replaceability property that is crucial for Algorand to be secure in the envisaged very adversarial model.

**The Player Replaceability of *BBA\** and *BA\*** Let us now provide some intuition of why the protocols *BA\** and *BBA\** can be adapted to be executed in a network where communication is via peer-to-peer gossiping, satisfy player replaceability. For concreteness, assume that the network has 10M users and that each step $x$ of *BBA\** (or *BA\**) is executed by a committee of 10,000 players, who have been randomly selected via secret cryptographic sortition, and thus have credentials proving of being entitled to send messages in step $x$. Assume that each message sent in a given step specifies the step number, is digitally signed by its sender, and includes the credential proving that its sender is entitled to speak in that step.

First of all, if the percentage $h$ of honest players is sufficiently larger than 2/3 (e.g., 75%), then, with overwhelming probability, the committee selected at each step has the required 2/3 honest majority.

In addition, the fact that the 10,000-strong randomly selected committee changes at each step does not impede the correct working of either *BBA\** or *BA\**. Indeed, in either protocol, a player $i$ in step $s$ only reacts to the multiplicity with which, in Step $s - 1$, he has received a given message $m$. Since we are in a gossiping network, all messages sent in Step $s - 1$ will (immediately, for the purpose of this intuition) reach all users, including those selected to play in step $s$. Furthermore because all messages sent in step $s - 1$ specify the step number and include the credential that the sender was indeed authorized to speak in step $s - 1$. Accordingly, whether he happened to have been selected also in step $s - 1$ or not, a user i selected to play in step $s$ is perfectly capable of correctly counting the multiplicity with which he has received a correct step *s* - 1 message. It does not at all matter whether he has been playing all steps so far or not. All users are in "in the same boat" and thus can be replaced easily by other users.

### 4 Two Embodiments of Algorand

As discussed, at a very high level, a round of Algorand ideally proceeds as follows. First, a randomly selected user, the leader, proposes and circulates a new block. (This process includes initially selecting a few potential leaders and then ensuring that, at least a good fraction of the time, a single common leader emerges.) Second, a randomly selected committee of users is selected, and reaches Byzantine agreement on the block proposed by the leader. (This process includes that each step of the BA protocol is run by a separately selected committee.) The agreed upon block is then digitally signed by a given threshold ($T_H$) of committee members. These digital signatures are propagated so that everyone is assured of which is the new block. (This includes circulating the credential of the signers, and authenticating just the hash of the new block, ensuring that everyone is guaranteed to learn the block, once its hash is made clear.)

In the next two sections, we present two embodiments of the basic Algorand design, $Algorand'_1$ and $Algorand'_2$, that respectively work under a proper majority-of-honest-users assumption. In Section 8 we show how to adopts these embodiments to work under a honest-majority-of-money assumption. $Algorand'_1$ only envisages that > 2/3 of the committee members are honest. In addition, in $Algorand'_1$, the number of steps for reaching Byzantine agreement is capped at a suitably high number, so that agreement is guaranteed to be reached with overwhelming probability within a fixed number of steps (but potentially requiring longer time than the steps of $Algorand'_2$). In the remote case in which agreement is not yet reached by the last step, the committee agrees on the empty block, which is always valid. $Algorand'_2$ envisages that the number of honest members in a committee is always greater than or equal to a fixed threshold $t_H$ (which guarantees that, with overwhelming probability, at least 2/3 of the committee members are honest). In addition, $Algorand'_2$ allows Byzantine agreement to be reached in an arbitrary number of steps (but potentially in a shorter time than $Algorand'_1$).

Those skilled in the art will realize that many variants of these basic embodiments can be derived. In particular, it is easy, given $Algorand'_2$, to modify $Algorand'_1$ so as to enable to reach Byzantine agreement in an arbitrary number of steps.

Both embodiments share the following common core, notations, notions, and parameters.

### 4.1 A Common Core

Objectives Ideally, for each round r, Algorand should satisfy the following properties:

   1. *Perfect Correctness.* All honest users agree on the same block $B^r$.

   2. *Completeness 1.* With probability 1, the block $B^r$ has been chosen by a honest user.

(Indeed a malicious user may always choose a block whose payset contains the payments of just his "friends".)

Of course, guaranteeing perfect correctness alone is trivial: everyone always chooses the official payset $PAY^r$ to be empty. But in this case, the system would have completeness 0. Unfortunately, guaranteeing both perfect correctness and completeness 1 is not easy in the presence of malicious users. Algorand thus adopts a more realistic objective. Informally, letting *h* denote the percentage of users who are honest, *h* > 2/3, the goal of Algorand is
*Guaranteeing, with overwhelming probability, perfect correctness and completeness close to h.*

Privileging correctness over completeness seems a reasonable choice: payments not processed in one round can be processed in the next, but one should avoid *forks,* if possible.

**Led Byzantine Agreement** Disregarding excessive time and communication for a moment, perfect Correctness could be guaranteed as follows. At the start of round $r$, each user $i$ proposes his own candidate block $B_i^r$. Then, all users reach Byzantine agreement on just one of the candidate blocks. As per our introduction, the BA protocol employed requires a 2/3 honest majority and is player replaceable. Each of its step can be executed by a small and randomly selected set of *verifiers*, who do not share any inner variables.

Unfortunately, this approach does not quite work. This is so, because the candidate blocks proposed by the honest users are most likely totally different from each other. Indeed, each honest user sees different payments. Thus, although the sets of payments seen by different honest users may have a lot of overlap, it is unlikely that all honest users will construct a propose the same block. Accordingly, the consistency agreement of the BA protocol is never binding, only the agreement one is, and thus agreement may always been reached on $\perp$ rather than on a good block.

*Algorand'* avoids this problem as follows. First, a leader for round $r$, $\ell^r$, is selected. Then, $\ell^r$ propagates his own candidate block, $B_{\ell^r}^r$. Finally, the users reach agreement on the block they actually receive from $\ell^r$. Because, whenever $\ell^r$ is honest, Perfect Correctness and Completeness 1 both hold, *Algorand'* ensures that $\ell^r$ is honest with probability close to $h$.

**Leader Selection** In Algorand's, the rth block is of the form

$$B^r = \left(r, PAY^r, SIG_{\ell^r}(Q^{r-1}), H(B^{r-1})\right).$$

As already mentioned in the introduction, the quantity $Q^{r-1}$ is carefully constructed so as to be essentially non-manipulatable by our very powerful Adversary. (Later on in this section, we shall provide some intuition about why this is the case.) At the start of a round r, all users know the blockchain so far, $B^0,..., B^{r-1}$, from which they deduce the set of users of every prior round: that is, $PK^1,..., PK^{r-1}$. A *potential leader* of round r is a user $i$ such that

$$.H\left(SIG_i\left(r, 1, Q^{r-1}\right)\right) \le p \ .$$

Let us explain. Note that, since the quantity $Q^{r-1}$ is deducible from block $B^{r-1}$, because of the message retrievability property of the underlying digital signature scheme. Furthermore, the underlying signature scheme satisfies the uniqueness property. Thus, $SIG_i(r,1, Q^{r-1})$ is a binary string uniquely associated to $i$ and $r$. Accordingly, since $H$ is a random oracle, $H(SIG_i(r, 1, Q^{r-1}))$ is a random 256-bit long string uniquely associated to $i$ and $r$. The symbol "." in front of $H$ $(SIG_i(r,1, Q^{r-1}))$ is the *decimal* (in our case, *binary*) *point*, so that $r_i \triangleq .H\left(SIG_i\left(r, 1, Q^{r-1}\right)\right)$ is the binary expansion of a random 256-bit number between 0 and 1 uniquely associated to $i$ and $r$. Thus the probability that $r_i$ is less than or equal to $p$ is essentially $p$.

The probability $p$ is chosen so that, with overwhelming (i.e., 1- $F$) probability, at least one potential verifier is honest. (If fact, $p$ is chosen to be the smallest such probability.)

Note that, since $i$ is the only one capable of computing his own signatures, he alone can determine whether he is a potential verifier of round 1. However, by revealing his own *credential,* $\sigma_i^r \triangleq SIG_i\left(r, 1, Q^{r-1}\right),$ $i$ can prove to anyone to be a potential verifier of round $r$.

The leader $\ell^r$ is defined to be the potential leader whose hashed credential is smaller that the hashed credential of all other potential leader $j$: that is, $H(\sigma_{\ell^r}^{r,s}) \le H(\sigma_j^{r,s}).$

Note that, since a malicious $\ell^r$ may not reveal his credential, the correct leader of round $r$ may never be known, and that, barring improbable ties, $\ell^r$ is indeed the only leader of round $r$.

Let us finally bring up a last but important detail: a user $i$ can be a potential leader (and thus the leader) of a round $r$ only if he belonged to the system for at least $k$ rounds. This guarantees the non-manipulatability of $Q^r$ and all future Q-quantities. In fact, one of the potential leaders will actually determine $Q^r$.

**Verifier Selection** Each step $s > 1$ of round $r$ is executed by a small set of verifiers, $SV^{r,s}$. Again, each verifier $i \in SV^{r,s}$ is randomly selected among the users already in the system $k$ rounds before $r$, and again via the special quantity $Q^{r-1}$. Specifically, $i \in PK^{r-k}$ is a *verifier* in $SV^{r,s}$, if

$$.H\left(SIG_i\left(r, s, Q^{r-1}\right)\right) \le p' \ .$$

Once more, only *i* knows whether he belongs to $SV^{r,s}$, but, if this is the case, he could prove it by exhibiting his credential $\sigma_i^{r,s} \triangleq H(SIG_i(r, s, Q^{r-1}))$. A verifier $i \in SV^{r,s}$ sends a message, $m_i^{r,s}$, in step *s* of round r, and this message includes his credential $\sigma_i^{r,s}$, so as to enable the verifiers f the nest step to recognize that $m_i^{r,s}$ is a legitimate step-s message.

The probability *p'* is chosen so as to ensure that, in $SV^{r,s}$, letting *#good* be the number of honest users and *#bad* the number of malicious users, with overwhelming probability the following two conditions hold.

For embodiment $Algorand'_1$:

> (1) *#good* > 2· *#bad* and
> (2) *#good* + 4· *#bad* < 2*n*, where *n* is the expected cardinality of $SV^{r,s}$.

For embodiment $Algorand'_2$:

> (1) *#good* > $t_H$ and
> (2) *#good* + 2*#bad* < 2$t_H$, where $t_H$ is a specified threshold.

These conditions imply that, with sufficiently high probability, (a) in the last step of the BA protocol, there will be at least given number of honest players to digitally sign the new block $B^r$, (b) only one block per round may have the necessary number of signatures, and (c) the used BA protocol has (at each step) the required 2/3 honest majority.

**Clarifying Block Generation** If the round-r leader $\ell^r$ is honest, then the corresponding block is of the form

$$B^r = \left(r, PAY^r, SIG_{\ell^r}\left(Q^{r-1}\right), H\left(B^{r-1}\right)\right) ,$$

where the payset $PAY^r$ is maximal. (recall that all paysets are, by definition, collectively valid.)

Else (i.e., if $\ell^r$ is malicious), $B^r$ has one of the following two possible forms:

$$B^r = \left(r, PAY^r, SIG_i\left(Q^{r-1}\right), H\left(B^{r-1}\right)\right) \quad \text{and} \quad B^r = B_\varepsilon^r \triangleq \left(r, \emptyset, Q^{r-1}, H\left(B^{r-1}\right)\right) .$$

In the first form, $PAY^r$ is a (non-necessarily maximal) payset and it may be $PAY^r = \emptyset$; and *i* is a potential leader of round *r*. (However, *i* may not be the leader $\ell^r$. This may indeed happen if if $\ell^r$ keeps secret his credential and does not reveal himself.)

The second form arises when, in the round-*r* execution of the BA protocol, all honest players output the default value, which is the empty block $B_\varepsilon^r$ in our application. (By definition, the possible outputs of a BA protocol include a default value, generically denoted by $\perp$. See section 3.2.)

Note that, although the paysets are empty in both cases, $B^r = (r, \emptyset, SIG_i(Q^{r-1}), H(B^{r-1}))$ and $B_\varepsilon^r$ are syntactically different blocks and arise in two different situations: respectively, "all went smoothly enough in the execution of the BA protocol", and "something went wrong in the BA protocol, and the default value was output".

Let us now intuitively describe how the generation of block $B^r$ proceeds in round *r* of *Algorand'*. In the first step, each eligible player, that is, each player $i \in PK^{r-k}$, checks whether he is a potential leader. If this is the case, then *i* is asked, using of all the payments he has seen so far, and the current blockchain, $B^0, ..., B^{r-1}$, to secretly prepare a maximal payment set, $PAY_i^r$, and secretly assembles his candidate block, $B^r = \left(r, PAY_i^r, SIG_i\left(Q^{r-1}\right), H\left(B^{r-1}\right)\right)$. That, is, not only does he include in $B_i^r$, as its second component, the just prepared payset, but also, as its third component, his own signature of $Q^{r-1}$, the third component of the last block, $B^{r-1}$. Finally, he propagates his round-r-step-1 message, $m_i^{r,1}$, which includes (a) his candidate block $B_i^r$, (b) his proper signature of his candidate block (i.e., his signature of the hash of $B_i^r$, and (c) his own credential $\sigma_i^{r,1}$, proving that he is indeed a potential verifier of round *r*.

(Note that, until an honest $i$ produces his message $m_i^{r,1}$, the Adversary has no clue that $i$ is a potential verifier. Should he wish to corrupt honest potential leaders, the Adversary might as well corrupt random honest players. However, once he sees $m_i^{r,1}$, since it contains $i$'s credential, the Adversary knows and could corrupt $i$, but cannot prevent $m_i^{r,1}$, which is virally propagated, from reaching all users in the system.)

In the second step, each selected verifier $j \in SV^{r,2}$ tries to identify the leader of the round. Specifically, $j$ takes the step-1 credentials, $\sigma_{i_1}^{r,1}, \ldots, \sigma_{i_n}^{r,1}$, contained in the proper step-1 message $m_i^{r,1}$ he has received; hashes all of them, that is, computes $H\left(\sigma_{i_1}^{r,1}\right), \ldots, H\left(\sigma_{i_n}^{r,1}\right)$; finds the credential, $\sigma_{\ell_j}^{r,1}$, whose hash is lexicographically minimum; and considers $\ell_j^r$ to be the leader of round $r$.

Recall that each considered credential is a digital signature of $Q^{r-1}$, that $SIG_j(r, 1, Q^{r-1})$ is uniquely determined by $i$ and $Q^{r-1}$, that $H$ is random oracle, and thus that each $H(SIG_j(r, 1, Q^{r-1}))$ is a random 256-bit long string unique to each potential leader $i$ of round $r$.

From this we can conclude that, if the 256-bit string $Q^{r-1}$ were itself *randomly and independently selected,* than so would be the hashed credentials of all potential leaders of round $r$. In fact, all potential leaders are well defined, and so are their credentials (whether actually computed or not). Further, the set of potential leaders of round r is a random subset of the users of round $r - k$, and an honest potential leader $i$ always properly constructs and propagates his message $m_i^r$, which contains $i$'s credential. Thus, since the percentage of honest users is $h$, no matter what the malicious potential leaders might do (e.g., reveal or conceal their own credentials), the minimum hashed potential-leader credential belongs to a honest user, who is necessarily identified by everyone to be the leader $\ell^r$ of the round $r$. Accordingly, if the 256-bit string $Q^{r-1}$ were itself *randomly and independently selected,* with probability exactly $h$ (a) the leader $\ell^r$ is honest and (b) $\ell_j = \ell^r$ for all honest step-2 verifiers $j$.

In reality, the hashed credential are, yes, randomly selected, but depend on $Q^{r-1}$, which is not randomly and independently selected. A careful analysis, however, guarantees that $Q^{r-1}$ is sufficiently non-manipulatable to guarantee that the leader of a round is honest with probability $h'$ sufficiently close to $h$: namely, $h' > h^2(1 + h - h^2)$. For instance, if $h = 80\%$, then $h' > .7424$.

Having identified the leader of the round (which they correctly do when the leader $\ell^r$ is honest), the task of the step-2 verifiers is to start executing $BA^*$ using as initial values what they believe to be the block of the leader. Actually, in order to minimize the amount of communication required, a verifier $j \in SV^{r,2}$ does not use, as his input value $v_j'$ to the Byzantine protocol, the block $B_j$ that he has actually received from $\ell_j$ (the user $j$ believes to be the leader), but the the leader, but the hash of that block, that is, $v_j' = H(B_i)$. Thus, upon termination of the BA protocol, the verifiers of the last step do not compute the desired round-$r$ block $B^r$, but compute (authenticate and propagate) $H(B^r)$. Accordingly, since $H(B^r)$ is digitally signed by sufficiently many verifiers of the last step of the BA protocol, the users in the system will realize that $H(B^r)$ is the hash of the new block. However, they must also retrieve (or wait for, since the execution is quite asynchronous) the block $B^r$ itself, which the protocol ensures that is indeed available, no matter what the Adversary might do.

**Asynchrony and Timing** $Algorand_1'$ and $Algorand_2'$ have a significant degree of asynchrony. This is so because the Adversary has large latitude in scheduling the delivery of the messages being propagated. In addition, whether the total number of steps in a round is capped or not, there is the variance contribute by the number of steps actually taken.

As soon as he learns the certificates of $B^0$, $B^{r-1}$, a user $i$ computes $Q^{r-1}$ and starts working on round $r$, checking whether he is a potential leader, or a verifier in some step $s$ of round $r$.

Assuming that $i$ must act at step $s$, in light of the discussed asynchrony, $i$ relies on various strategies to ensure that he has sufficient information before he acts.

For instance, he might wait to receive at least a given number of messages from the verifiers of the previous step (as in $Algorand_1'$), or wait for a sufficient time to ensure that he receives the messages of sufficiently many verifiers of the previous step (as in $Algorand'_2$ ).

**The Seed $Q^r$ and the Look-Back Parameter $k$** Recall that, ideally, the quantities $Q^r$ should random and independent, although it will suffice for them to be sufficiently non-manipulatable by the Adversary.

At a first glance, we could choose $Q^{r-1}$ to coincide with $H(PAY^{r-1})$. An elementary analysis reveals, however, that malicious users may take advantage of this selection mechanism.[5] Some additional effort shows that myriads of other alternatives, based on traditional block quantities are easily exploitable by the Adversary to ensure that malicious leaders are very frequent. We instead specifically and inductively define our brand new quantity $Q^r$ so as to be able to prove that it is non-manipulatable by the Adversary. Namely, $Q^r \triangleq H(SIG_{\ell^r}(Q^{r-1}), r)$, if $B^r$ is not the empty block, and $Q^r \triangleq H(Q^{r-1}, r)$ otherwise.

[5] We are at the start of round $r$ - 1. Thus, $Q^{r-2} = PAY^{r-2}$ is publicly known, and the Adversary privately knows who are the potential leaders he controls. Assume that the Adversary controls 10% of the users, and that, with very high probability, a malicious user $w$ is the potential leader of round $r$ - 1. That is, assume that $H(SIG_w(r-2, 1, Q^{r-2}))$ is so small that it is highly improbable an honest potential leader will actually be the leader of round $r$ - 1. (Recall that, since we choose potential leaders via a secret cryptographic sortition mechanism, the Adversary does not know who the honest potential leaders are.) The Adversary, therefore, is in the enviable position of choosing the payset $PAY'$ he wants, and have it become the official payset of round $r$ - 1. However, he can do more. He can also ensure that, with high probability, (*) one of his malicious users will be the leader also of round r, so that he can freely select what $PAY^r$ will be. (And so on. At least for a long while, that is, as long as these high-probability events really occur.) To guarantee (*), the Adversary acts as follows. Let $PAY'$ be the payset the Adversary prefers for round $r$ - 1. Then, he computes $H(PAY')$ and checks whether, for some already malicious player $z$, $SIG_z(r, 1, H(PAY'))$ is particularly small, that is, small enough that with very high probability $z$ will be the leader of round $r$. If this is the case, then he instructs $w$ to choose his candidate block to be $B_i^{r-1} = (r-1, PAY', H(B^{r-2}))$. Else, he has two other malicious users $x$ and $y$ to keep on generating a new payment $\wp'$, from one to the other, until, for some malicious user $z$ (or even for some fixed user $z$) $H(SIG_z(PAY \cup \{\wp\}))$ is particularly small too. This experiment will stop quite quickly. And when it does the Adversary asks $w$ to propose the candidate block $B_i^{r-1} = (r-1, PAY' \cup \{\wp\}, H(B^{r-2}))$.

The intuition of why this construction of $Q^r$ works is as follows. Assume for a moment that $Q^{r-1}$ is truly randomly and independently selected. Then, will so be $Q^r$? When $\ell^r$ is honest the answer is (roughly speaking) yes. This is so because

$$H(SIG_{\ell^r}(\cdot), r) : \{0, 1\}^{256} \longrightarrow \{0, 1\}^{256}$$

is a random function. When $\ell^r$ is malicious, however, $Q^r$ is no longer univocally defined from $Q^{r-1}$ and $\ell^r$. There are at least two separate values for $Q^r$. One continues to be $Q^r \triangleq H(SIG_{\ell^r}(Q^{r-1}), r)$, and the other is $H(Q^{r-1}, r)$. Let us first argue that, while the second choice is somewhat arbitrary, a second choice is absolutely mandatory. The reason for this is that a malicious $\ell^r$ can always cause totally different candidate blocks to be received by the honest verifiers of the second step.[6] Once this is the case, it is easy to ensure that the block ultimately agreed upon via the BA protocol of round $r$ will be the default one, and thus will not contain anyone's digital signature of $Q^{r-1}$. But the system must continue, and for this, it needs a leader for round $r$. If this leader is automatically and openly selected, then the Adversary will trivially corrupt him. If it is selected by the previous $Q^{r-1}$ via the same process, than $\ell^r$ will again be the leader in round $r + 1$. We specifically propose to use the same secret cryptographic sortition mechanism, but applied to a new $Q$-quantity: namely, $H(Q^{r-1}, r)$. By having this quantity to be the output of $H$ guarantees that the output is random, and by including $r$ as the second input of $H$, while all other uses of $H$ have either a single input or at least three inputs, "guarantees" that such a $Q^r$ is independently selected. Again, our specific choice of alternative $Q^r$ does not matter, what matter is that $\ell^r$ has two choice for $Q^r$, and thus he can double his chances to have another malicious user as the next leader.

[6] For instance, to keep it simple (but extreme), "when the time of the second step is about to expire", $\ell^r$ could directly email a different candidate block $B_i$ to each user $i$. This way, whoever the step-2 verifiers might be, they will have received totally different blocks.

The options for $Q^r$ may even be more numerous for the Adversary who controls a malicious $\ell^r$. For instance, let $x, y,$ and $z$ be three malicious potential leaders of round $r$ such that

$$H\left(\sigma_x^{r,1}\right) < H\left(\sigma_y^{r,1}\right) < H\left(\sigma_z^{r,1}\right)$$

and $H\left(\sigma_z^{r,1}\right)$ is particulary small. That is, so small that there is a good chance that $H\left(\sigma_z^{r,1}\right)$ is smaller of the hashed credential of every honest potential leader. Then, by asking $x$ to hide his credential, the Adversary has a good chance of having $y$ become the leader of round $r$ - 1. This implies that he has another option for $Q^r$: namely, $H(SIG_y(Q^{r-1}), r)$. Similarly, the Adversary may ask both $x$ and $y$ of withholding their credentials, so as to have $z$ become the leader of round $r$ - 1 and gaining another option for $Q^r$: namely, $H(SIG_z(Q^{r-1}), r)$.

Of course, however, each of these and other options has a non-zero chance to fail, because the Adversary cannot predict the hash of the digital signatures of the honest potential users.

A careful, Markov-chain-like analysis shows that, no matter what options the Adversary chooses to make at round $r$ - 1, *as long as he cannot inject new users in the system,* he cannot decrease the probability of an honest user to be the leader of round $r$ + 40 much below $h$. This is the reason for which we demand that the potential leaders of round $r$ are users already existing in round $r$ - $k$. It is a way to ensure that, at round $r$ - $k$, the Adversary cannot alter by much the probability that an honest user become the leader of round $r$. In fact, no matter what users he may add to the system in rounds $r$ - $k$ through $r$, they are ineligible to become potential leaders (and *a fortiori* the leader) of round $r$. Thus the look-back parameter $k$ ultimately is a security parameter. (Although, as we shall see in section 7, it can also be a kind of "convenience parameter" as well.)

**Ephemeral Keys** Although the execution of our protocol cannot generate a fork, except with negligible probability, the Adversary could generate a fork, at the $r$th block, after the legitimate block $r$ has been generated.

Roughly, once $B^r$ has been generated, the Adversary has learned who the verifiers of each step of round $r$ are. Thus, he could therefore corrupt all of them and oblige them to certify a new block $\widetilde{B^r}$. Since this fake block might be propagated only after the legitimate one, users that have been paying attention would not be fooled.[7] Nonetheless, $\widetilde{B^r}$ would be syntactically correct and we want to prevent from being manufactured.

[7]Consider corrupting the news anchor of a major TV network, and producing and broadcasting today a newsreel showing secretary Clinton winning the last presidential election. Most of us would recognize it as a hoax. But someone getting out of a coma might be fooled.

We do so by means of a new rule. Essentially, the members of the verifier set $SV^{r,s}$ of a step $s$ of round $r$ use ephemeral public keys $pk_i^{r,s}$ to digitally sign their messages. These keys are single-use-only and their corresponding secret keys $sk_i^{r,s}$ are destroyed once used. This way, if a verifier is corrupted later on, the Adversary cannot force him to sign anything else he did not originally sign.

Naturally, we must ensure that it is impossible for the Adversary to compute a new key $\widetilde{p_i^{r,s}}$ and convince an honest user that it is the right ephemeral key of verifier $i \in SV^{r,s}$ to use in step $s$.

**4.2 Common Summary of Notations, Notions, and Parameters**

**Notations**

- $r \geq 0$: the current round number.
- $s \geq 1$: the current step number in round $r$.
- $B^r$: the block generated in round $r$.
- $PK^r$: the set of public keys by the end of round $r$ - 1 and at the beginning of round $r$.
- $S^r$: the system status by the end of round $r$ - 1 and at the beginning of round $r$.[8]
- $PAY^r$: the payset contained in $B^r$.
- $\ell^r$: round-$r$ leader. $\ell^r$ chooses the payset $PAY^r$ of round $r$ (and determines the next $Q^r$).
- $Q^r$: the seed of round $r$, a quantity (i.e., binary string) that is generated at the end of round $r$ and is used to choose verifiers for round $r$ + 1. $Q^r$ is independent of the paysets in the blocks and cannot be manipulated by $\ell^r$.
- $SV^{r,s}$: the set of verifiers chosen for step $s$ of round $r$.

- *$SV^r$*: the set of verifiers chosen for round $r$, $SV^r = \cup_{s \geq 1} SV^{r,s}$.
- *$MSV^{r,s}$* and *$HSV^{r,s}$*: respectively, the set of malicious verifiers and the set of honest verifiers in $SV^{r,s}$. $MSV^{r,s} \cup HSV^{r,s}$ = $SV^{r,s}$ and $MSV^{r,s} \cap HSV^{r,s} = \emptyset$.
- $n_1 \in \mathbb{Z}^+$ and $n \in \mathbb{Z}^+$: respectively, the expected numbers of potential leaders in each $SV^{r,1}$, and the expected numbers of verifiers in each $SV^{r,s}$, for $s > 1$. Notice that $n_1 << n$, since we need at least one honest honest member in $SV^{r,1}$, but at least a majority of honest members in each $SV^{r,s}$ for $s > 1$.
- $h \in (0, 1)$: a constant greater than 2/3. $h$ is the honesty ratio in the system. That is, the fraction of honest users or honest money, depending on the assumption used, in each $PK^r$ is at least $h$.
  
  [8]In a system that is not synchronous, the notion of "the end of round $r$ - 1" and "the beginning of round $r$" need to be carefully defined. Mathematically, $PK^r$ and $S^r$ are computed from the initial status $S^0$ and the blocks $B^1$, ..., $B^{r-1}$.
- *$H$*: a cryptographic hash function, modelled as a random oracle.
- $\perp$: A special string of the same length as the output of $H$.
- $F \in (0, 1)$: the parameter specifying the allowed error probability. A probability $\leq F$ is considered "negligible", and a probability $\geq 1 - F$ is considered "overwhelming".
- $p_h \in (0, 1)$: the probability that the leader of a round $r$, $\ell^r$, is honest. Ideally $p_h = h$. With the existence of the Adversary, the value of $p_h$ will be determined in the analysis.
- $k \in \mathbb{Z}^+$: the look-back parameter. That is, round $r$ - $k$ is where the verifiers for round r are chosen from -namely, $SV^r \subseteq PK^{r-k}$.[9]
  
  [9]Strictly speaking, "$r$ - $k$" should be "max{0, $r$ - $k$}".
- $p_1 \in (0, 1)$: for the first step of round $r$, a user in round $r$ - $k$ is chosen to be in $SV^{r,1}$ with probability $p_1 \triangleq \frac{n_1}{|PK^{r-k}|}$.
- $p \in (0, 1)$: for each step $s > 1$ of round $r$, a user in round $r$ - $k$ is chosen to be in $SV^{r,s}$ with probability $p \triangleq \frac{n}{|PK^{r-k}|}$.
- *$CERT^r$*: the certificate for $B^r$. It is a set of $t_H$ signatures of $H(B^r)$ from proper verifiers in round $r$.
- $\overline{B^r} \triangleq (B^r, CERT^r)$ is a proven block.
  
  A user *i knows $B^r$* if he possesses (and successfully verifies) both parts of the proven block. Note that the $CERT^r$ seen by different users may be different.
- $\tau_i^r$: the (local) time at which a user *i* knows $B^r$. In the Algorand protocol each user has his own clock. Different users' clocks need not be synchronized, but must have the same speed. Only for the purpose of the analysis, we consider a reference clock and measure the players' related times with respect to it.
- $\alpha_i^{r,s}$ and $\beta_i^{r,s}$: respectively the (local) time a user *i* starts and ends his execution of Step *s* of round *r*.
- $\Lambda$ and $\lambda$: essentially, the upper-bounds to, respectively, the time needed to execute Step 1 and the time needed for any other step of the Algorand protocol. Parameter A upper-bounds the time to propagate a single 1MB block. Parameter $\lambda$ upperbounds the time to propagate one small message per verifier in a Step $s > 1$. We assume that $\Lambda \leq 4\lambda$.

**Notions**

- Verifier selection.

  For each round r and step $s > 1$, $SV^{r,s} \triangleq \{i \in PK^{r-k} : .H(SIG_i(r, s, Q^{r-1})) \leq p\}$. Each user $i \in PK^{r-k}$ privately computes his signature using his long-term key and decides whether $i \in SV^{r,s}$ or not. If $i \in SV^{r,s}$, then $SIG_i(r, s, Q^{r-1})$ is *i*'s ($r$, $s$)-credential, compactly denoted by $\sigma_i^{r,s}$.

  For the first step of round *r*, $SV^{r,1}$ and $\sigma_i^{r,1}$ are similarly defined, with $p$ replaced by $p_1$. The verifiers in $SV^{r,1}$ are *potential leaders.*
- Leader selection.

  User $i \in SV^{r,1}$ is the leader of round *r*, denoted by $\ell^r$, if $H(\sigma_i^{r,1}) \leq H(\sigma_j^{r,1})$ for all potential leaders $j \in SV^{r,1}$.

Whenever the hashes of two players' credentials are compared, in the unlikely event of ties, the protocol always breaks ties lexicographically according to the (long-term public keys of the) potential leaders.

By definition, the hash value of player $\ell^r$'s credential is also the smallest among all users in $PK^{r-k}$. Note that a potential leader cannot privately decide whether he is the leader or not, without seeing the other potential leaders' credentials. Since the hash values are uniform at random, when $SV^{r,1}$ is non-empty, $\ell^r$ always exists and is honest with probability at least $h$. The parameter $n_1$ is large enough so as to ensure that each $SV^{r,1}$ is non-empty with overwhelming probability.

- Block structure.

A non-empty block is of the form $B^r = (r, PAY^r, SIG_{\ell^r}(Q^{r-1}), H(B^{r-1}))$, and an empty block is of the form

$$B_\epsilon^r = \left(r, \emptyset, Q^{r-1}, H(B^{r-1})\right).$$

Note that a non-empty block may still contain an empty payset $PAY^r$, if no payment occurs in this round or if the leader is malicious. However, a non-empty block implies that the identity of $\ell^r$, his credential $\sigma_{\ell^r}^{r,1}$ and $SIG_{\ell^r}(Q^{r-1})$ have all been timely revealed. The protocol guarantees that, if the leader is honest, then the block will be non-empty with overwhelming probability.

- Seed $Q^r$.

If $B^r$ is non-empty, then $\quad Q^r \triangleq H(SIG_{\ell^r}(Q^{r-1}), r), \quad$ otherwise $\quad Q^r \triangleq H(Q^{r-1}, r).$

**Parameters**

- *Relationships among various parameters.*

    - The verifiers and potential leaders of round r are selected from the users in $PK^{r-k}$, where $k$ is chosen so that the Adversary cannot predict $Q^{r-1}$ back at round $r - k - 1$ with probability better than $F$: otherwise, he will be able to introduce malicious users for round $r - k$, all of which will be potential leaders/verifiers in round $r$, succeeding in having a malicious leader or a malicious majority in $SV^{r,s}$ for some steps $s$ desired by him.

    - For Step 1 of each round $r$, $n_1$ is chosen so that with overwhelming probability, $SV^{r,1} \neq \emptyset$.

- *Example choices of important parameters.*

    - The outputs of H are 256-bit long.

    - $h = 80\%$, $n_1 = 35$.

    - $\Lambda = 1$ minute and $\lambda = 15$ seconds.

- *Initialization of the protocol.*
    The protocol starts at time 0 with $r = 0$. Since there does not exist "$B^{-1}$" or "$CERT^{-1}$", syntactically $B^{-1}$ is a public parameter with its third component specifying $Q^{-1}$, and all users know $B^{-1}$ at time 0.

# $_5Algorand'_1$

In this section, we construct a version of *Algorand'* working under the following assumption.

HONEST MAJORITY OF USERS ASSUMPTION: *More than 2/3 of the users in each $PK^r$ are honest.*

In Section 8, we show how to replace the above assumption with the desired Honest Majority of Money assumption.

### 5.1 Additional Notations and Parameters

**Notations**

- $m \in \mathbb{Z}^+$: the maximum number of steps in the binary BA protocol, a multiple of 3.
- $L^r \le m/3$: a random variable representing the number of Bernoulli trials needed to see a 1, when each trial is 1 with probability $\frac{p_h}{2}$ and there are at most $m/3$ trials. If all trials fail then $L^r \triangleq m/3$. $L^r$ will be used to upper-bound the time needed to generate block $B^r$.
- $t_H = \frac{2n}{3} + 1$: the number of signatures needed in the ending conditions of the protocol.
- $CERT^r$: the certificate for $B^r$. It is a set of $t_H$ signatures of $H(B^r)$ from proper verifiers in round $r$.

Parameters

- *Relationships among various parameters.*

  - For each step $s > 1$ of round $r$, $n$ is chosen so that, with overwhelming probability,

  $$|HSV^{r,s}| > 2|MSV^{r,s}| \quad \text{and} \quad |HSV^{r,s}| + 4|MSV^{r,s}| < 2n.$$

  The closer to 1 the value of $h$ is, the smaller $n$ needs to be. In particular, we use (variants of) Chernoff bounds to ensure the desired conditions hold with overwhelming probability.
  - $m$ is chosen such that $L^r < m/3$ with overwhelming probability.

- *Example choices of important parameters.*

  - $F = 10^{-12}$.

  - $n \approx 1500$, $k = 40$ and $m = 180$.

### 5.2 Implementing Ephemeral Keys in $Algorand'_1$

As already mentioned, we wish that a verifier $i \in SV^{r,s}$ digitally signs his message $m_i^{r,s}$ of step $s$ in round $r$, relative to an ephemeral public key $pk_i^{r,s}$, using an ephemeral secrete key $sk_i^{r,s}$ that he promptly destroys after using. We thus need an efficient method to ensure that every user can verify that $pk_i^{r,s}$ is indeed the key to use to verify $i$'s signature of $m_i^{r,s}$. We do so by a (to the best of our knowledge) new use of identity-based signature schemes.

At a high level, in such a scheme, a central authority $A$ generates a public master key, *PMK*, and a corresponding secret master key, *SMK*. Given the identity, $U$, of a player $U$, $A$ computes, via *SMK*, a secret signature key $sk_U$ relative to the public key $U$, and privately gives $sk_U$ to $U$. (Indeed, in an identity-based digital signature scheme, the public key of a user $U$ is $U$ itself!) This way, if $A$ destroys *SMK* after computing the secret keys of the users he wants to enable to produce digital signatures, and does not keep any computed secret key, then $U$ is the only one who can digitally sign messages relative to the public key $U$. Thus, anyone who knows "$U$'s name", automatically knows $U$'s public key, and thus can verify $U$'s signatures (possibly using also the public master key *PMK*).

In our application, the authority $A$ is user $i$, and the set of all possible users $U$ coincides with the round-step pair $(r, s)$ in -say- $S = \{i\} \times \{r',..., r' + 10^6\} \times \{1,..., m + 3\}$, where $r'$ is a given round, and $m + 3$ the upperbound to the number of steps that may occur within a round. This way, $pk_i^{r,s} \triangleq (i, r, s),$ so that everyone seeing $i$'s signature $SIG_{pk_i^{r,s}}^{r,s}\left(m_i^{r,s}\right)$ can, with overwhelming probability, immediately verify it for the first million rounds $r$ following $r'$.

In other words, $i$ first generates *PMK* and *SMK*. Then, he publicizes that *PMK* is $i$'s master public key for any round $r \in [r', r' + 10^6]$, and uses *SMK* to privately produce and store the secret key $sk_i^{r,s}$ for each triple $(i, r, s) \in S$. This done, he destroys *SMK*. If he determines that he is not part of $SV^{r,s}$, then $i$ may leave $sk_i^{r,s}$ alone (as the protocol does not require that he aunthenticates any message in Step $s$ of round $r$). Else, $i$ first uses $sk_i^{r,s}$ to digitally sign his message $m_i^{r,s}$, and then destroys $sk_i^{r,s}$.

Note that $i$ can publicize his first public master key when he first enters the system. That is, the same payment $\wp$ that brings $i$ into the system (at a round $r'$ or at a round close to $r'$), may also specify, at $i$'s request, that $i$'s public master key for any round $r \in [r', r' + 10^6]$ is *PMK* -e.g., by including a pair of the form (*PMK*, [$r', r' + 10^6$]).

Also note that, since $m+3$ is the maximum number of steps in a round, assuming that a round takes a minute, the stash of ephemeral keys so produced will last $i$ for almost two years. At the same time, these ephemeral secret keys will not take $i$ too long to produce. Using an elliptic-curve based system with 32B keys, each secret key is computed in a few microseconds. Thus, if $m + 3 = 180$, then all 180M secret keys can be computed in less than one hour.

When the current round is getting close to $r' + 10^6$, to handle the next million rounds, $i$ generates a new (*PMK'*, *SMK'*) pair, and informs what his next stash of ephemeral keys is by -for example- having $SIG_i$(*PMK'*, [$r' + 10^6 + 1, r' + 2 \cdot 10^6 + 1$]) enter a new block, either as a separate "transaction" or as some additional information that is part of a payment. By so doing, $i$ informs everyone that he/she should use *PMK'* to verify $i$'s ephemeral signatures in the next million rounds. And so on.

(Note that, following this basic approach, other ways for implementing ephemeral keys without using identity-based signatures are certainly possible. For instance, via Merkle trees.[10])

[10]In this method, $i$ generates a public-secret key pair $\left(pk_i^{r,s}, sk_i^{r,s}\right)$ for each round-step pair $(r, s)$ in -say- $\{r',..., r' + 10^6\} \times \{1,..., m + 3\}$. Then he orders these public keys in a canonical way, stores the jth public key in the jth leaf of a Merkle tree, and computes the root value $R_i$, which he publicizes. When he wants to sign a message relative to key $pk_i^{r,s}$, $i$ not only provides the actual signature, but also the authenticating path for $pk_i^{r,s}$ relative to $R_i$. Notice that this authenticating path also proves that $pk_i^{r,s}$ is stored in the jth leaf. Form this idea, the rest of the details can be easily filled.

Other ways for implementing ephemeral keys are certainly possible -e.g., via Merkle trees.

## 5.3 Matching the Steps of $Algorand'_1$ with those of *BA\**

As we said, a round in $Algorand'_1$ has at most $m + 3$ steps.

STEP 1. In this step, each potential leader $i$ computes and propagates his candidate block $B_i^r$, together with his own credential, $\sigma_i^{r,1}$.

Recall that this credential *explicitly* identifies $i$. This is so, because $\sigma_i^{r,1} \triangleq SIG_i(r, 1, Q^{r-1})$.

Potential verifier $i$ also propagates, as part of his message, his proper digital signature of $H(B_i^r)$. Not dealing with a payment or a credential, this signature of $i$ is relative to his ephemeral public key $pk_i^{r,1}$: that is, he propagates $sig_{pk_i^{r,1}}\left(H(B_i^r)\right)$.

Given our conventions, rather than propagating $B_i^r$ and $sig_{pk_i^{r,1}}\left(H(B_i^r)\right),$ he could have propagated

$$SIG_{pk_i^{r,1}}\left(H(B_i^r)\right).$$ However, in our analysis we need to have explicit access to $sig_{pk_i^{r,1}}\left(H(B_i^r)\right).$

STEPS 2. In this step, each verifier $i$ sets $\ell_i^r$ to be the potential leader whose hashed credential is the smallest, and $B_i^r$ to be the block proposed by $\ell_i^r$. Since, for the sake of efficiency, we wish to agree on $H(B^r)$, rather than directly on $B^r$, $i$ propagates the message he would have propagated in the first step of $BA^*$ with initial value $v_i' = H(B_i^r)$. That is, he propagates $v_i'$, after ephemerally signing it, of course. (Namely, after signing it relative to the right ephemeral public key, which in this case is $pk_i^{r,2}$.) Of course too, $i$ also transmits his own credential.

Since the first step of $BA^*$ consists of the first step of the graded consensus protocol $GC$, Step 2 of $Algorand'$ corresponds to the first step of $GC$.

STEPS 3. In this step, each verifier $i \in SV^{r,2}$ executes the second step of $BA^*$. That is, he sends the same message he would have sent in the second step of $GC$. Again, $i$'s message is ephemerally signed and accompanied by $i$'s credential. (From now on, we shall omit saying that a verifier ephemerally signs his message and also propagates his credential.)

STEP 4. In this step, every verifier $i \in SV^{r,4}$ computes the output of $GC$, $(v_i, g_i)$, and ephemerally signs and sends the same message he would have sent in the third step of $BA^*$, that is, in the first step of $BBA^*$, with initial bit 0 if $g_i$ = 2, and 1 otherwise.

STEP $s$ = 5, ..., $m$ + 2. Such a step, if ever reached, corresponds to step $s$ - 1 of $BA^*$, and thus to step $s$ - 3 of $BBA^*$. Since our propagation model is sufficiently asynchronous, we must account for the possibility that, in the middle of such a step $s$, a verifier $i \in SV^{r,s}$ is reached by information proving him that block $B^r$ has already been chosen. In this case, $i$ stops his own execution of round $r$ of $Algorand'$, and starts executing his round-$(r + 1)$ instructions.

Accordingly, the instructions of a verifier $i \in SV^{r,s}$, in addition to the instructions corresponding to Step $s$-3 of $BBA^*$, include checking whether the execution of $BBA^*$ has halted in a prior Step $s'$. Since $BBA^*$ can only halt is a Coin-Fixed-to-0 Step or in a Coin-Fixed-to-1 step, the instructions distinguish whether

A (Ending Condition 0): $s'$ - 2 $\equiv$ 0 $mod$ 3, or

B (Ending Condition 1): $s'$ - 2 $\equiv$ 1 $mod$ 3.

In fact, in case A, the block $B^r$ is non-empty, and thus additional instructions are necessary to ensure that $i$ properly reconstructs $B^r$, together with its proper certificate $CERT^r$. In case B, the block $B^r$ is empty, and thus $i$ is instructed to set $B^r = B_\varepsilon^r = (r, \emptyset, Q^{r-1}, H(B^{r-1}))$, and to compute $CERT^r$.

If, during his execution of step $s$, $i$ does not see any evidence that the block $B^r$ has already been generated, then he sends the same message he would have sent in step $s$ - 3 of $BBA^*$.

STEP $m$ + 3. If, during step $m$ + 3, $i \in SV^{r,m+3}$ sees that the block $B^r$ was already generated in a prior step $s'$, then he proceeds just as explained above.

Else, rather then sending the same message he would have sent in step $m$ of $BBA^*$, $i$ is instructed, based on the information in his possession, to compute $B^r$ and its corresponding certificate $CERT^r$.

Recall, in fact, that we upperbound by $m$ + 3 the total number of steps of a round.

## 5.4 The Actual Protocol

Recall that, in each step $s$ of a round $r$, a verifier $i \in SV^{r,s}$ uses his long-term public-secret key pair to produce his credential, $\sigma_i^{r,s} \triangleq SIG_i(r, s, Q^{r-1})$, as well as $SIG_i(Q^{r-1})$ in case $s$ = 1. Verifier $i$ uses his ephemeral secret key $sk_i^{r,s}$ to sign his $(r, s)$-message $m_i^{r,s}$. For simplicity, when $r$ and $s$ are clear, we write $esig_i(x)$ rather than $sig_{pk_i^{r,s}}(x)$

to denote *i*'s proper ephemeral signature of a value *x* in step *s* of round *r*, and write *ESIG$_i$(x)* instead of $SIG_{pk_i^{r,s}}(x)$ to denote (*i*, *x*, *esig$_i$(x)*).

Step 1: Block Proposal

Instructions for every user $i \in PK^{r-k}$: User *i* starts his own Step 1 of round *r* as soon as he knows $B^{r-1}$.

- User *i* computes $Q^{r-1}$ from the third component of $B^{r-1}$ and checks whether $i \in SV^{r,1}$ or not.

- If $i \notin SV^{r,1}$, then *i* stops his own execution of Step 1 right away.

- If $i \in SV^{r,1}$, that is, if *i* is a potential leader, then he collects the round-*r* payments that have been propagated to him so far and computes a maximal payset $PAY_i^r$ from them. Next, he computes his "candidate block" $B_i^r = (r, PAY_i^r, SIG_i(Q^{r-1}), H(B^{r-1}))$. Finally, he computes the message $m_i^{r,1} = (B_i^r, esig_i(H(B_i^r)), \sigma_i^{r,1})$, destroys his ephemeral secret key $sk_i^{r,1}$, and then propagates $m_i^{r,1}$.

**Remark.** In practice, to shorten the global execution of Step 1, it is important that the (*r*, 1)-messages are *selectively propagated*. That is, for every user *i* in the system, for the first (*r*, 1)-message that he ever receives and successfully verifies,[11] player *i* propagates it as usual. For all the other (*r*, 1)-messages that player *i* receives and successfully verifies, he propagates it only if the hash value of the credential it contains is the *smallest* among the hash values of the credentials contained in all (*r*, 1)-messages he has received and successfully verified so far. Furthermore, as suggested by Georgios Vlachos, it is useful that each potential leader *i* also propagates his credential $\sigma_i^{r,1}$ separately: those small messages travel faster than blocks, ensure timely propagation of the $m_j^{r,1}$'s where the contained credentials have small hash values, while make those with large hash values disappear quickly.

[11]That is, all the signatures are correct and both the block and its hash are valid -although *i* does not check whether the included payset is maximal for its proposer or not.

Step 2: The First Step of the Graded Consensus Protocol *GC*

Instructions for every user $i \in PK^{r-k}$: User *i* starts his own Step 2 of round *r* as soon as he knows $B^{r-1}$.

- User *i* computes $Q^{r-1}$ from the third component of $B^{r-1}$ and checks whether $i \in SV^{r,2}$ or not.

- If $i \notin SV^{r,2}$ then *i* stops his own execution of Step 2 right away.

- If $i \in SV^{r,2}$, then after waiting an amount of time $t_2 \triangleq \lambda + \Lambda$, *i* acts as follows.

    1. He finds the user $\ell$ such that $H(\sigma_\ell^{r,1}) \leq H(\sigma_j^{r,1})$ for all credentials $\sigma_j^{r,1}$ that are part of the successfully verified (*r*, 1)-messages he has received so far.[12]

    2. If he has received from $\ell$ a valid message $m_\ell^{r,1} = (B_\ell^r, esig_\ell(H(B_\ell^r)), \sigma_\ell^{r,1})$,[13] then *i* sets $v_i' \triangleq H(B_\ell^r)$; otherwise *i* sets $v_i' \triangleq \perp$.

    3. *i* computes the message $m_i^{r,2} \triangleq (ESIG_i(v_i'), \sigma_i^{r,2})$,[14] destroys his ephemeral secret key $sk_i^{r,2}$, and then propagates $m_i^{r,2}$.

[12]Essentially, user *i* privately decides that the leader of round *r* is user $\ell$.

[13]Again, player $\ell$'s signatures and the hashes are all successfully verified, and $PAY_\ell^r$ in $B_\ell^r$ is a valid payset for round

$r$ -although $i$ does not check whether $PAY_\ell^r$ is maximal for $\ell$ or not.

[14]The message $m_i^{r,2}$ signals that player $i$ considers $v_i'$ to be the hash of the next block, or considers the next block to be empty.

Step 3: The Second Step of *GC*

Instructions for every user $i \in PK^{r-k}$: User $i$ starts his own Step 3 of round $r$ as soon as he knows $B^{r-1}$.

- User $i$ computes $Q^{r-1}$ from the third component of $B^{r-1}$ and checks whether $i \in SV^{r,3}$ or not.

- If $i \notin SV^{r,3}$, then $i$ stops his own execution of Step 3 right away.

- If $i \in SV^{r,3}$, then after waiting an amount of time $t_3 \triangleq t_2 + 2\lambda = 3\lambda + \Lambda,$ $i$ acts as follows.

  1. If there exists a value $v' \neq \bot$ such that, among all the valid messages $m_j^{r,2}$ he has received, more than 2/3 of them are of the form $(ESIG_j(v'), \sigma_j^{r,2}),$ without any contradiction,[15] then he computes the message $m_i^{r,3} \triangleq (ESIG_i(v'), \sigma_i^{r,3}).$ Otherwise, he computes $m_i^{r,3} \triangleq (ESIG_i(\bot), \sigma_i^{r,3}).$ [15]That is, he has not received two valid messages containing $ESIG_j(v')$ and a different $ESIG_j(v'')$ respectively, from a player $j$. Here and from here on, except in the Ending Conditions defined later, whenever an honest player wants messages of a given form, messages contradicting each other are never counted or considered valid.

  2. $i$ destroys his ephemeral secret key $sk_i^{r,3},$ and then propagates $m_i^{r,3}.$

Step 4: Output of *GC* and The First Step of *BBA\**

Instructions for every user $i \in PK^{r-k}$: User $i$ starts his own Step 4 of round $r$ as soon as he knows $B^{r-1}$.

- User $i$ computes $Q^{r-1}$ from the third component of $B^{r-1}$ and checks whether $i \in SV^{r,4}$ or not.

- If $i \notin SV^{r,4}$, then $i$ his stops his own execution of Step 4 right away.

- If $i \in SV^{r,4}$, then after waiting an amount of time $t_4 \triangleq t_3 + 2\lambda = 5\lambda + \Lambda,$ $i$ acts as follows.

  1. He computes $v_i$ and $g_i$, the output of GC, as follows.

     (a) If there exists a value $v' \neq \bot$ such that, among all the valid messages $m_j^{r,3}$ he has received, more than 2/3 of them are of the form $(ESIG_j(v'), \sigma_j^{r,3}),$ then he sets $v_i \triangleq v'$ and $g_i \triangleq 2.$

     (b) Otherwise, if there exists a value $v' \neq \bot$ such that, among all the valid messages $m_j^{r,3}$ he has received, more than 1/3 of them are of the form $(ESIG_j(v'), \sigma_j^{r,3}),$ then he sets $v_i \triangleq v'$ and $g_i \triangleq 1.$ [16]

     (c) Else, he sets $v_i \triangleq H(B_\epsilon^r)$ and $g_i \triangleq 0.$

  2. He computes $b_i$, the input of *BBA\**, as follows: $b_i \triangleq 0$ if $g_i = 2$, and $b_i \triangleq 1$ otherwise.

  3. He computes the message $m_i^{r,4} \triangleq (ESIG_i(b_i), ESIG_i(v_i), \sigma_i^{r,4}),$ destroys his ephemeral secret key $sk_i^{r,4},$ and then propagates $m_i^{r,4}.$

[16]It can be proved that the $v'$ in case (b), if exists, must be unique.

Step $s$, $5 \leq s \leq m + 2$, $s - 2 = 0 \bmod 3$: A Coin-Fixed-To-0 Step of *BBA**

Instructions for every user $i \in PK^{r-k}$: User $i$ starts his own Step $s$ of round $r$ as soon as he knows $B^{r-1}$.

• User $i$ computes $Q^{r-1}$ from the third component of $B^{r-1}$ and checks whether $i \in SV^{r,s}$.

• If $i \notin SV^{r,s}$, then $i$ stops his own execution of Step $s$ right away.

• If $i \in SV^{r,s}$ then he acts as follows.

  - He waits until an amount of time $t_s \triangleq t_{s-1} + 2\lambda = (2s - 3)\lambda + \Lambda$ has passed.

  - *Ending Condition 0:* If, during such waiting and at any point of time, there exists a string $v \neq \perp$ and a step $s'$ such that

    (a) $5 \leq s' \leq s$, $s' - 2 \equiv 0 \bmod 3$ -that is, Step $s'$ is a Coin-Fixed-To-0 step,

    (b) $i$ has received at least $t_H = \frac{2n}{3} + 1$ valid messages $m_j^{r,s'-1} = (ESIG_j(0),$ $ESIG_j(v), \sigma_j^{r,s'-1}),^{17}$ and

    (c) $i$ has received a valid message $m_j^{r,1} = (B_j^r, esig_j(H(B_j^r)), \sigma_j^{r,1})$ with $v = H(B_j^r)$, then, $i$ stops his own execution of Step $s$ (and in fact of round r) right away without propagating anything; sets $B^r = B_j^r;$

    and sets his own *CERT^r* to be the set of messages $m_j^{r,s'-1}$ of sub-step (b).[18]

  - *Ending Condition 1:* If, during such waiting and at any point of time, there exists a step $s'$ such that

    (a') $6 \leq s' \leq s$, $s' - 2 \equiv 1 \bmod 3$ -that is, Step $s'$ is a Coin-Fixed-To-1 step, and

    (b') $i$ has received at least $t_H$ valid messages $m_j^{r,s'-1} = (ESIG_j(1), ESIG_j(v_j), \sigma_j^{r,s'-1}),^{19}$

    then, $i$ stops his own execution of Step $s$ (and in fact of round r) right away without propagating anything;

    sets $B^r = B_\epsilon^r;$ and sets his own *CERT^r* to be the set of messages $m_j^{r,s'-1}$ of sub-step (b').

  - Otherwise, at the end of the wait, user $i$ does the following.

    He sets $v_i$ to be the majority vote of the $v_j$'s in the second components of all the valid $m_j^{r,s-1}$'s he has received. He computes $b_i$ as follows.

    If more than 2/3 of all the valid $m_j^{r,s-1}$'s he has received are of the form ($ESIG_j(0)$, $ESIG_j(v_j)$, $\sigma_j^{r,s-1}$) then he sets $b_i \triangleq 0$.

    Else, if more than 2/3 of all the valid $m_j^{r,s-1}$'s he has received are of the form ($ESIG_j(1)$, $ESIG_j(v_j)$, $\sigma_j^{r,s-1}$) then he sets $b_i \triangleq 1$.

    Else, he sets $b_i \triangleq 0$.

    He computes the message $m_i^{r,s} \triangleq (ESIG_i(b_i), ESIG_i(v_i), \sigma_i^{r,s}),$ destroys his ephemeral secret key $sk_i^{r,s},$ and then propagates $m_i^{r,s}.$

---

[17]Such a message from player $j$ is counted even if player $i$ has also received a message from $j$ signing for 1. Similar things for Ending Condition 1. As shown in the analysis, this is done to ensure that all honest users know $B^r$ within time $\lambda$ from each other.

[18]User $i$ now knows $B^r$ and his own round $r$ finishes. He still helps propagating messages as a generic user, but does not initiate any propagation as a $(r, s)$-verifier. In particular, he has helped propagating all messages in his $CERT^r$, which is enough for our protocol. Note that he should also set $b_i \triangleq 0$ for the binary BA protocol, but $b_i$ is not needed in this case anyway. Similar things for all future instructions.

[19]In this case, it does not matter what the $v_j$'s are.

Step $s$, $6 \leq s \leq m + 2$, $s - 2 \equiv 1$ mod 3: A Coin-Fixed-To-1 Step of *BBA\**

Instructions for every user $i \in PK^{r-k}$: User $i$ starts his own Step $s$ of round $r$ as soon as he knows $B^r$-1.

- User $i$ computes $Q^{r-1}$ from the third component of $B^{r-1}$ and checks whether $i \in SV^{r,s}$ or not.

- If $i \notin SV^{r,s}$, then $i$ stops his own execution of Step $s$ right away.

- If $i \in SV^{r,s}$ then he does the follows.

    - He waits until an amount of time $t_s \triangleq (2s - 3)\lambda + \Lambda$ has passed.

    - *Ending Condition 0:* The same instructions as Coin-Fixed-To-0 steps.

    - *Ending Condition 1*: The same instructions as Coin-Fixed-To-0 steps.

    - Otherwise, at the end of the wait, user $i$ does the following.

      He sets $v_i$ to be the majority vote of the $v_j$'s in the second components of all the valid $m_j^{r,s-1}$'s he has received. He computes $b_i$ as follows.

        If more than 2/3 of all the valid $m_j^{r,s-1}$'s he has received are of the form ($ESIG_j(0)$, $ESIG_j(v_j)$, $\sigma_j^{r,s-1}$), then he sets $b_i \triangleq 0$.

        Else, if more than 2/3 of all the valid $m_j^{r,s-1}$'s he has received are of the form ($ESIG_j(0)$, $ESIG_j(v_j)$, $\sigma_j^{r,s-1}$) then he sets $b_i \triangleq 1$.

        Else, he sets $b_i \triangleq 1$.

      He computes the message $m_i^{r,s} \triangleq (ESIG_i(b_i), ESIG_i(v_i), \sigma_i^{r,s})$, destroys his ephemeral secret key $sk_i^{r,s}$, and then propagates $m_i^{r,s}$.

Step $s$, $7 \leq s \leq m + 2$, $s - 2 \equiv 2$ mod 3: A Coin-Genuinely-Flipped Step of *BBA\**

Instructions for every user $i \in PK^{r-k}$: User $i$ starts his own Step $s$ of round $r$ as soon as he knows $B^r$-1.

- User $i$ computes $Q^{r-1}$ from the third component of $B^{r-1}$ and checks whether $i \in SV^{r,s}$ or not.

- If $i \notin SV^{r,s}$, then $i$ stops his own execution of Step $s$ right away.

- If $i \in SV^{r,s}$ then he does the follows.

    - He waits until an amount of time $t_s \triangleq (2s - 3)\lambda + \Lambda$ has passed.

- *Ending Condition 0:* The same instructions as Coin-Fixed-To-0 steps.

- *Ending Condition 1*: The same instructions as Coin-Fixed-To-0 steps.

- Otherwise, at the end of the wait, user *i* does the following.

He sets $v_i$ to be the majority vote of the $v_j$'s in the second components of all the valid $m_j^{r,s-1}$ 's he has received. He computes $b_i$ as follows.

If more than 2/3 of all the valid $m_j^{r,s-1}$ 's he has received are of the form ($ESIG_j(0)$, $ESIG_j(v_j)$, $\sigma_j^{r,s-1}$ ) then he sets $b_i \triangleq 0$.

Else, if more than 2/3 of all the valid $m_j^{r,s-1}$ 's he has received are of the form ($ESIG_j(1)$, $ESIG_j(v_j)$, $\sigma_j^{r,s-1}$ ) then he sets $b_i \triangleq 1$.

Else, let $SV_i^{r,s-1}$ be the set of ($r$, $s$ - 1)-verifiers from whom he has received a valid message $m_j^{r,s-1}$.

He sets $b_i \triangleq \text{lsb}(\min_{j \in SV_i^{r,s-1}} H(\sigma_j^{r,s-1}))$.

He computes the message $m_i^{r,s} \triangleq (ESIG_i(b_i), ESIG_i(v_i), \sigma_i^{r,s})$, destroys his ephemeral secret key $sk_i^{r,s}$, and then propagates $m_i^{r,s}$.

Step *m* + 3: The Last Step of *BBA** [20] [20]With overwhelming probability *BBA** has ended before this step, and we specify this step for completeness.

Instructions for every user $i \in PK^{r-k}$: User *i* starts his own Step *m* + 3 of round *r* as soon as he knows $B^{r-1}$.

• User *i* computes $Q^{r-1}$ from the third component of $B^{r-1}$ and checks whether $i \in SV^{r,m+3}$ or not.

• If $i \notin SV^{r,m+3}$, then *i* stops his own execution of Step *m* + 3 right away.

• If $i \in SV^{r,m+3}$ then he does the follows.

  - He waits until an amount of time $t_{m+3} \triangleq t_{m+2} + 2\lambda = (2m + 3)\lambda + \Lambda$ has passed.
  - *Ending Condition 0:* The same instructions as Coin-Fixed-To-0 steps.
  - *Ending Condition 1*: The same instructions as Coin-Fixed-To-0 steps.
  - Otherwise, at the end of the wait, user *i* does the following.

He sets $out_i \triangleq 1$ and $B^r \triangleq B_\epsilon^r$.

He computes the message $m_i^{r,m+3} = (ESIG_i(out_i), ESIG_i(H(B^r)), \sigma_i^{r,m+3})$, destroys his ephemeral secret key $sk_i^{r,m+3}$, and then propagates $m_i^{r,m+3}$ to certify $B^r$.[21]

[21]A certificate from Step *m* + 3 does not have to include $ESIG_i(out_i)$. We include it for uniformity only: the certificates now have a uniform format no matter in which step they are generated.

Reconstruction of the Round-*r* Block by Non-Verifiers

Instructions for every user *i* in the system: User *i* starts his own round *r* as soon as he knows $B^{r-1}$, and waits for block information as follows.

- If, during such waiting and at any point of time, there exists a string $v$ and a step $s'$ such that

(a) $5 \le s' \le m + 3$ with $s' - 2 \equiv 0 \mod 3$,

(b) $i$ has received at least $t_H$ valid messages $m_j^{r,s'-1} = (ESIG_j(0), ESIG_j(v), \sigma_j^{r,s'-1}),$ and

(c) $i$ has received a valid message $m_j^{r,1} = (B_j^r, esig_j(H(B_j^r)), \sigma_j^{r,1})$ with $v = H(B_j^r),$ then, $i$ stops his own execution of round $r$ right away; sets $B^r = B_j^r;$ and sets his own $CERT^r$ to be the set of messages $m_j^{r,s'-1}$ of sub-step (b).

- If, during such waiting and at any point of time, there exists a step $s'$ such that

(a') $6 \le s' \le m + 3$ with $s' - 2 \equiv 1 \mod 3$, and

(b') $i$ has received at least $t_H$ valid messages $m_j^{r,s'-1} = (ESIG_j(1), ESIG_j(v_j), \sigma_j^{r,s'-1}),$ then, $i$ stops his own execution of round $r$ right away; sets $B^r = B_\epsilon^r;$ and sets his own $CERT^r$ to be the set of messages $m_j^{r,s'-1}$ of sub-step (b').

- If, during such waiting and at any point of time, $i$ has received at least $t_H$ valid messages

$m_j^{r,m+3} = (ESIG_j(1), ESIG_j(H(B_\epsilon^r)), \sigma_j^{r,m+3}),$ then $i$ stops his own execution of round r right away, sets

$B^r = B_\epsilon^r,$ and sets his own $CERT^r$ to be the set of messages $m_j^{r,m+3}$ for 1 and $H(B_\epsilon^r).$

## 5.5 Analysis of $\boldsymbol{Algorand'_1}$

We introduce the following notations for each round $r \ge 0$, used in the analysis.

• Let $T^r$ be the time when the first honest user knows $B^{r-1}$.

• Let $I^{r+1}$ be the interval $[T^{r+1}, T^{r+1} + \lambda]$.

Note that $T^0 = 0$ by the initialization of the protocol. For each $s \ge 1$ and $i \in SV^{r,s}$, recall that $\alpha_i^{r,s}$ and $\beta_i^{r,s}$ are respectively the starting time and the ending time of player $i$'s step $s$. Moreover, recall that $t_s = (2s - 3)\lambda + A$ for each $2 \le s \le m + 3$. In addition, let $I^0 \triangleq \{0\}$ and $t_1 \triangleq 0.$

Finally, recall that $L^r \le m/3$ is a random variable representing the number of Bernoulli trials needed to see a 1, when each trial is 1 with probability $\frac{p_h}{2}$ and there are at most $m/3$ trials. If all trials fail then $L^r \triangleq m/3.$

In the analysis we ignore computation time, as it is in fact negligible relative to the time needed to propagate messages. In any case, by using slightly larger $\lambda$ and A, the computation time can be incorporated into the analysis directly. Most of the statements below hold "with overwhelming probability," and we may not repeatedly emphasize this fact in the analysis.

## 5.6 Main Theorem

**Theorem 5.1.** *The following properties hold with overwhelming probability for each round $r \ge 0$:*

*1. All honest users agree on the same block $B^r$.*

2. When the leader $\ell^r$ is honest, the block $B^r$ is generated by $\ell^r$, $B^r$ contains a maximal payset received by $\ell^r$ by time $\alpha_{\ell^r}^{r,1}$, $T^{r+1} \leq T^r + 8\lambda + \Lambda$ and all honest users know $B^r$ in the time interval $I^{r+1}$.

3. When the leader $\ell^r$ is malicious, $T^{r+1} \leq T^r + (6L^r + 10)\lambda + \Lambda$ and all honest users know $B^r$ in the time interval $I^{r+1}$.

4. $p_h = h^2(1 + h - h^2)$ for $L^r$, and the leader $\ell^r$ is honest with probability at least $p_h$.

Before proving our main theorem, let us make two remarks.

**Block-Generation and True Latency.** The time to generate block $B^r$ is defined to be $T^{r+1} - T^r$. That is, it is defined to be the difference between the first time some honest user learns $B^r$ and the first time some honest user learns $B^{r-1}$. When the round-$r$ leader is honest, Property 2 our main theorem guarantees that the *exact* time to generate $B^r$ is $8\lambda + A$ time, no matter what the precise value of $h > 2/3$ may be. When the leader is malicious, Property 3 implies that the *expected* time to generate $B^r$ is upperbounded by $(\frac{12}{p_h} + 10)\lambda + \Lambda,$ again no matter the precise value of $h$.[22] However, the expected time to generate $B^r$ depends on the precise value of $h$. Indeed, by Property 4, $p_h = h^2(1 + h - h^2)$ and the leader is honest with probability at least $p_h$, thus

$$\mathbb{E}[T^{r+1} - T^r] \leq h^2(1 + h - h^2) \cdot (8\lambda + \Lambda) + (1 - h^2(1 + h - h^2))((\frac{12}{h^2(1 + h - h^2)} + 10)\lambda + \Lambda).$$

[22]Indeed, $\mathbb{E}[T^{r+1} - T^r] \leq (6\mathbb{E}[L^r] + 10)\lambda + \Lambda = (6 \cdot \frac{2}{p_h} + 10)\lambda + \Lambda = (\frac{12}{p_h} + 10)\lambda + \Lambda.$

For instance, if $h = 80\%$, then $\mathbb{E}[T^{r+1} - T^r] \leq 12.7\lambda + \Lambda.$

*Proof of Theorem 5.1.* We prove Properties 1-3 by induction: assuming they hold for round $r - 1$ (without loss of generality, they automatically hold for "round -1" when $r = 0$), we prove them for round $r$.

Since $B^{r-1}$ is uniquely defined by the inductive hypothesis, the set $SV^{r,s}$ is uniquely defined for each step $s$ of round $r$. By the choice of $n_1$, $SV^{r,1} \neq 0$ with overwhelming probability. We now state the following two lemmas, proved in Sections 5.7 and 5.8. Throughout the induction and in the proofs of the two lemmas, the analysis for round 0 is almost the same as the inductive step, and we will highlight the differences when they occur.

**Lemma 5.2.** *[Completeness Lemma] Assuming Properties 1-3 hold for round $r$-1, when the leader $\ell^r$ is honest, with overwhelming probability,*

- *All honest users agree on the same block $B^r$, which is generated by $\ell^r$ and contains a maximal payset received by $\ell^r$ by time $\alpha_{\ell^r}^{r,1} \in I^r$; and*
- $T^{r+1} \leq T^r + 8\lambda + A$ *and all honest users know $B^r$ in the time interval $I^{r+1}$.*

**Lemma 5.3.** *[Soundness Lemma] Assuming Properties 1-3 hold for round $r - 1$, when the leader $\ell^r$ is malicious, with overwhelming probability, all honest users agree on the same block $B^r$, $T^{r+1} \leq T^r + (6L^r + 10)\lambda + A$ and all honest users know $B^r$ in the time interval $I^{r+1}$.*

Properties 1-3 hold by applying Lemmas 5.2 and 5.3 to $r = 0$ and to the inductive step. Finally, we restate Property 4 as the following lemma, proved in Section 5.9.

**Lemma 5.4.** *Given Properties 1-3 for each round before $r$, $p_h = h^2(1 + h - h^2)$ for $L^r$, and the leader $\ell^r$ is honest with probability at least $p_h$.*

Combining the above three lemmas together, Theorem 5.1 holds.

The lemma below states several important properties about round $r$ given the inductive hypothesis, and will be used in the proofs of the above three lemmas.

**Lemma 5.5.** *Assume Properties 1-3 hold for round $r - 1$. For each step $s \geq 1$ of round $r$ and each honest verifier $i \in HSV^{r,s}$, we have that*

*(a)* $\alpha_i^{r,s} \in I^r$;

*(b) if player $i$ has waited an amount of time $t_s$, then* $\beta_i^{r,s} \in [T^r + t_s, T^r + \lambda + t_s]$ *for $r > 0$ and* $\beta_i^{r,s} = t_s$ *for $r =$*

0; *and*

*(c) if player i has waited an amount of time $t_s$, then by time $\beta_i^{r,s}$, he has received all messages sent by all honest verifiers $j \in HSV^{r,s'}$ for all steps s' < s.*
*Moreover, for each step $s \geq 3$, we have that*
*(d) there do not exist two different players i, i' $\in SV^{r,s}$ and two different values v, v' of the same length, such that both players have waited an amount of time $t_s$, more than 2/3 of all the valid messages $m_j^{r,s-1}$ player i receives have signed for v, and more than 2/3 of all the valid messages $m_j^{r,s-1}$ player i' receives have signed for v'.*

*Proof.* Property (a) follows directly from the inductive hypothesis, as player *i* knows $B^{r-1}$ in the time interval $I^r$ and starts his own step *s* right away. Property (b) follows directly from (a): since player *i* has waited an amount of time $t_s$ before acting, $\beta_i^{r,s} = \alpha_i^{r,s} + t_s$. Note that $\alpha_i^{r,s} = 0$ for r = 0.

We now prove Property (c). If *s* = 2, then by Property (b), for all verifiers $j \in HSV^{r,1}$ we have

$$\beta_i^{r,s} = \alpha_i^{r,s} + t_s \geq T^r + t_s = T^r + \lambda + \Lambda \geq \beta_j^{r,1} + \Lambda.$$

Since each verifier $j \in HSV^{r,1}$ sends his message at time $\beta_j^{r,1}$ and the message reaches all honest users in at most $\Lambda$ time, by time $\beta_i^{r,s}$ player *i* has received the messages sent by all verifiers in $HSV^{r,1}$ as desired.

If *s* > 2, then $t_s = t_{s-1} + 2\lambda$. By Property (b), for all steps *s'* < *s* and all verifiers $j \in HSV^{r,s'}$,

$$\beta_i^{r,s} = \alpha_i^{r,s} + t_s \geq T^r + t_s = T^r + t_{s-1} + 2\lambda \geq T^r + t_{s'} + 2\lambda = T^r + \lambda + t_{s'} + \lambda \geq \beta_j^{r,s'} + \lambda.$$

Since each verifier $j \in HSV^{r,s'}$ sends his message at time $\beta_j^{r,s'}$ and the message reaches all honest users in at most $\lambda$ time, by time $\beta_i^{r,s}$ player *i* has received all messages sent by all honest verifiers in $HSV^{r,s'}$ for all *s'* < s. Thus Property (c) holds.

Finally, we prove Property (d). Note that the verifiers $j \in SV^{r,s-1}$ sign at most two things in Step *s* - 1 using their ephemeral secret keys: a value $v_j$ of the same length as the output of the hash function, and also a bit $b_j \in \{0,1\}$ if *s* - 1 $\geq$ 4. That is why in the statement of the lemma we require that *v* and *v'* have the same length: many verifiers may have signed both a hash value *v* and a bit *b*, thus both pass the 2/3 threshold.

Assume for the sake of contradiction that there exist the desired verifiers *i, i'* and values *v, v'*. Note that some malicious verifiers in $MSV^{r,s-1}$ may have signed both *v* and *v'*, but each honest verifier in $HSV^{r,s-1}$ has signed at most one of them. By Property (c), both *i* and *i'* have received all messages sent by all honest verifiers in $HSV^{r,s-1}$.

Let $HSV^{r,s-1}(v)$ be the set of honest (*r*, *s* - 1)-verifiers who have signed *v*, $MSV_i^{r,s-1}$ the set of malicious (*r*, *s* - 1)-verifiers from whom *i* has received a valid message, and $MSV_i^{r,s-1}(v)$ the subset of $MSV_i^{r,s-1}$ from whom *i* has received a valid message signing *v*. By the requirements for *i* and *v*, we have

$$ratio \triangleq \frac{|HSV^{r,s-1}(v)| + |MSV_i^{r,s-1}(v)|}{|HSV^{r,s-1}| + |MSV_i^{r,s-1}|} > \frac{2}{3}. \qquad (1)$$

We first show

$$|MSV_i^{r,s-1}(v)| \leq |HSV^{r,s-1}(v)|. \qquad (2)$$

Assuming otherwise, by the relationships among the parameters, with overwhelming probability $|HSV^{r,s-1}| > 2|MSV^{r,s-1}| \geq 2|MSV_i^{r,s-1}|$, thus

$$ratio < \frac{|HSV^{r,s-1}(v)| + |MSV_i^{r,s-1}(v)|}{3|MSV_i^{r,s-1}|} < \frac{2|MSV_i^{r,s-1}(v)|}{3|MSV_i^{r,s-1}|} \leq \frac{2}{3},$$

contradicting Inequality 1.

Next, by Inequality 1 we have

$$2|HSV^{r,s-1}| + 2|MSV_i^{r,s-1}| < 3|HSV^{r,s-1}(v)| + 3|MSV_i^{r,s-1}(v)|$$
$$\leq \quad 3|HSV^{r,s-1}(v)| + 2|MSV_i^{r,s-1}| + |MSV_i^{r,s-1}(v)|.$$

Combining with Inequality 2,

$$2|HSV^{r,s-1}| < 3|HSV^{r,s-1}(v)| + |MSV_i^{r,s-1}(v)| \leq 4|HSV^{r,s-1}(v)|,$$

which implies

$$|HSV^{r,s-1}(v)| > \frac{1}{2}|HSV^{r,s-1}|.$$

Similarly, by the requirements for *i'* and *v'*, we have

$$|HSV^{r,s-1}(v')| > \frac{1}{2}|HSV^{r,s-1}|.$$

Since an honest verifier $j \in HSV^{r,s-1}$ destroys his ephemeral secret key $sk_j^{r,s-1}$ before propagating his message, the Adversary cannot forge j's signature for a value that *j* did not sign, after learning that *j* is a verifier. Thus, the two inequalities above imply $|HSV^{r,s-1}| \geq |HSV^{r,s-1}(v)| + |HSV^{r,s-1}(v')| > |HSV^{r,s-1}|$, a contradiction. Accordingly, the desired *i, i, v, v'* do not exist, and Property (d) holds.

**5.7 The Completeness Lemma**

**Lemma 5.2.** [Completeness Lemma, restated] *Assuming Properties 1-3 hold for round r - 1, when the leader $\ell^r$ is honest, with overwhelming probability,*

- *All honest users agree on the same block B<sup>r</sup>, which is generated by $\ell^r$ and contains a maximal payset received by $\ell^r$ by time* $\alpha_{\ell^r}^{r,1} \in I^r$; *and*
- *$T^{r+1} \leq T^r + 8\lambda + \Lambda$ and all honest users know B<sup>r</sup> in the time interval I<sup>r+1</sup>.*

*Proof.* By the inductive hypothesis and Lemma 5.5, for each step *s* and verifier $i \in HSV^{r,s}$, $\alpha_i^{r,s} \in I^r$. Below we analyze the protocol step by step.

**Step 1.** By definition, every honest verifier $i \in HSV^{r,1}$ propagates the desired message $m_i^{r,1}$ at time $\beta_i^{r,1} = \alpha_i^{r,1}$, where $m_i^{r,1} = (B_i^r, esig_i(H(B_i^r)), \sigma_i^{r,1})$, $B_i^r =$

$(r, PAY_i^r, SIG_i(Q^{r-1}), H(B^{r-1}))$, and $PAY_i^r$ is a maximal payset among all payments that $i$ has seen by time $\alpha_i^{r,1}$.

Step 2. Arbitrarily fix an honest verifier $i \in HSV^{r,2}$. By Lemma 5.5, when player $i$ is done waiting at time $\beta_i^{r,2} = \alpha_i^{r,2} + t_2$, he has received all messages sent by verifiers in $HSV^{r,1}$, including $m_{\ell^r}^{r,1}$. By the definition of $\ell^r$, there does not exist another player in $PK^{r-k}$ whose credential's hash value is smaller than $H(\sigma_{\ell^r}^{r,1})$. Of course, the Adversary can corrupt $\ell^r$ after seeing that $H(\sigma_{\ell^r}^{r,1})$ is very small, but by that time player $\ell^r$ has destroyed his ephemeral key and the message $m_{\ell^r}^{r,1}$ has been propagated. Thus verifier $i$ sets his own leader to be player $\ell^r$. Accordingly, at time $\beta_i^{r,2}$, verifier $i$ propagates $m_i^{r,2} = (ESIG_i(v_i'), \sigma_i^{r,2})$, where $v_i' = H(B_{\ell^r}^r)$. When $r = 0$, the only difference is that $\beta_i^{r,2} = t_2$ rather than being in a range. Similar things can be said for future steps and we will not emphasize them again.

Step 3. Arbitrarily fix an honest verifier $i \in HSV^{r,3}$. By Lemma 5.5, when player $i$ is done waiting at time $\beta_i^{r,3} = \alpha_i^{r,3} + t_3$, he has received all messages sent by verifiers in $HSV^{r,2}$.

By the relationships among the parameters, with overwhelming probability $|HSV^{r,2}| > 2|MSV^{r,2}|$. Moreover, no honest verifier would sign contradicting messages, and the Adversary cannot forge a signature of an honest verifier after the latter has destroyed his corresponding ephemeral secret key. Thus more than 2/3 of all the valid $(r, 2)$-messages $i$ has received are from honest verifiers and of the form $m_j^{r,2} = (ESIG_j(H(B_{\ell^r}^r)), \sigma_j^{r,2})$, with no contradiction.

Accordingly, at time $\beta_i^{r,3}$ player $i$ propagates $m_i^{r,3} = (ESIG_i(v'), \sigma_i^{r,3})$, where $v' = H(B_{\ell^r}^r)$.

Step 4. Arbitrarily fix an honest verifier $i \in HSV^{r,4}$. By Lemma 5.5, player $i$ has received all messages sent by verifiers in $HSV^{r,3}$ when he is done waiting at time $\beta_i^{r,4} = \alpha_i^{r,4} + t_4$. Similar to Step 3, more than 2/3 of all the valid $(r, 3)$-messages $i$ has received are from honest verifiers and of the form $m_j^{r,3} = (ESIG_j(H(B_{\ell^r}^r)), \sigma_j^{r,3})$.

Accordingly, player $i$ sets $v_i = H(B_{\ell^r}^r)$, $g_i = 2$ and $b_i = 0$. At time $\beta_i^{r,4} = \alpha_i^{r,4} + t_4$ he propagates $m_i^{r,4} = (ESIG_i(0), ESIG_i(H(B_{\ell^r}^r)), \sigma_i^{r,4})$.

Step 5. Arbitrarily fix an honest verifier $i \in HSV^{r,5}$. By Lemma 5.5, player $i$ would have received all messages sent by the verifiers in $HSV^{r,4}$ if he has waited till time $\alpha_i^{r,5} + t_5$. Note that $|HSV^{r,4}| \geq t_H$.[23] Also note that all verifiers in $HSV^{r,4}$ have signed for $H(B_{\ell^r}^r)$.

As $|MSV^{r,4}| < t_H$, there does not exist any $v' \neq H(B_{\ell^r}^r)$ that could have been signed by $t_H$ verifiers in $SV^{r,4}$ (who would necessarily be malicious), so player $i$ does not stop before he has received $t_H$ valid messages $m_j^{r,4} = (ESIG_j(0), ESIG_j(H(B_{\ell^r}^r)), \sigma_j^{r,4})$. Let $T$ be the time when the latter event happens. Some of those messages may be from malicious players, but because $|MSV^{r,4}| < t_H$, at least one of them is from an honest verifier in $HSV^{r,4}$ and is sent after time $T^r + t_4$. Accordingly, $T \geq T^r + t_4 > T^r + \lambda + \Lambda \geq \beta_{\ell^r}^{r,1} + \Lambda$, and by time $T$ player $i$ has also received the message $m_{\ell^r}^{r,1}$. By the construction of the protocol, player $i$ stops at time $\beta_i^{r,5} = T$ without propagating anything; sets $B^r = B_{\ell^r}^r$; and sets his own $CERT^r$ to be the set of $(r, 4)$-messages for 0 and $H(B_{\ell^r}^r)$ that he has received.

[23]Strictly speaking, this happens with very high probability but not necessarily overwhelming. However, this probability slightly effects the running time of the protocol, but does not affect its correctness. When $h = 80\%$, then $|HSV^{r,4}| \geq t_H$ with probability $1 - 10^{-8}$. If this event does not occur, then the protocol will continue for another 3 steps. As the probability that this does not occur in two steps is negligible, the protocol will finish at Step 8. In expectation, then, the number of steps needed is almost 5.

**Step** $s > 5$. Similarly, for any step $s > 5$ and any verifier $i \in HSV^{r,s}$, player $i$ would have received all messages sent by the verifiers in $HSV^{r,4}$ if he has waited till time $\alpha_i^{r,s} + t_s$. By the same analysis, player $i$ stops without propagating anything, setting $B^r = B_{\ell^r}^r$ (and setting his own $CERT^r$ properly). Of course, the malicious verifiers may not stop and may propagate arbitrary messages, but because $|MSV^{r,s}| < t_H$, by induction no other $v'$ could be signed by $t_H$ verifiers in any step $4 \leq s' < s$, thus the honest verifiers only stop because they have received $t_H$ valid $(r,4)$-messages for 0 and $H(B_{\ell^r}^r)$.

**Reconstruction of the Round-r Block.** The analysis of Step 5 applies to a generic honest user $i$ almost without any change. Indeed, player $i$ starts his own round $r$ in the interval $I^r$ and will only stop at a time $T$ when he has received $t_H$ valid $(r, 4)$-messages for $H(B_{\ell^r}^r)$. Again because at least one of those messages are from honest verifiers and are sent after time $T^r + t_4$, player $i$ has also received $m_{\ell^r}^{r,1}$ by time $T$. Thus he sets $B^r = B_{\ell^r}^r$ with the proper $CERT^r$.

It only remains to show that all honest users finish their round $r$ within the time interval $I^{r+1}$. By the analysis of Step 5, every honest verifier $i \in HSV^{r,5}$ knows $B^r$ on or before $\alpha_i^{r,5} + t_5 \leq T^r + \lambda + t_5 = T^r + 8\lambda + \Lambda$. Since $T^{r+1}$ is the time when the first honest user $i^r$ knows $B^r$, we have

$$T^{r+1} \leq T^r + 8\lambda + \Lambda$$

as desired. Moreover, when player $i^r$ knows $B^r$, he has already helped propagating the messages in his $CERT^r$. Note that all those messages will be received by all honest users within time $\lambda$, even if player $i^r$ were the first player to propagate them. Moreover, following the analysis above we have $T^{r+1} \geq T^r + t_4 \geq \beta_{\ell^r}^{r,1} + \Lambda$, thus all honest users have received $m_{\ell^r}^{r,1}$ by time $T^{r+1} + \lambda$. Accordingly, all honest users know $B^r$ in the time interval $I^{r+1} = [T^{r+1}, T^{r+1} + \lambda]$.

Finally, for $r = 0$ we actually have $T^1 \leq t_4 + \lambda = 6\lambda + \Lambda$. Combining everything together, Lemma 5.2 holds.

## 5.8 The Soundness Lemma

**Lemma 5.3.** [Soundness Lemma, restated] *Assuming Properties 1-3 hold for round $r$-1, when the leader $\ell^r$ is malicious, with overwhelming probability, all honest users agree on the same block $B^r$, $T^{r+1} \leq T^r + (6L^r + 10)\lambda + A$ and all honest users know $B^r$ in the time interval $I^{r+1}$.*

*Proof.* We consider the two parts of the protocol, GC and *BBA\**, separately.

**GC.** By the inductive hypothesis and by Lemma 5.5, for any step $s \in \{2, 3, 4\}$ and any honest verifier $i \in HSV^{r,s}$, when player $i$ acts at time $\beta_i^{r,s} = \alpha_i^{r,s} + t_s$, he has received all messages sent by all the honest verifiers in steps $s' < s$. We distinguish two possible cases for step 4.

Case 1. *No verifier* $i \in HSV^{r,4}$ *sets* $g_i = 2$.
In this case, by definition $b_i = 1$ for all verifiers $i \in HSV^{r,4}$. That is, they start with an agreement on 1 in the binary BA protocol. They may not have an agreement on their $v_i$'s, but this does not matter as we will see in the binary BA.
Case 2. *There exists a verifier* $\hat{i} \in HSV^{r,4}$ *such that* $g_{\hat{i}} = 2$.
In this case, we show that

(1) $g_i \geq 1$ for all $i \in HSV^{r,4}$,

(2) there exists a value $v'$ such that $v_i = v'$ for all $i \in HSV^{r,4}$, and

(3) there exists a valid message $m_\ell^{r,1}$ from some verifier $\ell \in SV^{r,1}$ such that $v' = H(B_\ell^r)$.

Indeed, since player $\hat{i}$ is honest and sets $g_i = 2$, more than 2/3 of all the valid messages $m_j^{r,3}$ he has received are for the same value $v' \neq \perp$, and he has set $v_i = v'$. By Property (d) in Lemma 5.5, for any other honest $(r, 4)$-verifier $i$, it cannot be that more than 2/3 of all the valid messages $m_j^{r,3}$ that $i'$ has received are for the same value $v'' \neq v'$. Accordingly, if $i$ sets $g_i = 2$, it must be that $i$ has seen > 2/3 majority for $v'$ as well and set $v_i = v'$, as desired.

Now consider an arbitrary verifier $i \in HSV^{r,4}$ with $g_i < 2$. Similar to the analysis of Property (d) in Lemma 5.5, because player $\hat{i}$ has seen > 2/3 majority for $v'$, more than $\frac{1}{2}\left|HSV^{r,3}\right|$ honest $(r, 3)$-verifiers have signed $v'$. Because $i$ has received all messages by honest $(r, 3)$-verifiers by time $\beta_i^{r,4} = \alpha_i^{r,4} + t_4$, he has in particular received more than $\frac{1}{2}\left|HSV^{r,3}\right|$ messages from them for $v'$. Because $|HSV^{r,3}| > 2|MSV^{r,3}|$, $i$ has seen > 1/3 majority for $v'$. Accordingly, player $i$ sets $g_i = 1$, and Property (1) holds.

Does player $i$ necessarily set $v_i = v'$? Assume there exists a different value $v'' \neq \perp$ such that player $i$ has also seen > 1/3 majority for $v''$. Some of those messages may be from malicious verifiers, but at least one of them is from some honest verifier $j \in HSV^{r,3}$: indeed, because $|HSV^{r,3}| > 2|MSV^{r,3}|$ and $i$ has received all messages from $HSV^{r,3}$, the set of malicious verifiers from whom $i$ has received a valid $(r, 3)$-message counts for < 1/3 of all the valid messages he has received.

By definition, player $j$ must have seen > 2/3 majority for $v''$ among all the valid $(r, 2)$-messages he has received. However, we already have that some other honest $(r, 3)$-verifiers have seen > 2/3 majority for $v'$ (because they signed $v'$). By Property (d) of Lemma 5.5, this cannot happen and such a value $v''$ does not exist. Thus player $i$ must have set $v_i = v'$ as desired, and Property (2) holds.

Finally, given that some honest $(r, 3)$-verifiers have seen > 2/3 majority for $v'$, some (actually, more than half of) honest $(r, 2)$-verifiers have signed for $v'$ and propagated their messages. By the construction of the protocol, those honest $(r, 2)$-verifiers must have received a valid message $m_\ell^{r,1}$ from some player $\ell \in SV^{r,1}$ with $v' = H(B_\ell^r)$, thus Property (3) holds.

*BBA\**. We again distinguish two cases.

Case 1. *All verifiers* $i \in HSV^{r,4}$ *have* $b_i = 1$.

This happens following Case 1 of GC. As $|MSV^{r,4}| < t_H$, in this case no verifier in $SV^{r,5}$ could collect or generate $t_H$ valid $(r, 4)$-messages for bit 0. Thus, no honest verifier in $HSV^{r,5}$ would stop because he knows a non-empty block $B^r$. Moreover, although there are at least $t_H$ valid $(r, 4)$-messages for bit 1, $s' = 5$ does not satisfy $s' - 2 \equiv 1 \bmod 3$, thus no honest verifier in $HSV^{r,5}$ would stop because he knows $B^r = B_\epsilon^r$.

Instead, every verifier $i \in HSV^{r,5}$ acts at time $\beta_i^{r,5} = \alpha_i^{r,5} + t_5$, by when he has received all messages sent by $HSV^{r,4}$ following Lemma 5.5. Thus player $i$ has seen > 2/3 majority for 1 and sets $b_i = 1$.

In Step 6 which is a Coin-Fixed-To-1 step, although $s' = 5$ satisfies $s'-2 \equiv 0 \bmod 3$, there do not exist $t_H$ valid $(r, 4)$-messages for bit 0, thus no verifier in $HSV^{r,6}$ would stop because he knows a non-empty block $B^r$. However, with $s' = 6$, $s' - 2 \equiv 1 \bmod 3$ and there do exist $|HSV^{r,5}| \geq t_H$ valid $(r, 5)$-messages for bit 1 from $HSV^{r,5}$. For every verifier $i \in HSV^{r,6}$, following Lemma 5.5, on or before time $\alpha_i^{r,6} + t_6$ player $i$ has received all messages from $HSV^{r,5}$, thus $i$ stops without propagating anything and sets $B^r = B_\epsilon^r$. His $CERT^r$ is the set of $t_H$ valid $(r, 5)$-messages $m_j^{r,5} = (ESIG_j(1), ESIG_j(v_j), \sigma_j^{r,5})$ received by him when he stops.

Next, let player $i$ be either an honest verifier in a step $s > 6$ or a generic honest user (i.e., non-verifier). Similar to the proof of Lemma 5.2, player $i$ sets $B^r = B^r_\epsilon$ and sets his own $CERT^r$ to be the set of $t_H$ valid $(r,5)$-messages $m^{r,5}_j = (ESIG_j(1), ESIG_j(v_j), \sigma^{r,5}_j)$ he has received.

Finally, similar to Lemma 5.2,

$$T^{r+1} \leq \min_{i \in HSV^{r,6}} \alpha^{r,6}_i + t_6 \leq T^r + \lambda + t_6 = T^r + 10\lambda + \Lambda,$$

and all honest users know $B^r$ in the time interval $I^{r+1}$, because the first honest user $i$ who knows $B^r$ has helped propagating the $(r, 5)$-messages in his $CERT^r$.

Case 2. *There exists a verifier $\hat{i} \in HSV^{r,4}$ with $b_{\hat{i}} = 0$.*

This happens following Case 2 of GC and is the more complex case. By the analysis of GC, in this case there exists a valid message $m^{r,1}_\ell$ such that $v_i = H(B^r_\ell)$ for all $i \in HSV^{r,4}$. Note that the verifiers in $HSV^{r,4}$ may not have an agreement on their $b_i$'s.

For any step $s \in \{5,...,m+3\}$ and verifier $i \in HSV^{r,S}$, by Lemma 5.5 player $i$ would have received all messages sent by all honest verifiers in $HSV^{r,4} \cup ... \cup HSVT^{r,s-1}$ if he has waited for time $t_s$.

We now consider the following event $E$: *there exists a step $s^* \geq 5$ such that, for the first time in the binary BA, some player $i^* \in SV^{r,s^*}$ (whether malicious or honest) should stop without propagating anything.* We use "should stop" to emphasize the fact that, if player $i^*$ is malicious, then he may pretend that he should not stop according to the protocol and propagate messages of the Adversary's choice.

Moreover, by the construction of the protocol, either

*(E.a)* $i^*$ is able to collect or generate at least $t_H$ valid messages $m^{r,s'-1}_j = (ESIG_j(0), ESIG_j(v), \sigma^{r,s'-1}_j)$ for the same $v$ and $s'$, with $5 \leq s' \leq s^*$ and $s' - 2 \equiv 0 \mod 3$; or

*(E.b)* $i^*$ is able to collect or generate at least $t_H$ valid messages $m^{r,s'-1}_j = (ESIG_j(1), ESIG_j(v_j), \sigma^{r,s'-1}_j)$ for the same $s'$, with $6 \leq s' \leq s^*$ and $s' - 2 \equiv 1 \mod 3$.

Because the honest $(r, s' - 1)$-messages are received by all honest $(r,s')$-verifiers before they are done waiting in Step $s'$, and because the Adversary receives everything no later than the honest users, without loss of generality we have $s' = s^*$ and player $i^*$ is malicious. Note that we did not require the value $v$ in E.a to be the hash of a valid block: as it will become clear in the analysis, $v = H(B^r_\ell)$ in this sub-event. Below we first analyze Case 2 following event E, and then show that the value of $s^*$ is essentially distributed accordingly to $L^r$ (thus event E happens before Step $m + 3$ with overwhelming probability given the relationships for parameters). To begin with, for any step $5 \leq s < s^*$, every honest verifier $i \in HSV^{r,s}$ has waited time $t_s$ and set $v_i$ to be the majority vote of the valid $(r, s - 1)$-messages he has received. Since player $i$ has received all honest $(r, s - 1)$-messages following Lemma 5.5, since all honest verifiers in $HSV^{r,4}$ have signed $H(B^r_\ell)$ following Case 2 of GC, and since $|HSV^{r,s-1}| > 2\text{-}|MSV^{r,s-1}|$ for each $s$, by induction we have that player $i$ has set

$$v_i = H(B^r_\ell).$$

The same holds for every honest verifier $i \in HSV^{r,s^*}$ who does not stop without propagating anything. Now we consider Step $s^*$ and distinguish four subcases.

Case 2.1.a. *Event E.a happens and there exists an honest verifier $i' \in HSV^{r,s^*}$ who should also stop without propagating anything.*

In this case, we have $s^* - 2 \equiv 0 \mod 3$ and Step $s^*$ is a Coin-Fixed-To-0 step. By definition, player $i'$ has received at least $t_H$ valid $(r, s^* - 1)$-messages of the form $(ESIG_j(0), ESIG_j(v), \sigma_j^{r,s^*-1})$. Since all verifiers in $HSV^{r,s^*-1}$

have signed $H(B_\ell^r)$ and $|MSV^{r,s^*-1}| < t_H$, we have $v = H(B_\ell^r)$.

Since at least $t_H - |MSV^{r,s^*-1}| \geq 1$ of the $(r, s^* - 1)$-messages received by $i'$ for 0 and $v$ are sent by verifiers in $HSV^{r,s^*-1}$

after time $T^r + t_{s^*-1} \geq T^r + t_4 \geq T^r + \lambda + \Lambda \geq \beta_\ell^{r,1} + \Lambda$, player $i'$ has received $m_\ell^{r,1}$ by the time he receives those $(r, s^* - 1)$-messages. Thus player $i'$ stops without propagating anything; sets $B^r = B_\ell^r$; and sets his own $CERT^r$ to be the set of valid $(r, s^* - 1)$-messages for 0 and $v$ that he has received.

Next, we show that, any other verifier $i \in HSV^{r,s^*}$ has either stopped with $B^r = B_\ell^r$, or has set $b_i = 0$ and propagated

$(ESIG_i(0), ESIG_i(H(B_\ell^r)), \sigma_i^{r,s})$. Indeed, because Step $s^*$ is the first time some verifier should stop without propagating anything, there does not exist a step $s' < s^*$ with $s' - 2 \equiv 1 \bmod 3$ such that $t_H$ $(r, s' - 1)$-verifiers have signed 1. Accordingly, no verifier in $HSV^{r,s^*}$ stops with $B^r = B_\epsilon^r$.

Moreover, as all honest verifiers in steps $\{4, 5,..., s^* - 1\}$ have signed $H(B_\ell^r)$, there does not exist a step $s' \leq s^*$

with $s' - 2 \equiv 0 \bmod 3$ such that $t_H$ $(r, s' - 1)$-verifiers have signed some $v'' \neq H(B_\ell^r)$ -indeed, $|MSV^{r,s'-1}| < t_H$.

Accordingly, no verifier in $HSV^{r,s^*}$ stops with $B^r \neq B_\epsilon^r$ and $B^r \neq B_\ell^r$. That is, if a player $i \in HSV^{r,s^*}$ has stopped without propagating anything, he must have set $B^r = B_\ell^r$.

If a player $i \in HSV^{r,s^*}$ has waited time $t_{s^*}$ and propagated a message at time $\beta_i^{r,s^*} = \alpha_i^{r,s^*} + t_{s^*}$, he has received all messages from $HSV^{r,s^*-1}$, including at least $t_H - |MSV^{r,s^*-1}|$ of them for 0 and $v$. If $i$ has seen > 2/3 majority for 1, then he has seen more than $2(t_H - |MSV^{r,s^*-1}|)$ valid $(r, s^* - 1)$-messages for 1, with more than $2t_H - 3|MSV^{r,s^*-1}|$ of them from honest $(r, s^* - 1)$-verifiers. However, this implies $|HSV^{r,s^*-1}| \geq t_H - |MSV^{r,s^*-1}| + 2t_H - 3|MSV^{r,s^*-1}| > 2n - 4|MSV^{r,s^*-1}|$, contradicting the fact that

$$|HSV^{r,s^*-1}| + 4|MSV^{r,s^*-1}| < 2n,$$

which comes from the relationships for the parameters. Accordingly, $i$ does not see > 2/3 majority for 1, and he sets $b_i = 0$ because Step $s^*$ is a Coin-Fixed-To-0 step. As we have seen, $v_i = H(B_\ell^r)$. Thus $i$ propagates $(ESIG_i(0),$ $ESIG_i(H(B_\ell^r)), \sigma_i^{r,s})$ as we wanted to show.

For Step $s^*+1$, since player $i'$ has helped propagating the messages in his $CERT^r$ on or before time $\alpha_{i'}^{r,s^*} + t_{s^*}$,

all honest verifiers in $HSV^{r,s^*+1}$ have received at least $t_H$ valid $(r, s^* - 1)$-messages for bit 0 and value $H(B_\ell^r)$ on or before they are done waiting. Furthermore, verifiers in $HSV^{r,s^*+1}$ will not stop before receiving those $(r, s^* - 1)$-messages, because there do not exist any other $t_H$ valid $(r, s'-1)$-messages for bit 1 with $s' - 2 \equiv 1 \bmod 3$ and $6 \leq s' \leq s^* + 1$, by the definition of Step $s^*$. In particular, Step $s^* + 1$ itself is a Coin-Fixed-To-1 step, but no honest verifier in $HSV^{r,s^*}$ has propagated a message for 1, and $|MSV^{r,s^*}| < t_H$. Thus all honest verifiers in $HSV^{r,s^*+1}$ stop without propagating anything and set $B^r = B_\ell^r$; as before, they have received $m_\ell^{r,1}$ before they receive the desired $(r, s^* - 1)$-messages.[24] The same can be said for all honest verifiers in future steps and all honest users in general. In particular, they all know $B^r = B_\ell^r$ within the time interval $I^{r+1}$ and

$$T^{r+1} \leq \alpha_{i'}^{r,s^*} + t_{s^*} \leq T^r + \lambda + t_{s^*}.$$

Case 2.1.b. *Event E.b happens and there exists an honest verifier i' ∈ HSV$^{r,s^*}$ who should also stop without propagating anything.*
In this case we have $s^* - 2 \equiv 1$ mod 3 and Step $s^*$ is a Coin-Fixed-To-1 step. The analysis is similar to Case 2.1.a and many details have been omitted.

As before, player $i'$ must have received at least $t_H$ valid ($r$, $s^*$ - 1)-messages of the form ($ESIG_j(1)$, $ESIG_j(v_j)$, $\sigma_j^{r,s^*-1}$) Again by the definition of $s^*$, there does not exist a step $5 \leq s' < s^*$ with $s' - 2 \equiv 0$ mod 3, where at least $t_H$ ($r$, $s'$ - 1)-verifiers have signed 0 and the same $v$. Thus player $i'$ stops without propagating anything; sets $B^r = B_\epsilon^r$; and sets his own $CERT^r$ to be the set of valid ($r$, $s^*$ - 1)-messages for bit 1 that he has received.

Moreover, any other verifier $i \in HSV^{r,s^*}$ has either stopped with $B^r = B_\epsilon^r$, or has set $b_i = 1$ and propagated ($ESIG_i(1)$, $ESIG_i(v_i)$, $\sigma_i^{r,s^*}$) Since player $i$ has helped propagating the ($r$, $s^*$ - 1)-messages in his $CERT^r$ by time $\alpha_i^{r,s^*} + t_{s^*}$, again all honest verifiers in $HSV^{r,s^*+1}$ stop without propagating anything and set $B^r = B_\epsilon^r$. Similarly, all honest users know $B^r = B_\epsilon^r$ within the time interval $I^{r+1}$ and

$$T^{r+1} \leq \alpha_{i'}^{r,s^*} + t_{s^*} \leq T^r + \lambda + t_{s^*}.$$

Case 2.2.a. *Event E.a happens and there does not exist an honest verifier i' ∈ HSV$^{r,s^*}$ who should also stop without propagating anything.*

In this case, note that player $i^*$ could have a valid $CERT_{i^*}^r$ consisting of the $t_H$ desired ($r$, $s^*$ - 1)-messages the Adversary is able to collect or generate. However, the malicious verifiers may not help propagating those messages, so we cannot conclude that the honest users will receive them in time $\lambda$. In fact, |$MSV^{r,s^*-1}$| of those messages may be from malicious ($r$, $s^*$ - 1)-verifiers, who did not propagate their messages at all and only send them to the malicious verifiers in step $s^*$. [24] If $\ell$ is malicious, he might send out $m_\ell^{r,1}$ late, hoping that some honest users/verifiers have not received $m_\ell^{r,1}$ when they receive the desired certificate for it. However, since verifier $\hat{i} \in HSV^{r,4}$ has set $b_i = 0$ and $v_i = H(B_\ell^r)$, as before we have that more than half of honest verifiers $i \in HSV^{r,3}$ have set $v_i = H(B_\ell^r)$. This further implies more than half of honest verifiers $i \in HSV^{r,2}$ have set $v_i = H(B_\ell^r)$, and those ($r$, 2)-verifiers have all received $m_\ell^{r,1}$. In particular, all those ($r$, 2)-verifiers have helped propagating $m_\ell^{r,1}$ at the end of their Step 2.

From there on, it takes at most $\Lambda$ time for $m_\ell^{r,1}$ to reach the remaining honest users. As all honest users stop their Step 2 within time $\lambda$ from each other and verifier $i'$ stops in Step $s^* \geq 5$, from the time when the last honest ($r$, 2)-verifier stops his Step 2 to the time when $i'$ stops his Step $s^*$, at least $t_4 - t_2 - \lambda = 3\lambda$ time has passed. As $\Lambda \leq 4\lambda$, within $\lambda$ time after verifier $i'$ stops, all honest users have received $m_\ell^{r,1}$ even if it was initially propagated by the ($r$, 2)-verifier who was the last one to stop his Step 2. In reality, as more than half of honest ($r$, 2)-verifiers have helped propagating $m_\ell^{r,1}$, the actual time for it to reach all honest users is shorter than $\Lambda$.

Similar to Case 2.1.a, here we have $s^* - 2 = 0$ mod 3, Step $s^*$ is a Coin-Fixed-To-0 step, and the ($r$, $s^*$ - 1)-messages in $CERT_{i^*}^r$ are for bit 0 and $v = H(B_\ell^r)$. Indeed, all honest ($r$, $s^*$ - 1)-veriners sign $v$, thus the Adversary cannot generate $t_H$ valid ($r$, $s^*$ - 1)-messages for a different $v'$.
Moreover, all honest ($r$, $s^*$)-verifiers have waited time $t_{s^*}$ and do not see > 2/3 majority for bit 1, again because

$|HSV^{r,s^*-1}| + 4|MSV^{r,s^*-1}| < 2n$. Thus every honest verifier $i \in HSV^{r,s^*}$ sets $b_i = 0$, $v_i = H(B_\ell^r)$ by the majority vote, and propagates $m_i^{r,s^*} = (ESIG_i(0), ESIG_i(H(B_\ell^r)), \sigma_i^{r,s^*})$ at time $\alpha_i^{r,s^*} + t_{s^*}$.

Now consider the honest verifiers in Step $s^*$ + 1 (which is a Coin-Fixed-To-1 step). If the Adversary actually sends the messages in $CERT_{i^*}^r$ to some of them and causes them to stop, then similar to Case 2.1.a, all honest users know $B^r = B_\ell^r$ within the time interval $I^{r+1}$ and

$$T^{r+1} \leq T^r + \lambda + t_{s^*+1}.$$

Otherwise, all honest verifiers in Step $s^*$ + 1 have received all the $(r, s^*)$-messages for 0 and $H(B_\ell^r)$ from $HSV^{r,s^*}$ after waiting time $t_{s^*+1}$, which leads to > 2/3 majority, because $|HSV^{r,s^*}| > 2|MSV^{r,s^*}|$. Thus all the verifiers in $HSV^{r,s^*+1}$ propagate their messages for 0 and $H(B_\ell^r)$ accordingly. Note that the verifiers in $HSV^{r,s^*+1}$ do not stop with $B^r = B_\ell^r$, because Step $s^*$ + 1 is not a Coin-Fixed-To-0 step.

Now consider the honest verifiers in Step $s^*$ + 2 (which is a Coin-Genuinely-Flipped step). If the Adversary sends the messages in $CERT_{i^*}^r$ to some of them and causes them to stop, then again all honest users know $B^r = B_\ell^r$ within the time interval $I^{r+1}$ and

$$T^{r+1} \leq T^r + \lambda + t_{s^*+2}.$$

Otherwise, all honest verifiers in Step $s^*$ + 2 have received all the $(r, s^* + 1)$-messages for 0 and $H(B_\ell^r)$ from $HSV^{r,s^*+1}$ after waiting time $t_{s^*+2}$, which leads to > 2/3 majority. Thus all of them propagate their messages for 0 and $H(B_\ell^r)$ accordingly: that is they do not "flip a coin" in this case. Again, note that they do not stop without propagating, because Step $s^*$ + 2 is not a Coin-Fixed-To-0 step.

Finally, for the honest verifiers in Step $s^*$ + 3 (which is another Coin-Fixed-To-0 step), all of them would have received at least $t_H$ valid messages for 0 and $H(B_\ell^r)$ from $HSV^{s^*+2}$, if they really wait time $t_{s^*+3}$. Thus, whether or not the Adversary sends the messages in $CERT_{i^*}^r$ to any of them, all verifiers in $HSV^{r,s^*+3}$ stop with $B^r = B_\ell^r$, without propagating anything. Depending on how the Adversary acts, some of them may have their own $CERT^r$ consisting of those $(r, s^* - 1)$-messages in $CERT_{i^*}^r$, and the others have their own $CERT^r$ consisting of those $(r, s^* + 2)$-messages. In any case, all honest users know $B^r = B_\ell^r$ within the time interval $I^{r+1}$ and

$$T^{r+1} \leq T^r + \lambda + t_{s^*+3}.$$

*Case 2.2.b. Event E.b happens and there does not exist an honest verifier $i' \in HSV^{r,s^*}$ who should also stop without propagating anything.*

The analysis in this case is similar to those in Case 2.1.b and Case 2.2.a, thus many details have been omitted. In particular, $CERT_{i^*}^r$ consists of the $t_H$ desired $(r, s^* - 1)$-messages for bit 1 that the Adversary is able to collect or generate, $s^* - 2 = 1 \bmod 3$, Step $s^*$ is a Coin-Fixed-To-1 step, and no honest $(r,s^*)$-verifier could have seen > 2/3 majority for 0.

Thus, every verifier $i \in HSV^{r,s^*}$ sets $b_i = 1$ and propagates $m_i^{r,s^*} = (ESIG_i(1), ESIG_i(v_i), \sigma_i^{r,s^*})$ at time

$\alpha_i^{r,s*} + t_{s*}$. Similar to Case 2.2.a, in at most 3 more steps (i.e., the protocol reaches Step $s* + 3$, which is another Coin-Fixed-To-1 step), all honest users know $B^r = B_\epsilon^r$ within the time interval $I^{r+1}$. Moreover, $T^{r+1}$ may be $\le T^r + \lambda + t_{s*+1}$, or $\le T^r + \lambda + t_{s*+2}$, or $\le T^r + \lambda + t_{s*+3}$, depending on when is the first time an honest verifier is able to stop without propagating.

Combining the four sub-cases, we have that all honest users know $B^r$ within the time interval $I^{r+1}$, with

$T^{r+1} \le T^r + \lambda + t_{s*}$ in Cases 2.1.a and 2.1.b, and
$T^{r+1} \le T^r + \lambda + t_{s*+3}$ in Cases 2.2.a and 2.2.b.

It remains to upper-bound $s*$ and thus $T^{r+1}$ for Case 2, and we do so by considering how many times the Coin-Genuinely-Flipped steps are actually executed in the protocol: that is, some honest verifiers actually have flipped a coin.

In particular, arbitrarily fix a Coin-Genuinely-Flipped step $s'$ (i.e., $7 \le s' \le m + 2$ and $s' - 2 \equiv 2 \mod 3$), and let

$\ell' \triangleq \arg\min_{j \in SV^{r,s'-1}} H(\sigma_j^{r,s'-1})$. For now let us assume $s' < s*$, because otherwise no honest verifier actually flips a coin in Step $s'$, according to previous discussions.

By the definition of $SV^{r,s-1}$, the hash value of the credential of $\ell'$ is also the smallest among all users in $PK^{r-k}$. Since the hash function is a random oracle, ideally player $\ell'$ is honest with probability at least $h$. As we will show later, even if the Adversary tries his best to predict the output of the random oracle and tilt the probability, player $\ell'$ is still honest with probability at least $p_h = h^2(1 + h - h^2)$. Below we consider the case when that indeed happens: that is, $\ell' \in HSV^{r,s-1}$.

Note that every honest verifier $i \in HSV^{r,s'}$ has received all messages from $HSV^{r,s'-1}$ by time $\alpha_i^{r,s'} + t_{s'}$. If player $i$ needs to flip a coin (i.e., he has not seen > 2/3 majority for the same bit $b \in \{0,1\}$), then he sets

$b_i = \text{lsb}(H(\sigma_{\ell'}^{r,s'-1}))$. If there exists another honest verifier $i' \in HSV^{r,s'}$ who has seen > 2/3 majority for a bit $b \in \{0,1\}$, then by Property (d) of Lemma 5.5, no honest verifier in $HSV^{r,s'}$ would have seen > 2/3 majority for a bit $b' \ne b$.

Since $\text{lsb}(H(\sigma_{\ell'}^{r,s'-1})) = b$ with probability 1/2, all honest verifiers in $HSV^{r,s'}$ reach an agreement on $b$ with probability 1/2. Of course, if such a verifier $i'$ does not exist, then all honest verifiers in $HSV^{r,s'}$ agree on the bit $\text{lsb}(H(\sigma_{\ell'}^{r,s'-1}))$ with probability 1.

Combining the probability for $\ell' \in HSV^{r,s-1}$, we have that the honest verifiers in $HSV^{r,s'}$ reach an agreement on a bit $b \in \{0,1\}$ with probability at least $\frac{p_h}{2} = \frac{h^2(1+h-h^2)}{2}$. Moreover, by induction on the majority vote as before, all honest verifiers in $HSV^{r,s'}$ have their $v_i$'s set to be $H(B_\ell^r)$. Thus, once an agreement on $b$ is reached in Step $s'$, $T^{r+1}$ is

$$\text{either } \le T^r + \lambda + t_{s'+1} \text{ or } \le T^r + \lambda + t_{s'+2},$$

depending on whether $b = 0$ or $b = 1$, following the analysis of Cases 2.1.a and 2.1.b. In particular, no further Coin-Genuinely-Flipped step will be executed: that is, the verifiers in such steps still check that they are the verifiers and thus wait, but they will all stop without propagating anything. Accordingly, before Step $s*$, the number of times the Coin-Genuinely-Flipped steps are executed is distributed according to the random variable $L^r$. Letting Step $s'$ be the last Coin-Genuinely-Flipped step according to $L^r$, by the construction of the protocol we have

$$s' = 4 + 3L^r.$$

When should the Adversary make Step $s*$ happen if he wants to delay $T^{r+1}$ as much as possible? We can even assume that the Adversary knows the realization of $L^r$ in advance. If $s* > s'$ then it is useless, because the honest verifiers have already reached an agreement in Step $s'$. To be sure, in this case $s*$ would be $s' + 1$ or $s' + 2$, again depending on whether $b = 0$ or $b = 1$. However, this is actually Cases 2.1.a and 2.1.b, and the resulting $T^{r+1}$ is exactly the same as in that case. More precisely,

$$T^{r+1} \le T^r + \lambda + t_{s^*} \le T^r + \lambda + t_{s'+2}.$$

If $s^* < s' - 3$ - that is, $s^*$ is before the second-last Coin-Genuinely-Flipped step-then by the analysis of Cases 2.2.a and 2.2.b,

$$T^{r+1} \le T^r + \lambda + t_{s^*+3} < T^r + \lambda + t_{s'}.$$

That is, the Adversary is actually making the agreement on $B^r$ happen faster.

If $s^* = s' - 2$ or $s' - 1$ - that is, the Coin-Fixed-To-0 step or the Coin-Fixed-To-1 step immediately before Step $s'$ - then by the analysis of the four sub-cases, the honest verifiers in Step $s'$ do not get to flip coins anymore, because they have either stopped without propagating, or have seen $> 2/3$ majority for the same bit $b$. Therefore we have

$$T^{r+1} \le T^r + \lambda + t_{s^*+3} \le T^r + \lambda + t_{s'+2}.$$

In sum, no matter what $s^*$ is, we have

$$\begin{aligned}
T^{r+1} &\le T^r + \lambda + t_{s'+2} = T^r + \lambda + t_{3L^r+6} \\
&= T^r + \lambda + (2(3L^r + 6) - 3)\lambda + \Lambda \\
&= T^r + (6L^r + 10)\lambda + \Lambda,
\end{aligned}$$

as we wanted to show. The worst case is when $s^* = s' - 1$ and Case 2.2.b happens.

Combining Cases 1 and 2 of the binary BA protocol, Lemma 5.3 holds.

### 5.9 Security of the Seed $Q^r$ and Probability of An Honest Leader

It remains to prove Lemma 5.4. Recall that the verifiers in round $r$ are taken from $PK^{r-k}$ and are chosen according to the quantity $Q^{r-1}$. The reason for introducing the look-back parameter $k$ is to make sure that, back at round $r - k$, when the Adversary is able to add new malicious users to $PK^{r-k}$, he cannot predict the quantity $Q^{r-1}$ except with negligible probability. Note that the hash function is a random oracle and $Q^{r-1}$ is one of its inputs when selecting verifiers for round r. Thus, no matter how malicious users are added to $PK^{r-k}$, from the Adversary's point of view each one of them is still selected to be a verifier in a step of round $r$ with the required probability $p$ (or $p_1$ for Step 1). More precisely, we have the following lemma.

**Lemma 5.6.** *With $k = O(\log_{1/2} F)$, for each round r, with overwhelming probability the Adversary did not query $Q^{r-1}$ to the random oracle back at round r - k.*

*Proof.* We proceed by induction. Assume that for each round $\gamma < r$, the Adversary did not query $Q^{\gamma-1}$ to the random oracle back at round $\gamma - k$.[25] Consider the following mental game played by the Adversary at round $r - k$, trying to predict $Q^{r-1}$.

[25] As $k$ is a small integer, without loss of generality one can assume that the first $k$ rounds of the protocol are run under a safe environment and the inductive hypothesis holds for those rounds.

In Step 1 of each round $\gamma = r - k,..., r - 1$, given a specific $Q^{\gamma-1}$ not queried to the random oracle, by ordering the players $i \in PK^{\gamma-k}$ according to the hash values $H(SIG_i(\gamma, 1, Q^{\gamma-1}))$ increasingly, we obtain a random permutation over $PK^{\gamma-k}$. By definition, the leader $\ell^\gamma$ is the first user in the permutation and is honest with probability $h$. Moreover, when $PK^{\gamma-k}$ is large enough, for any integer $x \ge 1$, the probability that the first $x$ users in the permutation are all malicious but the $(x + 1)$st is honest is $(1 - h)^x h$.

If $\ell^\gamma$ is honest, then $Q^\gamma = H(SIG_{\ell^\gamma}(Q^{\gamma-1}), \gamma)$. As the Adversary cannot forge the signature of $\ell^\gamma$, $Q^\gamma$ is distributed uniformly at random from the Adversary's point of view and, except with exponentially small probability,[26] was not queried to $H$ at round $r - k$. Since each $Q^{\gamma+1}$, $Q^{\gamma+2},..., Q^{r-1}$ respectively is the output of $H$ with $Q^\gamma$, $Q^{\gamma+1},..., Q^{r-2}$ as one of the inputs, they all look random to the Adversary and the Adversary could not have queried $Q^{r-1}$ to $H$ at round $r - k$. [26] That is, exponential in the length of the output of $H$. Note that this probability is way smaller than $F$.

Accordingly, the only case where the Adversary can predict $Q^{r-1}$ with good probability at round $r - k$ is when all

the leaders $\ell^{r-k},..., \ell^{r-1}$ are malicious. Again consider a round $\gamma \in \{r - k..., r - 1\}$ and the random permutation over $PK^{r-k}$ induced by the corresponding hash values. If for some $x \geq 2$, the first $x - 1$ users in the permutation are all malicious and the $x$-th is honest, then the Adversary has $x$ possible choices for $Q^\gamma$: either of the form $H(SIG_i(Q^{r-1},\gamma))$, where $i$ is one of the first $x - 1$ malicious users, by making player $i$ the actually leader of round $\gamma$; or $H(Q^{r-1},\gamma)$, by forcing $B^\gamma = B_\epsilon^\gamma$. Otherwise, the leader of round $\gamma$ will be the first honest user in the permutation and $Q^{r-1}$ becomes unpredictable to the Adversary.

Which of the above $x$ options of $Q^\gamma$ should the Adversary pursue? To help the Adversary answer this question, in the mental game we actually make him more powerful than he actually is, as follows. First of all, in reality, the Adversary cannot compute the hash of a honest user's signature, thus cannot decide, for each $Q^\gamma$, the number $x(Q^\gamma)$ of malicious users at the beginning of the random permutation in round $\gamma + 1$ induced by $Q^\gamma$. In the mental game, we give him the numbers $x(Q^\gamma)$ for free. Second of all, in reality, having the first $x$ users in the permutation all being malicious does not necessarily mean they can all be made into the leader, because the hash values of their signatures must also be less than $p_1$. We have ignored this constraint in the mental game, giving the Adversary even more advantages.

It is easy to see that in the mental game, the optimal option for the Adversary, denoted by $\hat{Q}^\gamma$, is the one that produces the longest sequence of malicious users at the beginning of the random permutation in round $\gamma + 1$. Indeed, given a specific $Q^\gamma$, the protocol does not depend on $Q^{r-1}$ anymore and the Adversary can solely focus on the new permutation in round $\gamma + 1$, which has the same distribution for the number of malicious users at the beginning. Accordingly, in each round $\gamma$, the above mentioned $\hat{Q}^\gamma$ gives him the largest number of options for $Q^{\gamma+1}$ and thus maximizes the probability that the consecutive leaders are all malicious.

Therefore, in the mental game the Adversary is following a Markov Chain from round $r - k$ to round $r - 1$, with the state space being $\{0\} \cup \{x : x \geq 2\}$. State 0 represents the fact that the first user in the random permutation in the current round $\gamma$ is honest, thus the Adversary fails the game for predicting $Q^{r-1}$; and each state $x \geq 2$ represents the fact that the first $x - 1$ users in the permutation are malicious and the $x$-th is honest, thus the Adversary has $x$ options for $Q^\gamma$. The transition probabilities $P(x,y)$ are as follows.

- $P(0,0) = 1$ and $P(0,y) = 0$ for any $y \geq 2$. That is, the Adversary fails the game once the first user in the permutation becomes honest.
- $P(x, 0) = h^x$ for any $x \geq 2$. That is, with probability $h^x$, all the $x$ random permutations have their first users being honest, thus the Adversary fails the game in the next round.
- For any $x \geq 2$ and $y \geq 2$, $P(x, y)$ is the probability that, among the $x$ random permutations induced by the $x$ options of $Q^\gamma$, the longest sequence of malicious users at the beginning of some of them is $y - 1$, thus the Adversary has $y$ options for $Q^{\gamma+1}$ in the next round. That is,

$$P(x,y) = \left(\sum_{i=0}^{y-1}(1-h)^i h\right)^x - \left(\sum_{i=0}^{y-2}(1-h)^i h\right)^x = (1-(1-h)^y)^x - (1-(1-h)^{y-1})^x.$$

Note that state 0 is the unique absorbing state in the transition matrix $P$, and every other state $x$ has a positive probability of going to 0. We are interested in upper-bounding the number $k$ of rounds needed for the Markov Chain to converge to 0 with overwhelming probability: that is, no matter which state the chain starts at, with overwhelming probability the Adversary loses the game and fails to predict $Q^{r-1}$ at round $r - k$.

Consider the transition matrix $P^{(2)} \triangleq P \cdot P$ after two rounds. It is easy to see that $P^{(2)}(0,0) = 1$ and $P^{(2)}(0, x) = 0$ for any $x \geq 2$. For any $x \geq 2$ and $y \geq 2$, as $P(0, y) = 0$, we have

$$P^{(2)}(x,y) = P(x,0)P(0,y) + \sum_{z\geq 2} P(x,z)P(z,y) = \sum_{z\geq 2} P(x,z)P(z,y).$$

Letting $\bar{h} \triangleq 1 - h$, we have

$$P(x,y) = (1-\bar{h}^y)^x - (1-\bar{h}^{y-1})^x$$

and

$$P^{(2)}(x,y) = \sum_{z \geq 2}[(1 - \bar{h}^z)^x - (1 - \bar{h}^{z-1})^x][(1 - \bar{h}^y)^z - (1 - \bar{h}^{y-1})^z].$$

Below we compute the limit of $\frac{P^{(2)}(x,y)}{P(x,y)}$ as $h$ goes to 1 - that is, $\bar{h}$ goes to 0. Note that the highest order of $\bar{h}$ in $P(x, y)$ is $\bar{h}^{y-1}$, with coefficient $x$. Accordingly,

$$\lim_{h \to 1}\frac{P^{(2)}(x,y)}{P(x,y)} = \lim_{\bar{h} \to 0}\frac{P^{(2)}(x,y)}{P(x,y)} = \lim_{\bar{h} \to 0}\frac{P^{(2)}(x,y)}{x\bar{h}^{y-1} + O(\bar{h}^y)}$$

$$= \lim_{\bar{h} \to 0}\frac{\sum_{z \geq 2}[x\bar{h}^{z-1} + O(\bar{h}^z)][z\bar{h}^{y-1} + O(\bar{h}^y)]}{x\bar{h}^{y-1} + O(\bar{h}^y)} = \lim_{\bar{h} \to 0}\frac{2x\bar{h}^y + O(\bar{h}^{y+1})}{x\bar{h}^{y-1} + O(\bar{h}^y)}$$

$$= \lim_{\bar{h} \to 0}\frac{2x\bar{h}^y}{x\bar{h}^{y-1}} = \lim_{\bar{h} \to 0} 2\bar{h} = 0.$$

When $h$ is sufficiently close to 1,[27] we have

$$\frac{P^{(2)}(x,y)}{P(x,y)} \leq \frac{1}{2}$$

for any $x \geq 2$ and $y \geq 2$. By induction, for any $k > 2$, $P^{(k)} \triangleq P^k$ is such that

- $P^{(k)}(0,0) = 1$, $P^{(k)}(0,x) = 0$ for any $x \geq 2$, and
- for any $x \geq 2$ and $y \geq 2$,

$$P^{(k)}(x,y) = P^{(k-1)}(x,0)P(0,y) + \sum_{z \geq 2}P^{(k-1)}(x,z)P(z,y) = \sum_{z \geq 2}P^{(k-1)}(x,z)P(z,y)$$

$$\leq \sum_{z \geq 2}\frac{P(x,z)}{2^{k-2}} \cdot P(z,y) = \frac{P^{(2)}(x,y)}{2^{k-2}} \leq \frac{P(x,y)}{2^{k-1}}.$$

[27] For example, $h$ = 80% as suggested by the specific choices of parameters.

As $P(x, y) \leq 1$, after 1 - $\log_2 F$ rounds, the transition probability into any state $y \geq 2$ is negligible, starting with any state $x \geq 2$. Although there are many such states $y$, it is easy to see that

$$\lim_{y \to +\infty}\frac{P(x,y)}{P(x,y+1)} = \lim_{y \to +\infty}\frac{(1 - \bar{h}^y)^x - (1 - \bar{h}^{y-1})^x}{(1 - \bar{h}^{y+1})^x - (1 - \bar{h}^y)^x} = \lim_{y \to +\infty}\frac{\bar{h}^{y-1} - \bar{h}^y}{\bar{h}^y - \bar{h}^{y+1}} = \frac{1}{\bar{h}} = \frac{1}{1 - h}.$$

Therefore each row $x$ of the transition matrix P decreases as a geometric sequence with rate $\frac{1}{1-h} > 2$ when $y$ is large enough, and the same holds for $P^{(k)}$. Accordingly, when $k$ is large enough but still on the order of $\log_{1/2} F$, $\sum_{y \geq 2} P^{(k)}(x, y) < F$ for any $x \geq 2$. That is, with overwhelming probability the Adversary loses the game and fails to predict $Q^{r-1}$ at round $r - k$. For $h \in (2/3,1]$, a more complex analysis shows that there exists a constant C slightly larger than 1/2, such that it suffices to take $k = O(\log_C F)$. Thus Lemma 5.6 holds. ∎

**Lemma 5.4.** (restated) *Given Properties 1-3 for each round before r,* $p_h = h^2(1 + h - h^2)$ *for $L^r$, and the leader $\ell^r$ is honest with probability at least $p_h$.*

*Proof.* Following Lemma 5.6, the Adversary cannot predict $Q^{r-1}$ back at round $r - k$ except with negligible probability. Note that this does not mean the probability of an honest leader is $h$ for each round. Indeed, given $Q^{r-1}$, depending on how many malicious users are at the beginning of the random permutation of $PK^{r-k}$, the Adversary may have more than one options for $Q^r$ and thus can increase the probability of a malicious leader in round $r + 1$ - again we are giving him some unrealistic advantages as in Lemma 5.6, so as to simplify the analysis.

However, for each $Q^{r-1}$ that was not queried to $H$ by the Adversary back at round $r - k$, for any $x \geq 1$, with probability $(1 - h)^{x-1}h$ the first honest user occurs at position $x$ in the resulting random permutation of $PK^{r-k}$. When $x = 1$, the probability of an honest leader in round $r + 1$ is indeed $h$; while when $x = 2$, the Adversary has two options for $Q^r$ and the resulting probability is $h^2$. Only by considering these two cases, we have that the probability of an honest leader in round $r + 1$ is at least $h \cdot h + (1 - h)h \cdot h^2 = h^2(1 + h - h^2)$ as desired.

Note that the above probability only considers the randomness in the protocol from round $r - k$ to round $r$. When all the randomness from round 0 to round $r$ is taken into consideration, $Q^{r-1}$ is even less predictable to the Adversary and the probability of an honest leader in round $r + 1$ is at least $h^2(1 + h - h^2)$. Replacing $r + 1$ with $r$ and shifts everything back by one round, the leader $\ell^r$ is honest with probability at least $h^2(1 + h - h^2)$, as desired.

Similarly, in each Coin-Genuinely-Flipped step $s$, the "leader" of that step -that is the verifier in $SV^{r,s}$ whose credential has the smallest hash value, is honest with probability at least $h^2(1 + h - h^2)$. Thus $p_h = h^2(1 + h - h^2)$ for $L^r$ and Lemma 5.4 holds. ∎

# $_6 Algorand'_2$

In this section, we construct a version of *Algorand'* working under the following assumption.

HONEST MAJORITY OF USERS ASSUMPTION: *More than 2/3 of the users in each $PK^r$ are honest.*

In Section 8, we show how to replace the above assumption with the desired Honest Majority of Money assumption.

## 6.1 Additional Notations and Parameters for $Algorand'_2$

Notations

- $\mu \in \mathbb{Z}^+$: a pragmatic upper-bound to the number of steps that, with overwhelming probability, will actually taken in one round. (As we shall see, parameter $\mu$ controls how many ephemeral keys a user prepares in advance for each round.)

- $L^r$: a random variable representing the number of Bernoulli trials needed to see a 1, when each trial is 1 with probability $\frac{p_h}{2}$. $L^r$ will be used to upper-bound the time needed to generate block $B^r$.

- $t_H$: a lower-bound for the number of honest verifiers in a step $s > 1$ of round $r$, such that with overwhelming probability (given $n$ and $p$), there are $> t_H$ honest verifiers in $SV^{r,s}$.

**Parameters**

- *Relationships among various parameters.*

  - For each step $s > 1$ of round $r$, $n$ is chosen so that, with overwhelming probability, $|HSV^{r,s}| > t_H$ and $|HSV^{r,s}| + 2|MSV^{r,s}| < 2t_H$.
    Note that the two inequalities above together imply $|HSV^{r,s}| > 2|MSV^{r,s}|$: that is, there is a 2/3 honest majority among selected verifiers.
    The closer to 1 the value of $h$ is, the smaller $n$ needs to be. In particular, we use (variants of) Chernoff bounds to ensure the desired conditions hold with overwhelming probability.

- *Specific choices of important parameters.*

  - $F = 10^{-18}$.

- $n \approx 4000$, $t_H \approx 0.69n$, $k = 70$.

## 6.2 Implementing Ephemeral Keys in $Algorand'_2$

Recall that a verifier $i \in SV^{r,s}$ digitally signs his message $m_i^{r,s}$ of step $s$ in round r, relative to an ephemeral public key $pk_i^{r,s}$, using an ephemeral secrete key $sk_i^{r,s}$ that he promptly destroys after using. When the number of possible steps that a round may take is capped by a given integer $\mu$, we have already seen how to practically handle ephemeral keys. For example, as we have explained in $Algorand'_1$ (where $\mu = m + 3$), to handle all his possible ephemeral keys, from a round $r'$ to a round $r' + 10^6$, $i$ generates a pair (*PMK, SMK*), where *PMK* public master key of an identity based signature scheme, and *SMK* its corresponding secret master key. User $i$ publicizes *PMK* and uses *SMK* to generate the secret key of each possible ephemeral public key (and destroys *SMK* after having done so). The set of $i$'s ephemeral public keys for the relevant rounds is $S = \{i\} \times \{r',..., r' + 10^6\} \times \{1,..., \mu\}$. (As discussed, as the round $r' + 10^6$ approaches, $i$ "refreshes" his pair (*PMK, SMK*).)

In practice, if $\mu$ is large enough, a round of $Algorand'_2$ will not take more than $\mu$ steps. In principle, however, there is the remote possibility that, for some round $r$ the number of steps actually taken will exceed $\mu$. When this happens, $i$ would be unable to sign his message $m_i^{r,s}$ for any step $s > \mu$, because he has prepared in advance only $\mu$ secret keys for round $r$. Moreover, he could not prepare and publicize a new stash of ephemeral keys, as discussed before. In fact, to do so, he would need to insert a new public master key *PMK'* in a new block. But, should round $r$ take more and more steps, no new blocks would be generated.

However, solutions exist. For instance, $i$ may use the last ephemeral key of round $r$, $pk_i^{r,\mu}$, as follows. He generates another stash of key-pairs for round $r$ - e.g., by (1) generating another master key pair ($\overline{PMK}, \overline{SMK}$); (2) using this pair to generate another, say, $10^6$ ephemeral keys, $\overline{sk}_i^{r,\mu+1}, \ldots, \overline{sk}_i^{r,\mu+10^6}$, corresponding to steps $\mu + 1, ..., \mu + 10^6$ of round $r$; (3) using $sk_i^{r,\mu}$ to digitally sign $\overline{PMK}$ (and any $(r, \mu)$-message if $i \in SV^{r,\mu}$), relative to $pk_i^{r,\mu}$; and (4) erasing $\overline{SMK}$ and $sk_i^{r,\mu}$. Should $i$ become a verifier in a step $\mu + s$ with $s \in \{1,..., 10^6\}$, then $i$ digitally signs his $(r, \mu + s)$-message $m_i^{r,\mu+s}$ relative to his new key $\overline{pk}_i^{r,\mu+s} = (i, r, \mu + s)$. Of course, to verify this signature of $i$, others need to be certain that this public key corresponds to $i$'s new public master key $\overline{PMK}$. Thus, in addition to this signature, $i$ transmits his digital signature of $\overline{PMK}$ relative to $pk_i^{r,\mu}$.

Of course, this approach can be repeated, as many times as necessary, should round $r$ continue for more and more steps! The last ephemeral secret key is used to authenticate a new master public key, and thus another stash of ephemeral keys for round $r$. And so on.

## 6.3 The Actual Protocol $Algorand'_2$

Recall again that, in each step $s$ of a round $r$, a verifier $i \in SV^{r,s}$ uses his long-term public-secret key pair to produce his credential, $\sigma_i^{r,s} \triangleq SIG_i(r, s, Q^{r-1})$, as well as $SIG_i(Q^{r-1})$ in case $s = 1$. Verifier $i$ uses his ephemeral key pair, $(pk_i^{r,s}, sk_i^{r,s})$, to sign any other message m that may be required. For simplicity, we write $esig_i(m)$, rather than $sig_{pk_i^{r,s}}(m)$, to denote $i$'s proper ephemeral signature of $m$ in this step, and write $ESIG_i(m)$ instead of

$$SIG_{pk_i^{r,s}}(m) \triangleq (i, m, esig_i(m)).$$

Step 1: Block Proposal

Instructions for every user $i \in PK^{r-k}$: User $i$ starts his own Step 1 of round $r$ as soon as he has $CERT^{r-1}$, which allows $i$ to unambiguously compute $H(B^{r-1})$ and $Q^{r-1}$.

- User $i$ uses $Q^{r-1}$ to check whether $i \in SV^{r,1}$ or not. If $i \notin SV^{r,1}$, he does nothing for Step 1.

- If $i \in SV^{r,1}$, that is, if $i$ is a potential leader, then he does the following.

  (a) If $i$ has seen $B^0,..., B^{r-1}$ himself (any $B^j = B^j_\epsilon$ can be easily derived from its hash value in $CERT^j$ and is thus assumed "seen"), then he collects the round-$r$ payments that have been propagated to him so far and computes a maximal payset $PAY^r_i$ from them.

  (b) If $i$ hasn't seen all $B^0,..., B^{r-1}$ yet, then he sets $PAY^r_i = \emptyset$.

  (c) Next, $i$ computes his "candidate block" $B^r_i = (r, PAY^r_i, SIG_i(Q^{r-1}), H(B^{r-1}))$.

  (c) Finally, $i$ computes the message $m^{r,1}_i = (B^r_i, esig_i(H(B^r_i)), \sigma^{r,1}_i)$, destroys his ephemeral secret key $sk^{r,1}_i$, and then propagates two messages, $m^{r,1}_i$ and $(SIG_i(Q^{r-1}), \sigma^{r,1}_i)$, separately but simultaneously.[28]
  [28]When $i$ is the leader, $SIG_i(Q^{r-1})$ allows others to compute $Q^r = H(SIG_i(Q^{r-1}),r)$.

Selective Propagation

To shorten the global execution of Step 1 and the whole round, it is important that the $(r, 1)$-messages are *selectively propagated.* That is, for every user $j$ in the system,

- For the first $(r, 1)$-message that he ever receives and successfully verifies,[29] whether it contains a block or is just a credential and a signature of $Q^{r-1}$, player $j$ propagates it as usual.

  [29]That is, all the signatures are correct and, if it is of the form $m^{r,1}_i$, both the block and its hash are valid -although $j$ does not check whether the included payset is maximal for $i$ or not.

- For all the other $(r, 1)$-messages that player $j$ receives and successfully verifies, he propagates it only if the hash value of the credential it contains is the *smallest* among the hash values of the credentials contained in all $(r, 1)$-messages he has received and successfully verified so far.

- However, if $j$ receives two different messages of the form $m^{r,1}_i$ from the same player $i$,[30] he discards the second one no matter what the hash value of $i$'s credential is.
  [30]Which means $i$ is malicious.

Note that, under selective propagation it is useful that each potential leader $i$ propagates his credential $\sigma^{r,1}_i$ separately from $m^{r,1}_i$:[31] those small messages travel faster than blocks, ensure timely propagation of the $m^{r,1}_i$'s where the contained credentials have small hash values, while make those with large hash values disappear quickly.
[31]We thank Georgios Vlachos for suggesting this.

Step 2: The First Step of the Graded Consensus Protocol *GC*

Instructions for every user $i \in PK^{r-k}$: User $i$ starts his own Step 2 of round $r$ as soon as he has $CERT^{r-1}$.

- User $i$ waits a maximum amount of time $t_2 \triangleq \lambda + \Lambda.$ While waiting, i acts as follows.

  1. After waiting for time $2\lambda$, he finds the user $\ell$ such that $H(\sigma^{r,1}_\ell) \leq H(\sigma^{r,1}_j)$ for all credentials $\sigma^{r,1}_j$ that

are part of the successfully verified ($r$, 1)-messages he has received so far.[32]

[32]Essentially, user $i$ privately decides that the leader of round $r$ is user $\ell$.

2. If he has received a block $B^{r\text{-}1}$, which matches the hash value $H(B^{r\text{-}1})$ contained in $CERT^{r\text{-}1}$,[33] and if he has received from $\ell$ a valid message $m_\ell^{r,1} = (B_\ell^r, esig_\ell(H(B_\ell^r)), \sigma_\ell^{r,1})$, [34] then $i$ stops waiting and sets $v_i' \triangleq (H(B_\ell^r), \ell)$. [33]Of course, if $CERT^{r\text{-}1}$ indicates that $B^{r\text{-}1} = B_\epsilon^{r\text{-}1}$, then $i$ has already "received" $B^{r\text{-}1}$ the moment he has $CERT^{r\text{-}1}$.

[34]Again, player $\ell$'s signatures and the hashes are all successfully verified, and $PAY_\ell^r$ in $B_\ell^r$ is a valid payset for round $r$ -although $i$ does not check whether $PAY_\ell^r$ is maximal for $\ell$ or not. If $B_\ell^r$ contains an empty payset, then there is actually no need for $i$ to see $B^{r\text{-}1}$ before verifying whether $B_\ell^r$ is valid or not.

3. Otherwise, when time $t_2$ runs out, $i$ sets $v_i' \triangleq \perp$.

4. When the value of $v_i'$ has been set, $i$ computes $Q^{r\text{-}1}$ from $CERT^{r\text{-}1}$ and checks whether $i \in SV^{r,2}$ or not.

5. If $i \in SV^{r,2}$, $i$ computes the message $m_i^{r,2} \triangleq (ESIG_i(v_i'), \sigma_i^{r,2})$, [35] destroys his ephemeral secret key $sk_i^{r,2}$, and then propagates $m_i^{r,2}$. Otherwise, $i$ stops without propagating anything.

[35]The message $m_i^{r,2}$ signals that player $i$ considers the first component of $v_i'$ to be the hash of the next block, or considers the next block to be empty.

Step 3: The Second Step of *GC*

Instructions for every user $i \in PK^{r\text{-}k}$: User $i$ starts his own Step 3 of round $r$ as soon as he has $CERT^{r\text{-}1}$.

• User $i$ waits a maximum amount of time $t_3 \triangleq t_2 + 2\lambda = 3\lambda + \Lambda$. While waiting, $i$ acts as follows.

1. If there exists a value $v$ such that he has received at least $t_H$ valid messages $m_j^{r,2}$ of the form ($ESIG_j(v)$, $\sigma_j^{r,2}$ ), without any contradiction,[36] then he stops waiting and sets $v' = v$. [36]That is, he has not received two valid messages containing $ESIG_j(v)$ and a different $ESIG_j(\hat{v})$ respectively, from a player $j$. Here and from here on, except in the Ending Conditions defined later, whenever an honest player wants messages of a given form, messages contradicting each other are never counted or considered valid.

2. Otherwise, when time $t_3$ runs out, he sets $v' = \perp$.

3. When the value of $v'$ has been set, $i$ computes $Q^{r\text{-}1}$ from $CERT^{r\text{-}1}$ and checks whether $i \in SV^{r,3}$ or not.

4. If $i \in SV^{r,3}$, then $i$ computes the message $m_i^{r,3} \triangleq (ESIG_i(v'), \sigma_i^{r,3})$, destroys his ephemeral secret key $sk_i^{r,3}$, and then propagates $m_i^{r,3}$. Otherwise, $i$ stops without propagating anything.

Step 4: Output of *GC* and The First Step of *BBA**

Instructions for every user $i \in PK^{r\text{-}k}$: User $i$ starts his own Step 4 of round $r$ as soon as he finishes his own Step 3.

• User $i$ waits a maximum amount of time $2\lambda$.[37] While waiting, $i$ acts as follows.

[37]Thus, the maximum *total* amount of time since i starts his Step 1 of round $r$ could be $t_4 \triangleq t_3 + 2\lambda = 5\lambda + \Lambda$.

1. He computes $v_i$ and $g_i$, the output of GC, as follows.

(a) If there exists a value $v' \neq \perp$ such that he has received at least $t_H$ valid messages $m_j^{r,3} = (ESIG_j(v'), \sigma_j^{r,3})$, then he stops waiting and sets $v_i \triangleq v'$ and $g_i \triangleq 2$.

(b) If he has received at least $t_H$ valid messages $m_j^{r,3} = (ESIG_j(\perp), \sigma_j^{r,3})$, then he stops waiting and sets $v_i \triangleq \perp$ and $g_i \triangleq 0$. [38]

[38]Whether Step (b) is in the protocol or not does not affect its correctness. However, the presence of Step (b) allows Step 4 to end in less than $2\lambda$ time if sufficiently many Step-3 verifiers have "signed $\perp$."

(c) Otherwise, when time $2\lambda$ runs out, if there exists a value $v' \neq \perp$ such that he has received at least $\lceil \frac{t_H}{2} \rceil$ valid messages $m_j^{r,j} = (ESIG_j(v'), \sigma_j^{r,3})$, then he sets $v_i \triangleq v'$ and $g_i \triangleq 1$. [39]

[39]It can be proved that the $v'$ in this case, if exists, must be unique.

(d) Else, when time $2\lambda$ runs out, he sets $v_i \triangleq \perp$ and $g_i \triangleq 0$.

2. When the values $v_i$ and $g_i$ have been set, $i$ computes $b_i$, the input of *BBA\**, as follows: $b_i \triangleq 0$ if $g_i = 2$, and $b_i \triangleq 1$ otherwise.

3. i computes $Q^{r-1}$ from *CERT*$^{r-1}$ and checks whether $i \in SV^{r,4}$ or not.

4. If $i \in SV^{r,4}$, he computes the message $m_i^{r,4} \triangleq (ESIG_i(b_i), ESIG_i(v_i), \sigma_i^{r,4})$, destroys his ephemeral secret key $sk_i^{r,4}$, and propagates $m_i^{r,4}$. Otherwise, i stops without propagating anything.

Step $s$, $5 \leq s \leq m + 2$, $s - 2 = 0$ mod 3: A Coin-Fixed-To-0 Step of *BBA\**

Instructions for every user $i \in PK^{r-k}$: User $i$ starts his own Step $s$ of round $r$ as soon as he finishes his own Step $s - 1$.

• User $i$ waits a maximum amount of time $2\lambda$.[40] While waiting, $i$ acts as follows.

[40]Thus, the maximum *total* amount of time since $i$ starts his Step 1 of round $r$ could be $t_s \triangleq t_{s-1} + 2\lambda = (2s - 3)\lambda + \Lambda$.

- *Ending Condition 0:* If at any point there exists a string $v \neq \perp$ and a step $s'$ such that

    (a) $5 \leq s' \leq s$, $s' - 2 = 0$ mod 3 -that is, Step $s'$ is a Coin-Fixed-To-0 step,

    (b) $i$ has received at least $t_H$ valid messages $m_j^{r,s'-1} = (ESIG_j(0), ESIG_j(v), \sigma_j^{r,s'-1})$,[41] and

    [41]Such a message from player $j$ is counted even if player $i$ has also received a message from $j$ signing for 1. Similar things for Ending Condition 1. As shown in the analysis, this is to ensure that all honest users know *CERT*$^r$ within time $\lambda$ from each other.

    (c) $i$ has received a valid message $(SIG_j(Q^{r-1}), \sigma_j^{r,1})$ with $j$ being the second component of $v$,

then, $i$ stops waiting and ends his own execution of Step $s$ (and in fact of round $r$) right away without propagating anything as a $(r, s)$-verifier; sets $H(B^r)$ to be the first component of $v$; and sets his own *CERT*$^r$ to be the set of messages $m_j^{r,s'-1}$ of step (b) together with $(SIG_j(Q^{r-1}), \sigma_j^{r,1})$.[42]

[42]User $i$ now knows $H(B^r)$ and his own round $r$ finishes. He just needs to wait until the actually block $B^r$ is propagated to him, which may take some additional time. He still helps propagating messages as a generic user, but does not initiate any propagation as a $(r, s)$-verifier. In particular, he has helped propagating all messages in his *CERT*$^r$, which is enough for our protocol. Note that he should also set $b_i \triangleq 0$ for the binary BA protocol, but $b_i$ is not needed in this case anyway. Similar things for all future instructions.

- *Ending Condition 1:* If at any point there exists a step $s'$ such that

(a') $6 \leq s' \leq s$, $s'$ - 2 = 1 mod 3 -that is, Step $s'$ is a Coin-Fixed-To-1 step, and

(b') $i$ has received at least $t_H$ valid messages $m_j^{r,s'-1} = (ESIG_j(1), ESIG_j(v_j), \quad \sigma_j^{r,s'-1});$ [43]

[43]In this case, it does not matter what the $v_j$'s are.

then, $i$ stops waiting and ends his own execution of Step $s$ (and in fact of round $r$) right away without propagating anything as a ($r$, $s$)-verifier; sets $B^r = B_\epsilon^r;$ and sets his own $CERT^r$ to be the set of messages $m_j^{r,s'-1}$ of sub-step (b').

- If at any point he has received at least $t_H$ valid $m_j^{r,s-1}$ 's of the form ($ESIG_j(1)$, $ESGIG_j(v_j)$, $\sigma_j^{r,s-1}$), then he stops waiting and sets $b_i \triangleq 1$.

- If at any point he has received at least $t_H$ valid $m_j^{r,s-1}$ 's of the form ($ESIG_j(0)$, $ESIG_j(v_j)$, $\sigma_j^{r,s-1}$), but they do not agree on the same $v$, then he stops waiting and sets $b_i \triangleq 0$.

- Otherwise, when time $2\lambda$ runs out, $i$ sets $b_i \triangleq 0$.
- When the value $b_i$ has been set, $i$ computes $Q^{r-1}$ from $CERT^{r-1}$ and checks whether $i \in SV^{r,s}$.
- If $i \in SV^{r,s}$, $i$ computes the message $m_i^{r,s} \triangleq (ESIG_i(b_i), ESIG_i(v_i), \sigma_i^{r,s})$ with $v_i$ being the value he has computed in Step 4, destroys his ephemeral secret key $sk_i^{r,s}$, and then propagates $m_i^{r,s}$. Otherwise, $i$ stops without propagating anything.

**Step $s$, $6 \leq s \leq m$ + 2, $s$ - 2 = 1 mod 3: A Coin-Fixed-To-1 Step of *BBA\****

Instructions for every user $i \in PK^{r-k}$: User $i$ starts his own Step $s$ of round $r$ as soon as he finishes his own Step $s$ - 1.

• User $i$ waits a maximum amount of time $2\lambda$. While waiting, $i$ acts as follows.

- *Ending Condition 0:* The same instructions as in a Coin-Fixed-To-0 step.
- *Ending Condition 1*: The same instructions as in a Coin-Fixed-To-0 step.

- If at any point he has received at least $t_H$ valid $m_j^{r,s-1}$'s of the form $(ESIG_j(0), ESIG_j(v_j), \sigma_j^{r,s-1})$ then he stops waiting and sets $b_i \triangleq 0$. [44]
  [44]Note that receiving $t_H$ valid ($r$, $s$ - 1)-messages signing for 1 would mean Ending Condition 1.

- Otherwise, when time $2\lambda$ runs out, $i$ sets $b_i \triangleq 1$.
- When the value $b_i$ has been set, $i$ computes $Q^{r-1}$ from $CERT^{r-1}$ and checks whether $i \in SV^{r,s}$.
- If $i \in SV^{r,s}$, $i$ computes the message $m_i^{r,s} \triangleq (ESIG_i(b_i), ESIG_i(v_i), \sigma_i^{r,s})$ with $v_i$ being the value he has computed in Step 4, destroys his ephemeral secret key $sk_i^{r,s}$, and then propagates $m_i^{r,s}$. Otherwise, $i$ stops without propagating anything.

**Step $s$, $7 \leq s \leq m$ + 2, $s$ - 2 $\equiv$ 2 mod 3: A Coin-Genuinely-Flipped Step of *BBA\****

Instructions for every user $i \in PK^{r-k}$: User $i$ starts his own Step $s$ of round $r$ as soon as he finishes his own step $s$ - 1.

• User $i$ waits a maximum amount of time $2\lambda$. While waiting, $i$ acts as follows.

- *Ending Condition 0:* The same instructions as in a Coin-Fixed-To-0 step.
- *Ending Condition 1:* The same instructions as in a Coin-Fixed-To-0 step.

- If at any point he has received at least $t_H$ valid $m_j^{r,s-1}$ 's of the form ($ESIG_j(0)$, $ESIG_j(v_j)$, $\sigma_j^{r,s-1}$) then he stops waiting and sets $b_i \triangleq 0$.

  - If at any point he has received at least $t_H$ valid $m_j^{r,s-1}$ 's of the form ($ESIG_j(1)$, $ESIG_j(v_j)$, $\sigma_j^{r,s-1}$) then he stops waiting and sets $b_i \triangleq 1$.

  - Otherwise, when time 2λ runs out, letting $SV_i^{r,s-1}$ be the set of (r, s - 1)-verifiers from whom he has received a valid message $m_j^{r,s-1}$, i sets $b_i \triangleq \mathrm{lsb}(\min_{j \in SV_i^{r,s-1}} H(\sigma_j^{r,s-1}))$.

  - When the value $b_i$ has been set, i computes $Q^{r-1}$ from $CERT^{r-1}$ and checks whether $i \in SV^{r,s}$.

  - If $i \in SV^{r,a}$, i computes the message $m_i^{r,s} \triangleq (ESIG_i(b_i), ESIG_i(v_i), \sigma_i^{r,s})$ with $v_i$ being the value he has computed in Step 4, destroys his ephemeral secret key $sk_i^{r,s}$, and then propagates $m_i^{r,s}$. Otherwise, i stops without propagating anything.

**Remark**. In principle, as considered in subsection 6.2, the protocol may take arbitrarily many steps in some round. Should this happens, as discussed, a user $i \in SV^{r,s}$ with $s > \mu$ has exhausted his stash of pre-generated ephemeral keys and has to authenticate his (r, s)-message $m_i^{r,s}$ by a "cascade" of ephemeral keys. Thus i's message becomes a bit longer and transmitting these longer messages will take a bit more time. Accordingly, after so many steps of a given round, the value of the parameter λ will automatically increase slightly. (But it reverts to the original λ once a new block is produced and a new round starts.)

Reconstruction of the Round-r Block by Non-Verifiers

Instructions for every user i in the system: User i starts his own round r as soon as he has $CERT^{r-1}$.

- i follows the instructions of each step of the protocol, participates the propagation of all messages, but does not initiate any propagation in a step if he is not a verifier in it.

- i ends his own round r by entering either Ending Condition 0 or Ending Condition 1 in some step, with the corresponding $CERT^r$.

- From there on, he starts his round r + 1 while waiting to receive the actual block $B^r$ (unless he has already received it), whose hash $H(B^r)$ has been pinned down by $CERT^r$. Again, if $CERT^r$ indicates that $B^r = B_\epsilon^r$, the i knows $B^r$ the moment he has $CERT^r$.

## 6.4 Analysis of $Algorand_1'$

The analysis of $Algorand_1'$ is easily derived from that of $Algorand_1'$. Essentially, in $Algorand_2'$, with overwhelming probability, (a) all honest users agree on the same block $B^r$; the leader of a new block is honest with probability at least $p_h = h^2(1 + h - h^2)$.

**7 Handling Offline Honest users**

As we said, a honest user follows all his prescribed instructions, which include that of being online and running the protocol. This is not a major burden in Algorand, since the computation and bandwidth required from a honest user are quite modest. Yet, let us point out that Algorand can be easily modified so as to work in two models, in which honest users are allowed to be offline in great numbers.

Before discussing these two models, let us point out that, if the percentage of honest players were 95%, Algorand could still be run setting all parameters assuming instead that $h$ = 80%. Accordingly, Algorand would continue to work properly even if at most half of the honest players chose to go offline (indeed, a major case of "absenteeism"). In fact, at any point in time, at least 80% of the players online would be honest.

**From Continual Participation to Lazy Honesty** As we saw, $Algorand'_1$ and $Algorand'_2$ choose the look-back parameter $k$. Let us now show that choosing $k$ properly large enables one to remove the Continual Participation requirement. This requirement ensures a crucial property: namely, that the underlying BA protocol *BBA\** has a proper honest majority. Let us now explain how lazy honesty provides an alternative and attractive way to satisfy this property.

Recall that a user $i$ is lazy-but-honest if (1) he follows all his prescribed instructions, when he is asked to participate to the protocol, and (2) he is asked to participate to the protocol only very rarely -e.g., once a week- with suitable advance notice, and potentially receiving significant rewards when he participates.

To allow Algorand to work with such players, it just suffices to "choose the verifiers of the current round among the users already in the system in a much earlier round." Indeed, recall that the verifiers for a round $r$ are chosen from users in round $r$ - $k$, and the selections are made based on the quantity $Q^{r-1}$. Note that a week consists of roughly 10,000 minutes, and assume that a round takes roughly (e.g., on average) 5 minutes, so a week has roughly 2,000 rounds. Assume that, at some point of time, a user $i$ wishes to plan his time and know whether he is going to be a verifier in the coming week. The protocol now chooses the verifiers for a round $r$ from users in round $r$ - $k$ - 2,000, and the selections are based on $Q^{r-2,001}$. At round $r$, player $i$ already knows the values $Q^{r-2,000}$, ..., $Q^{r-1}$, since they are actually part of the blockchain. Then, for each $M$ between 1 and 2,000, $i$ is a verifier in a step $s$ of round $r$ + $M$ if and only if

$$.H\left(SIG_i\left(r + M, s, Q^{r+M-2,001}\right)\right) \le p \ .$$

Thus, to check whether he is going to be called to act as a verifier in the next 2,000 rounds, $i$ must compute $\sigma_i^{M,s} = SIG_i\left(r + M, s, Q^{r+M-2,001}\right)$ for $M$ = 1 to 2,000 and for each step $s$, and check whether $.H(\sigma_i^{M,s}) \le p$ for some of them. If computing a digital signature takes a millisecond, then this entire operation will take him about 1 minute of computation. If he is not selected as a verifier in any of these rounds, then he can go off-line with an "honest conscience". Had he continuously participated, he would have essentially taken 0 steps in the next 2,000 rounds anyway! If, instead, he is selected to be a verifier in one of these rounds, then he readies himself (e.g., by obtaining all the information necessary) to act as an honest verifier at the proper round.

By so acting, a lazy-but-honest potential verifier $i$ only misses participating to the propagation of messages. But message propagation is typically robust. Moreover, the payers and the payees of recently propagated payments are expected to be online to watch what happens to their payments, and thus they will participate to message propagation, if they are honest.

**8 Protocol *Algorand'* with Honest Majority of Money**

We now, finally, show how to replace the Honest Majority of Users assumption with the much more meaningful Honest Majority of Money assumption. The basic idea is (in a proof-of-stake flavor) "to select a user $i \in PK^{r-k}$ to belong to $SV^{r,s}$ with a weight (i.e., decision power) proportional to the amount of money owned by $i$."[45]

[45]We should say $PK^{r-k-2,000}$ so as to replace continual participation. For simplicity, since one may wish to require continual participation anyway, we use $PK^{r-k}$ as before, so as to carry one less parameter.

By our HMM assumption, we can choose whether that amount should be owned at round $r$ - $k$ or at (the start of) round $r$. Assuming that we do not mind continual participation, we opt for the latter choice. (To remove continual participation, we would have opted for the former choice. *Better said, for the amount of money owned at round $r$ - $k$ - 2,000.*)

There are many ways to implement this idea. The simplest way would be to have each key hold at most 1 unit of money and then select at random $n$ users $i$ from $PK^{r-k}$ such that $a_i^{(r)} = 1$.

**The Next Simplest Implementation**

The next simplest implementation may be to demand that each public key owns a maximum amount of money *M,* for some fixed *M.* The value *M* is small enough compared with the total amount of money in the system, such that the probability a key belongs to the verifier set of more than one step in -say- *k* rounds is negligible. Then, a key $i \in$

*PK$^{r-k}$,* owning an amount of money $a_i^{(r)}$ in round *r,* is chosen to belong to *SV$^{r,s}$* if

$$.H\left(SIG_i\left(r,s,Q^{r-1}\right)\right) \leq p \cdot \frac{a_i^{(r)}}{M} \ .$$

And all proceeds as before.

**A More Complex Implementation**

The last implementation "forced a rich participant in the system to own many keys".
An alternative implementation, described below, generalizes the notion of status and consider each user *i* to consist of *K* + 1 *copies* (*i, v*), each of which is independently selected to be a verifier, and will own his own ephemeral key $\left(pk_{i,v}^{r,s}, sk_{i,v}^{r,s}\right)$ in a step *s* of a round *r.* The value *K* depends on the amount of money $a_i^{(r)}$ owned by *i* in round *r.*
Let us now see how such a system works in greater detail.

**Number of Copies** Let *n* be the targeted expected cardinality of each verifier set, and let $a_i^{(r)}$ be the amount of money owned by a user *i* at round *r.* Let *A$^r$* be the total amount of money owned by the users in *PK$^{r-k}$* at round *r,* that is,

$$A^r = \sum_{i \in PK^{r-k}} a_i^{(r)}.$$

If *i* is an user in *PK$^{r-k}$,* then *i*'s copies are (*i,* 1),..., (*i, K* + 1), where

$$K = \left\lfloor \frac{n \cdot a_i^{(r)}}{A^r} \right\rfloor \ .$$

EXAMPLE. Let *n* = 1,000, *A$^r$* = 10$^9$, and $a_i^{(r)} = 3.7$ millions. Then,

$$K = \left\lfloor \frac{10^3 \cdot (3.7 \cdot 10^6)}{10^9} \right\rfloor = \lfloor 3.7 \rfloor = 3 \ .$$

**Verifiers** and Credentials Let *i* be a user in *PK$^{r-k}$* with *K* + 1 copies.
For each *v* = 1,..., *K,* copy (*i, v*) belongs to *SV$^{r,s}$* automatically. That is, *i*'s credential is $\sigma_{i,v}^{r,s} \triangleq SIG_i((i,v),r,s,Q^{r-1}),$ but the corresponding condition becomes $.H(\sigma_{i,v}^{r,s}) \leq 1,$ which is always true.
For copy (*i, K* + 1), for each Step *s* of round *r, i* checks whether

$$.H\left(SIG_i\left((i,K+1),r,s,Q^{r-1}\right)\right) \leq a_i^{(r)}\frac{n}{A^r} - K \ .$$

If so, copy (*i, K* + 1) belongs to *SV$^{r,s}$.* To prove it, *i* propagates the credential

$$\sigma_{i,K+1}^{r,1} = SIG_i\big((i, K+1), r, s, Q^{r-1}\big).$$

EXAMPLE. As in the previous example, let $n$ = 1$K$, $a_i^{(r)} = 3.7M$, $A^r$ = 1$B$, and $i$ has 4 copies: $(i, 1),...,(i, 4)$. Then, the first 3 copies belong to $SV^{r,s}$ automatically. For the 4th one, conceptually, *Algorand'* independently rolls a biased coin, whose probability of Heads is 0.7. Copy $(i, 4)$ is selected if and only if the coin toss is Heads.

(Of course, this biased coin flip is implemented by hashing, signing, and comparing -as we have done all along in this application- so as to enable $i$ to prove his result.)

**Business as Usual** Having explained how verifiers are selected and how their credentials are computed at each step of a round $r,$ the execution of a round is similar to that already explained.

### 9 Forks

Having reduced the probability of forks to $10^{-12}$ or $10^{-18}$, it is practically unnecessary to handle them in the remote chance that they occur. Algorand, however, can also employ various fork resolution procedures, with or without proof of work.

### 10 New Structures for Blocks and Status Information

This section proposes a better way to structure blocks, that continues to guarantee the tamperproofness of all blocks, but also enables more efficient way to prove the content of an individual block, and more generally, more efficient ways to use blocks to compute specific quantities of interest without having to examine the entire blockchain.

**The Tamperproofness of Blockchains** Recall that, to form a block chain, a block $B_r$ has the following high-level structure:

$$B_r = \big(r, INFO_r, H(B_{r-1})\big).^{46}$$

[46]Recall that we use superscripts to indicate rounds in Algorand. This section, however, is dedicated to blockchains in general, and thus the $r$th block may not correspond to the $r$th round in the sense of Algorand. That is, above "$r$" is just the block number, and it is included in block $B_r$ for clarity.

Also note that the above general structure of a block is conceptual. For instance, in Bitcoin, $B_r$ may include the digital signature of the block constructor, the one who has solved the corresponding computational riddle. In Algorand , the authentication of $B_r$-that is, a matching certificate $CERT_X$-may be separately provided . However, it could also be provided as an integral part of $B_r$. In this latter case, since there may be many valid certificates, the leader $\ell_r$ of round $r$ may also include, in its message to all round-$r$ verifiers, a valid certificate for the output of the previous round, so that agreement will also be reached on what the certificate of each round $r$ is.

Above, $INFO_r$ is the information that one wishes to secure within the $r$th block: in the case of Algorand, $INFO_r$ includes $PAY^r$, the signature of the block leader of the quantity $Q^{r-1}$, etc.

A well-known fundamental property of a blockchain is that it makes the content of each of its blocks *tamperproof.* That is, no one can alter a past block without also changing the last block. We quickly recall this property below.

Let the latest block be $B_{last}$, and assume that one replaces $B_r$ with a different ("crooked") block $\widetilde{B_r}$. Then, since $H$ is collision resilient, $H(\widetilde{B_r})$ is, with overwhelming probability, different from $H(B_r)$. Accordingly, no matter how one chooses the information $\widetilde{INFO}_{r+1}$ in the block in the blockchain, namely $\widetilde{B_{r+1}} = (r+1, \widetilde{INFO}_{r+1}, H(\widetilde{B_r}))$, it is the case that, due again to the collision resiliency of $H$,

$$\widetilde{B_{r+1}} \neq B_{r+1}.$$

This inequality propagates. That is, $\widetilde{B_{r+2}}$ differs from $B_{r+2}$; and so on; so that, ultimately,

$$\widetilde{B_{last}} \neq B_{last} \ .$$

**Inefficient Verifiability of Individual Blocks in Blockchains** Consider a person $X$ who does not know the entire blockchain, but knows that $B_z$ is a correct block in it. Then, the above fundamental property enables one to prove to such a person that any individual block $B_r$, where $r$ is smaller than $z$, is also correct. Namely, one provides, as a "proof", all the intermediate blocks $B_{r+1}$, ..., $B_{z-1}$ to $X$, who then uses $H$ to regenerate the blockchain from $r$ onwards, until he reconstructs the $z$th block and checks whether or not it coincides with the block $B_z$ that he knows. If this is the case, then $X$ is convinced of the correctness of $B_r$. Indeed, anyone capable of finding such a seemingly legitimate proof must also have found a collision in the hash function $H$, which is practically impossible to find.

To see the usefulness of such verifiability, consider the following example. Assume that the blockchain is generated by a payment system, such as Bitcoin or Algorand, and let $X$ be a judge in a court case in which the defendant wishes to prove to $X$ that he had indeed made a disputed payment $P$ to the plaintiff two years earlier. Since it it reasonable to assume that the judge can obtain the correct last block in the chain, or at least a sufficiently recent correct block, $B_z$, "all" the defendant has to do is to provide the proof $B_{r+1},...,B_{z-1}$ to the judge, who then verifies it as explained. The problem, of course, is that such a proof may be quite long.

**Blocktrees** Since the ability to prove efficiently the exact content of a past individual block is quite fundamental, we develop new block structures. In these structures, like in blockchains, the integrity of an entire block sequence is compactly guaranteed by a much shorter value $v$. This value is not the last block in the sequence. Yet, the fundamental property of blockchains is maintained: any change in one of the blocks will cause a change in $v$.

The advantage of the new structures is that, given $v$, and letting $n$ be the number of blocks currently in the sequence, the content of each individual block can be proved very efficiently. For instance, in *blocktrees*, a specific embodiment of our new block structures, if the total number of blocks ever produced is $n$, then each block can be proved by providing just $32 \cdot \lceil \log n \rceil$ bytes of information.

This is indeed a very compact proof. In a system generating one block per minute, then, after 2 millennia of operations, $\lceil \log n \rceil < 30$. Thus, less than 1KB-1,000 bytes-suffice to prove the content of each individual block. (Less than 2KB suffice after two billion years, and 4KB suffice essentially forever.) Moreover, such a proof is very efficiently verified.

**Efficient Status** A different efficiency problem affects Bitcoin and, more generally, payment systems based on blockchains. Namely, to reconstruct the status of the system (i.e., which keys owns what at a given time), one has to obtain *the entire payment history* (up to that time), something that may be hard to do when the numbers of payments made is very high.

We shall use blocktrees in order to attain also such desiderata

We construct blocktrees by properly modifying a much older notion recalled below.

## 10.1 Merkle Trees

Merkle trees are a way to authenticate $n$ already known values, $v_0$, ... , $v_{n-1}$, by means of a single value $v$, so that the authenticity of each value $v_i$ can be individually and efficiently verified.

For simplicity, assume that $n$ is a power of 2, $n = 2^k$, so that each value is uniquely identified by a separate $k$-bit string, $s$. Then, a Merkle tree $T$ is conceptually constructed by storing specific values in a full binary tree of depth $k$, whose nodes have been uniquely named using the binary strings of length $\leq k$.

The root is named $\varepsilon$, the empty string. If an internal node is named $s$, then the left child of $s$ is named $s0$ (i.e., the string obtaining by concatenating $s$ with 0), and the right child is named $s1$. Then, identifying each integer $i \in \{0,..., n - 1\}$, with its binary $k$-bit expansion, with possible leading 0s, to construct the Merkle tree $T$, one stores each value $v_i$ in leaf $i$. After this, he *merklefies* the tree, that is, he stores in all other nodes of $T$ in a bottom up fashion (i.e., by first choosing the contents of all nodes of depth $k - 1$, then those of all nodes of depth $k - 2$, and so on) as follows. If $v_{s0}$ and $v_{s1}$ are respectively stored in the left and right child of node $s$, then he stores the 256-bit value $v_s \triangleq H(v_{s0}, v_{s1})$ in node $s$. At the end of this process, the root will contain the 256-bit value $v_\varepsilon$.

A Merkle tree of depth 3 and 8 leaves is shown in Figure 1.A.

Assume now that $v_\varepsilon$ is known or digitally signed, and let us show how each original value $v_i$ can be authenticated relative to $v_\varepsilon$.

Consider the (shortest) path $P$ that, starting from a node $x$, reaches the root. Then, the *authenticating path* of the content $v_x$ of $x$ is the sequence of the contents of the *siblings* of the nodes in $P$, where the sibling of a node $s0$ is node $s1$, and viceversa. Accordingly, an authenticating path of a leaf value in a tree of depth $k$ consists of $k - 1$ values. For example, in the Merkle tree of Figure 1.A, the path from leaf 010 to the root is $P = 010, 01, 0, \varepsilon$, and the authenticating

path of $v_{010}$ is $v_{011}$, $v_{00}$, $v_1$, since the root has no sibling. The path $P$ and the authenticating path of $v_{010}$ in the Merkle tree of Figure 1.A are illustrated in Figure 1.B.

One can use a full binary tree with $2^k$ leaves to have a Merkle tree that authenticates $n < 2^k$ values $v_0,..., v_{n-1}$, by storing each $v_i$ in the $i$th leave, and a special string $e$ (for *empty*) in all remaining leaves, and then filling the rest of the nodes in the usual manner. The resulting Merkle tree has (de facto) have $n$ leaves (since all other leaves are empty).[47]

[47]One can also assume that the hash function $H$ is such that $H(e,e) \triangleq e,$ so that one can "trim" all the nodes in the Merkle tree below any node whose content is $e$.

To verify (the authenticity of) $v_i$, given its authenticating path, relative to the root value $v_\varepsilon$, one reconstructs the contents of the nodes in the path from leaf $i$ to the root, and then checks whether the last reconstructed value is indeed $v_\varepsilon$. That is, if the authenticating path is $x_1, ... , x_{k-1}$, then one first $H$-hashes together $v_i$ and $x_1$, in the right order -i.e., computes $y_2 = H(v_i, x_1)$, if the last bit of $i$ is 0, and $y_2 = H(x_1, v_i)$ otherwise. Then, one $H$-hashes together $y_2$ and $x_2$, in the right order. And so on, until one computes a value $y_k$ and compares it with $v_\varepsilon$. The value $v_i$ is authenticated if and only if $y_k = v_\varepsilon$.

The reason why such verification works is, once again, that $H$ is collision resilient. Indeed, changing even a single bit of the value originally stored in a leaf or a node also changes, with overwhelming probability, the value stored in the parent. This change percolates all the way up, causing the value at the root to be different from the known value $v_\varepsilon$.

**10.2 Blocktrees**

As we have seen, Merkle trees efficiently authenticate arbitrary, and arbitrarily many, *known* values by means of a single value: the value $v_\varepsilon$ stored at the root. Indeed, in order to authenticate $k$ values $v_0, ... , v_{k-1}$ by the single root content of a Merkle tree, one must first know $v_0, ... , v_{k-1}$ in order to store them in the first $k$ leaves of the tree, store e in other proper nodes, and then compute the content of all other nodes in the tree, including the root value.

Merkle trees have been used in Bitcoin to authenticate the payments of a given block. Indeed, when constructing a given block, one has already chosen the payments to put in the block.

However, using Merkle trees to authenticate a growing blockchain is more challenging, *because one does not know in advance which blocks to authenticate.*

Yet, we show how to use Merkle trees, used in a novel way, to obtain new block structures enabling the efficient provability of individual blocks. Let us illustrate our preferred such structures, *blocktrees.*

**Blocktree Guarantees** Blocktrees secure the information contained in each of a sequence of blocks: $B_0, B_1,...$ This important property is not achieved, as in a blockchain, by also storing in each block the hash of the previous one. However, each block also stores some short *securing* information, with the guarantee that any change made in the content of a block $B_i$ preceding a given block $B_r$ will cause the securing information of $B_r$ to change too. This guarantee of blocktree is equivalent to that offered by blockchains. The main advantage is that the new securing information allows one to prove, to someone who knows the securing information of block $B_r$, the exact content of any block $B_i$, without having to process all the blocks between $B_i$ and $B_r$. This is a major advantage, because the number of blocks may be (or may become) very very large.

**Block Structure in Blocktrees** In a blocktree, a block $B_i$ has the following form:

$$B_r = (r, INFO_r, \mathcal{S}_r) ,$$

where $INFO_r$ represents the information in block $B_r$ that needs to be secure, and $S_r$ the securing information of $B_r$.

In our preferred embodiment of block trees, the securing information $S_r$ information is actually quite compact. It consists of a sequence of $\lceil \log r \rceil$ 256-bit strings, that is, $\lceil \log r \rceil$ strings of 32 bytes each. Notice that, in most practical applications $\lceil \log r \rceil < 40$, because $2^{40}$ is larger than a quadrillion.

Below, we specify the information $S_r$ just for blocktrees. Those skilled in the art will realize that it can be easily generalized to a variety of other block structures with essentially identical guarantees, all of which within the scope of the invention.

**Block Generation in Blocktrees** For brevity, let us set $INFO_r = v_r$. Conceptually, we start with a full binary tree $T$ of depth $k$ such that $2^k$ upper-bounds the number of possible values $v_r$. Blocks are generated in order, because so are the values $v_0, v_1, ...$. When a new value $v_i$ is generated, it is, conceptually speaking, stored in leaf $i$ of $T$, and then various strings are computed and stored in the nodes of $T$, so as to construct a Merkle tree $T_i$. One of these strings is the distinguished string $e$. (When appearing in a node $x$ of $T_i$, string $e$ signifies that no descendant of $x$ belongs to $T_i$,

and we assume that $H(e, e) \triangleq e.$ )

When the first value, $v_0$, is generated and stored in leaf 0, $T_0$ coincides with (the so filled) node 0 of $T$. In fact, such $T_0$ is an elementary Merkle tree. Its depth is $\lceil \log(0 + 1) \rceil = 0$, its root is $R_0 = 0$, and it stores $v_0$ in its first depth-0 leaf (and in fact in its only leaf and node).

When the $i + 1^{st}$ value, $v_i$, has been generated and stored in leaf $i$ of $T$ (possibly replacing the string e already there), the Merkle tree $T_i$ is constructed as follows from the previous Merkle tree $T_{i-1}$. (By inductive hypothesis, $T_{i-1}$ has depth is $\lceil \log i \rceil$; root $R_{i-1}$; and $i$ depth-$\lceil \log(i + 1) \rceil$ leaves, respectively storing the values $v_0, \dots, v_{i-1}$.)

Let $R_i = R_{i-1}$, if leaf $i$ is a descendant of $R_{i-1}$, and let $R_i$ be the parent of $R_{i-1}$ otherwise. Let $P$ be the (shortest) path, in $T$, from leaf $i$ to node $R_i$. For every node $j$ in $P$, store the special string e in its sibling $j'$, if $j'$ is empty. Finally, for each node $s$ in $P$, in order from leaf $i$ (excluded) to node $R_i$ (included), store in $s$ the value $v_s = H(v_{s0}, v_{s1})$, if $v_{s0}$ and $v_{s1}$ respectively are the values stored in the left and right child of $s$. It is easy to see that the subtree of $T$ rooted at $R_i$, storing the so computed values in its nodes, is a Merkle tree. This Merkle tree is $T_i$.

The construction of the first 8 consecutive Merkle trees, when the initially empty full binary tree $T$ has depth 3, is synthesized in Figure 2. Specifically, each sub-figure 2.$i$ highlights the Merkle tree $T_i$ by marking each of its nodes either with the special string $e$ (signifying that "$T_i$ is empty below that node"), or with a number $j \in \{0,\dots,i - 1\}$ (signifying that the content of the node was last changed when constructing the Merkle tree $T_j$). To highlight that the content of a node, lastly changed in $T_j$, will no longer change, no matter how many more Merkle trees we may construct, we write $j$ in bold font.

With this in mind, we generate a new block $B_i$ as follows. After choosing the information $INFO_i$ that we want to secure in the $i$th block, we store the value $v_i = INFO_i$ into leaf $i$ of $T$; construct the Merkle tree $T_i$; and set

$$\mathcal{S}_i = (R_i, auth_i) \ ,$$

where $R_i$ is the root of $T_i$ and $auth_i$ is the authenticating path of $v_i$ in $T_i$. Then, the new block is

$$B_i = (i, INFO_i, \mathcal{S}_i) \ .$$

Notice that $S_i$ indeed consists of $\lceil \log i \rceil$ strings. To ensure that each string in $auth_i$, and thus every string in $S_i$, is actually 256-bit long, rather than storing $v_i$ in leaf $i$, we may store $H(v_i)$ instead.

**Security and Provability with Blocktrees** Assume that someone knows a block $B_r$ and wishes to correctly learn the information $INFO_i$ of a previous block $B_i$. Note that, when constructing the sequence of Merkle trees $T_0, T_1, \dots$, each tree contains the previous one as a subtree. In fact, the leaves of each tree $T_x$ are the first $x + 1$ leaves of each subsequent tree $T_y$, because the contents of previous leaves are left alone, and new values are inserted in the first leaf on the right of the last filled one. Thus, $INFO_i$ is the content of the $i$th leaf of the Merkle tree $T_r$, whose rth leaf contains $INFO_r$ and whose root value $R_r$ is the first component of $S_r$, the security information of block $B_r$.

Note that someone who knows $B_r$ also knows $S_r$ and $R_r$. Accordingly, to prove to such a "person" that $INFO_i$ is the information of block $B_i$, it suffices for one to provide him with the authenticating path of $INFO_i$ in the Merkle tree $T_r$. In fact, we have already seen that such authenticating information can be easily checked, but not easily faked!

Note such authenticating path consists of $d = \lceil \log r \rceil$ values (because $T_r$ has depth $d + 1$), each consisting of 32Bytes (because $H$ produces 32-byte outputs). Thus, proving the content of $B_i$ relative to $B_r$ is very easy. As mentioned, in most practical applications $d < 40$.

**Block Constructibility from Readily Available Information** To construct the structural information $S_i$ that is part of block $B_i$, it would seem that one would need information from all over the Merkle tree $T_i$. After all, $INFO_i$ and thus the value $v_i$ stored in leaf $i$, are readily available, but the authenticating path of $v_i$, $auth_i$, comprises contents of nodes of previous trees, which in principle may not be readily available. If one had to obtain the entire $T_{i-1}$ in order to construct $S_i$, then constructing a new block $B_i$ might not be too efficient.

However, note that, very much in the spirit of block chains, each $B_i$ is trivially computable from the previous block $B_{i-1}$ and the chosen information $INFO_i$. Indeed, each string in $S_i$ is one of

(a) $H(INFO_i)$,

(b) the fixed string e,

(c) a string in $S_{i-1}$, and

(d) a string obtained by hashing in a predetermined manner strings of the above types.

Figure 3 highlights -via a thick border- the nodes whose contents suffice to compute $S_i = (R_i, auth_i)$ for the construction of the first 8 blocks in a blocktree. Specifically, each subfigure 3.$i$ highlights the nodes whose contents suffice for generating $S_i$. Each highlighted node is further marked a, $b$, or c, to indicate that it is of type (a), (b), or (c). Nodes of type (d), including the root $R_i$, are left unmarked.

In sum, in a blocktree-based system, block generation is very efficient.

## 10.3 Efficient Management of Status Information

Blocktrees improve the secure handling of blocks in all kinds of applications, including payment systems, such as Algorand. In such systems, however, there is another aspect that would greatly benefit from improvement: the status information.

**The Need for Efficient Status Information** Recall that the official status at round $r$, $S^r$, consists of a list of tuples, specifying, for each current public key $x$, the amount owned by $x$, and possibly additional information:

$$S^r = \ldots, \left(x, a_x^{(r)}, \ldots\right), \ldots$$

The amount of money owned by the keys in the system changes dynamically, and we need to keep track of it as efficiently as possible.

So far, as in Bitcoin (although its status information is quite different), the current status is not authenticated, but is deducible from the authenticated history of payments. Blocktrees do not guarantee the ability to prove the status $S^r$ at a round $r$. In fact, via blocktrees, the payset $PAY^i$ of a block $B_i$ preceding $B^r$ could be efficiently proven, relative to $B^r$. However, to prove the status $S^r$ one should, in general, provably obtain the paysets of *all* the blocks preceding $B^r$. It is therefore needed an efficient method, for a *prover P* to prove $S^r$ to other users or entities who do not know $S^r$, or who know it, but would like to receive a tangible evidence of its current value.

In particular, such a method would make it easy and secure, for a new user, or a user who has been off-line for a while, to catch up with the current system status.

Let us now provide such a method: *statustrees.*

**Statustrees: A First Method** A statustree $ST^r$ is a special information structure that enables $P$ to efficiently prove the value of status $S^r$ at the end of round $r$ - 1.

In fact, $ST^r$ enables $P$ to efficiently prove, for any possible user $i \in PK^r$, the exact amount $a_i^r$ that $i$ owns at the start of round $r$, without having to prove the status of all users (let alone provide the entire block sequence $B^0, \ldots, B^{r-1}$). In fact, it may be important for some user to correctly learn the status of just a few users -e.g., those from which he may consider receiving a payment, to make sure they have the money before -say- start negotiating with them. It may be even be useful for a user $i$ to receive a proof of his own value of $a_i^r$ -e.g., in order to get a loan, be taken seriously in a negotiation, or putting a purchase order.

Assume first that $P$ knows the entire block sequence $B^0, \ldots, B^{r-1}$ and is widely trusted, at least by a group of users and entities. In this case, $P$

- obtains (e.g., retrieves) the payset sequence $PAY^0, \ldots, PAY^{r-1}$;

- computes the set of users $PK^r$;

- constructs a Merkle tree $T^r$, with at least $n_r = |PK^r|$ leaves, in which the first $n$ leaves store the status information of all the $n$ users, and each leaf stores the information of a single user (other leaves, if any, may store the distinguished string e signaling that the leaf is "empty"); and

- makes available to at least another entity the root value $R_r$ of $T_r$, preferably digitally signed.

Then, any time that someone asks $P$ for the status of some user $x \in PK^r$, $P$ provides him with the authenticating path in $T^r$ of the value stored in leaf $\ell_x$, if $\ell_x$ stores the status information of $i$.

Importantly, after computing and digitally signing $R_r$, $P$ no longer needs to be around in order to answer queries about the status of some user. Indeed, any other entity $P'$, who also knows $T^r$ could answer the queries of an entity $V$ about $x$. In fact, $P'$ could provide $V$ with the same digitally signed root value $R_r$, the status information about $x$, and the same authenticating path for the latter information that $P$ would have provided to $V$. Thus, if $V$ trusts $P$, then he can verify the answer provided by *P'* even if he does not trusts *P'*. In fact, since the reported authenticating path guarantees that *x*'s status is correct relative to the root $R_r$ of the Merkle tree $T^r$, and since $R_r$ is digitally signed by *P*, *V* can verify the authenticity of the status information about *x*. As long as he trusts *P*, *V* does not need to trust *P'*.

Thus, *P* may publicize (or make available to another entity *P'*) his digital signature of $R_r$, and let others (*P'*) answer status question in a provable manner.

We now wish to highlight the following properties of this first method.

> 1. (*"Good News"*) *P* does not need to compute $T^r$ from scratch at each round r.
> In fact, since it doesn't matter where the status of a user $x \in PK^r$ is stored, having computed and stored the previous Merkle tree $T^{r-1}$, *P*, after learning the payset $PAY^r$ of the new block $B^r$, he can compute $T^r$ from $T^{r-1}$. Essentially, if $PAY^r$ has *k* payments, then *P* needs to update the status information of at most *2k* users (i.e., the status information of the payer and payee of each payment in $PAY^r$) and insert for the first time the status information of at most *k* new users (assuming, for simplicity only, that each payment in $PAY^r$ can bring into the system at most one more user). As in the case of a block tree, the status of each new user can be inserted in the next empty leaf. Further note that, each time that *P* updates the status of an existing user *i*, *P* needs to change only the contents on the path from a leaf storing *i*'s status to the root. This path is at most $\lceil \log n \rceil$ long, if *n* = |$PK^r$|, and requires at most as many hashes. The same essentially holds for each newly added user. Note that, although the number of users *n* may be very large, *k*, that is, the number of users transacting in a given round, may be small. Moreover, only $O(k.\lceil \log n \rceil)$ hashes are needed to update $T^r$ from $T^{r-1}$. This may indeed be more advantageous that computing $T^r$ from scratch, which will require some *n* hashes.
>
> 2. (*"Bad News"*) If asked about a user $x \notin PK^r$, *P/P'* cannot prove that $x \notin PK^r$.
> Indeed, when some *V* asks about the status of a user *x* in a round *r*, neither *P* nor *P'* can easily prove to *V* that no status information about *x* exists because *x* was not in the system at that round.
> *P* or *P'* may specify *V* the content of each leaf $\ell$ in $T^r$. From this global information, *V* can (a) check that no leaf contains the status of *x*; (b) reconstruct the root value of the Merkle tree corresponding to these leaf contents; and (c) check that the so computed value coincides with the root value $R_r$ digitally signed by *P*. Such global information, however, may be very large and not easy to transmit.

The inability to easily provide credible answers to queries about not (at least yet) existing users may not be a concern. (E.g., because the total number of users is not too large.) In this case, our first method is just fine. However, should it be a concern, we thus put forward a different method.

**Statustrees: A Second Method** Assuming again that *P* knows the entire block sequence $B^0,..., B^{r-1}$. Then, in a second method, *P*

- retrieves the payset sequence $PAY^0,..., PAY^{r-1}$;

- computes the set of users $PK^r$;

- computes the status information (*i*, $a_i^x$ ) of every user $i \in PK^r$;

- orders the *n* status-information pairs according to the first entries (e.g., according to the lexicographic order of their users);

- constructs a Merkle tree $T^r$, whose first leaf contains the status information of the first user in $PK^r$, the second leaf the status of the second user, etc. (additional leaves, if any, contain the string *e*); and

- digitally signs the root value $R_r$ of $T_r$ and makes available this signature.

Note that this second method continues to enable another (not necessarily trusted) entity *P'* to credibly answer questions about the status of individual users, but "reverses" the news relative to properties 1 and 2. That is,

> 1'. (*"Bad News"*) It is not easy to use $T^{r-1}$ as before to easily construct $T^r$.
> This is so because the leaves of $T^r$ now contain the status information of the users ordered according to the users, inserting a new user becomes problematic. If a single new user needs to be inserted in -say- the middle of the leaves, then the content of half of the leaves must be changed.
> 2'. (*"Good News"*) *P* or *P'* can prove that a user $x \notin PK^r$ indeed does not belong to $PK^r$.
> If *V* asks about the status of a user *x* who is not in the system at round *r*, then even a non-trusted *P'* can provide the authentication paths, relative to the root value $R_r$ authenticated by *P*, of the contents of two consecutive leaves, one storing the status information about a user $i'$ and the other that of another user $i''$ such that $i' < i < i''$.

Note that $V$ can indeed determine that the two authentication paths are of the contents of two consecutive leaves. This is so because because, since it is practically impossible to find two different strings hashing to the same values, given two string $a$ and $b$, we have $H(a,b) \neq H(b,a)$. Accordingly, one can determined, given $h = H(a, b)$ that $h$ is the hash of "a followed by $b$", rather the other way around. This implies that, in the Merkle tree $T^r$, the authenticating path of a value $v_x$ not only proves what the value $v_x$ is, but also that it is stored in leaf $x$ of $T^r$.

For instance, consider FIG. 1.B. In that Merkle tree, the authenticating path of value $v_{010}$ is $(v_{011}, v_{00}, v_1)$. To verify $v_{010}$ using that authenticating path, one computes, in order, the following hashings

(a) $h_1 = H(v_{010}, v_{011})$,
(b) $h_2 = H(v_{00}, h_1)$,
(c) $h_3 = H(h_1, v_1)$,

and then checks whether $h_3$ indeed coincides the the root value $v_\varepsilon$.

Note that, since $H(x,y) \neq H(y,x)$,

hashing (a) proves that $v_{010}$ is stored in the 0-child of whatever node stores $h_1$;

hashing (b) proves that $h_1$ is stored in the 1-child of whatever node stores $h_2$; and hashing (c) proves that $h_2$ is stored in the 0-child of whatever node stores $h_3$.

Thus, since we have checked that $h_3$ is stored at the root, $V_{010}$ must be stored in the leaf 010, which is indeed the case.

Accordingly, if $V$ trusts $P$ to have stored, for each user $i \in PK^r$, the status in formation of $i$ in the $i$th leaf of $T^r$, then, seeing a proof that one leaf contains the status information of a user $i' < i$, and a proof that the next leaf contains the status information of a user $i'' > i$, then $V$ may safely conclude that $i \notin PK^r$.

(Also note that such authentication paths may share many values, and thus is not necessary to transmit to $V$ both authentication paths in their entirety.)

Property 1' may not be a concern. (E.g., because $P$ is perfectly capable of constructing $T^r$ from scratch.) If this is the case, then the second method is just fine.

Else, we need a method enabling $P$ to both easily construct $T^r$ from $T^{r-1}$ and easily prove that a user $x \notin PK^r$ indeed does not belong to $PK^r$.

We now provide this method.

**Statustrees: A Third Method** Recall that a *search tree* is a data structure that, conceptually, dynamically stores values from an ordered set in the nodes of a binary (for simplicity only!) tree. Typically, in such a tree, a node contains a single value (or is empty). The operations dynamically supported by such a data structure include inserting, deleting, and searching for a given value $v$. (If the value $v$ is not present, one can determine that too -e.g., because the returned answer is $\perp$.)

Initially, a search tree consists only of an empty root. If more values get inserted than deleted, then the tree grows. The depth of a binary tree with $n$ nodes is at best $\log n$, which is the case when the tree is full, and at most $n - 1$, which is the case when the tree is a path. The depth of a search tree is not guaranteed to be small, however. In the worst case, inserting $n$ specific nodes in a specific order, may cause the search tree to consist of depth $n$.

A *"balanced" search tree* guarantees that, if the number of currently stored values is $n$, then the depth of the tree is short, that is, logarithmic in $n$. In a balanced search tree with $n$ nodes, each of the three operations mentioned above can be performed in $O(\log n)$ elementary steps, such as comparing two values, swapping the contents of two nodes, or looking up the content of the parent/right son/left son of a node.

Several examples of balanced search trees are known by now. Particularly well known examples are AVL trees and B-trees. In some examples, values may be stored only in the leaves of the tree (while all other nodes contain "directional information" enabling one to locate a given value, if indeed it is stored in the tree). In other examples, values can be stored in any node. Below, we assume this more general case, and, for simplicity only, that the balance search tree operations are well known and deterministic algorithms.

Assume for a moment that prover $P$, having obtained the status information of all users in $PK^r$, wishes to construct a *balanced statustree* $T^r$ of a round $r$ from scratch. Then, he acts as follows.

- $P$ constructs a balanced search tree $T^r$, with $n = |PK^r|$ nodes, storing the users in $PK^r$.
  Note that this operation takes at most $O(n \log n)$ elementary steps, because, in the worst case, each insertion takes $O(\log n)$ elementary steps. (In fact, $P$ may want to gain some additional efficiency by ordering the users in $PK^r$ prior to inserting them in $T^r$.)

- $P$ substitutes in $T^r$ each stored user $i$ with $i$'s status information: $(i, a_i^x)$.
  That is, he stores in $T^r$ the status information of the users in $PK^r$, so that all insertions/deletions/searches about status information about users *i* can be performed via insertions/deletions/searches about users *i*.

(In other words, $T^r$ is a balanced tree searchable via the first entry stored in its nodes.)

- *P* "completes" $T^r$ so that every non-leaf node has exactly two children.

 In a binary tree, each node has at most two children. Thus, a non-leaf node *x* could have only one child. Without loss of generality, assume that it is *x*'s left child, *x*0. In this case, *P* conceptually gives *x* a right child, *x*1, in which he stores the string *e*.

- *P* associates to each node *x* of $T^r$ an hash value $hv_x$, so computed from the leaves upwards.

 If *x* is a leaf, then $hv_x$ is the hash of the value $v_x$ stored in x, that is, $hv_x = H(v_x)$.

 If *x* is a node of depth *d*, storing a value $v_x$, then $hv_x = H(hv_{x0}, hv_{x1}, H(v_x))$.

 The hash value finally associated to the root $\varepsilon$ of $T^r$ is $hv_\varepsilon \triangleq R_r.$

- P digitally sign $R_r$

We call the tree $T^r$ so obtained a *Merkle-balanced-search-tree.* Notice that such a $T^r$ is a balanced search tree, and thus the search/insert/delete algorithms work on $T^r$. At the same time, $T^r$ is a *generalized Merkle tree,* but a Merkle tree nonetheless. An ordinary Merkle tree stores the *information values,* that is, the values that need to be secured, only in the leaves, and stores in the internal nodes only *securing values,* that is, the hash values used to "secure" the tree. The Merkle tree $T^r$ stores, in each node *x*, both an information value, denoted by $v_x$, and a securing value, denoted by $hv_x$.

A proof, relative to the root securing value $R_r$ of what the information value $v_x$ actually is, comprises $hv_{x0}$, $hv_{x1}$, $H(v_x)$, and the authenticating path consisting (in a bottom-up order) of the value $hv_y$ for every node *y* that is a sibling of a node in the path from *x* to the root of $T^r$.

Let us now show that *P* need not to compute $T^r$ from scratch. Indeed, assume that *P* has available the Merkle-balanced-search-tree $T^{r-1}$ of the previous round. Then, after obtaining the new block $B^r$, *P* acts as follows for each payment $\wp$ in the payset $PAY^r$ of $B^r$.

If $\wp$ modifies the amount owned by an existing user, then *P* updates the status information of that user, in the node *x* in which it is stored, and then re-merklifies the tree. This simply entails recomputing the $hv_y$ values along the path from *x* to the root, and thus at most ⌈log *n*⌉ hashes, if *n* is the number of users.

If $\wp$ brings in a new user *i* with an initial amount of money $a_i$, then *P* inserts the status information $(i, a_i^r)$ in $T^r$. Since $T^r$ is a balanced search tree, this entails only $O(\log n)$ elementary steps and affects at most logarithmically many nodes. After that, *P* re-merklifies the tree.

After constructing $T^r$, *P* publicizes his digital signature of $R_r$, or gives it to *P'* who handles queries from various verifiers *V*, who may or may not trust *P'*.

To answer a query of *V* about a user *i*, *P'* acts as follows.

- *P'* runs the same algorithm that searches $T^r$ for user *i*.

 This search involves retrieving the content of at most $O(\log n)$ nodes of $T^r$, wherein, each retrieved content determines the node whose content needs to be retrieved next.

- Whenever the algorithm retrieves the content $v_x$ of a node *x*, *P'* provides a proof of $v_x$, relative to $R_r$

Accordingly, *V* may use *P*'s digital signature of $R_r$ and the received proofs to check that the content of every node *x* provided by *P'* is correct. Thus, *V* de facto runs the same search algorithm, in the Merkle tree $T^r$, to correctly retrieve the status information of user *i*, if $i \in PK^r$. Else, if $i \notin PK^r$ (i.e., if the search algorithm returns the symbol ⊥/the string *e*), then *V* is convinced that *i* was not a user in $PK^r$.

**Realizing a Trusted *P* in Algorand** When there is not an individual prover *P* trusted by many people, it becomes important to "construct" one.

Note that, in Algorand, one is assured that, at every step *s* of a round r the (weighted) majority of the verifiers in $SV^{r,s}$ are honest. Accordingly, we now ensure that verifiers are capable of carrying out the task of *P*!

More precisely,

- a potential verifier *i* of a round *r*, in addition to the other fields of a block, also generates a statustree $T^r$ (e.g., by using one of the three methods discussed above). Note that he can easily do this, because he typically knows the blockchain so far: $B^0,...,B^{r-1}$.

- *i* proposes a block $B_i^r$ which also includes the root value $R_r$ of $T^r$.

For instance,
$$B_i^r = \left(r, PAY^r, SIG_i(Q^{r-1}), R_r, H(B^{r-1})\right).$$

- The verifiers (in particular, the verifiers of the second step of round $r$) check that the block proposed by the leader of the round is valid, which includes checking whether the fourth component, that is, the root value $R_r$ of the statustree $T^r$ is valid.
  Indeed these verifiers know the block sequence so far, $B^0,...,B^{r-1}$, and thus can determine what the status information would be after round $r$, assuming that the block proposed by the identified leader is adopted.

- After BA agreement is reached, the official block of round r contains a correct root value $R_r$, and since $B^r$ is digitally signed by sufficiently many verifiers with the proper credentials, the certificate of $B^r$ also certifies $R_r$.

Note that the new official block may be empty, $B^r = B_\varepsilon^r.$ Such empty block is of the form

$$B_\varepsilon^r = \left(r, PAY^r, SIG_i(Q^{r-1}), R_{r-1}, H(B^{r-1})\right)$$

corresponding to the fact that, when the new block is the empty block, the status information of all users does not change.

In sum, the digital signature of $P$ of $R_r$ is replaced by the certificate of $B^r$. Since $R_r$ is authenticated anyway, even an untrusted prover $P'$ could prove the status information of every user $i$ at round $r$, relative to $R_r$, as before.

Note that everyone, who timely learn new blocks as they are generated, can, whenever the adopted statustree is of the "easily updatable" type, more easily construct $T^r$ from the previous $T^{r-1}$.

## 11 Representative Verifiers and Potential Verifiers

**Representative Verifiers** The probability of a user $i$ to be selected as a member of $SV^{r,s}$ can also be based on (e.g., again, proportionally to) the money that other users "vote" to $i$. A user $U$ may wish to retain control of all payments he makes and receives payments as usual. However, he may wish to delegate to another user $i$ the right and duties to act as a leader and/or a verifier. In this case, and for this purpose only, such a user $U$ may indicate that he wishes to make $i$ his *representative* for leader/verifier purposes. User $U$ may in fact delegate his leader/verifier duties to one or more users $i$. Let us assume, for a moment and without loss of generality, that $U$ chooses to have a single representative, $i$, for leader and verifier purposes.

There are several (preferably digitally signed) ways for $U$ to elect $i$ as his representative at a round $r$. For instance, he can do so via a payment $P$ to $i$ (e.g., using $P$'s non-sensitive field $I$) or via a payment $P'$ to another user, so as not to introduce (without excluding it) any additional machinery. Once such a payment $P$ or $P'$ is inserted in the payset $PAY^r$ of a block $B^r$, the community at large realizes $U$'s choice, and it becomes effective for $i$ to act as $U$'s representative.

If $U$ chooses $i$ as his representative at a round r, then this choice supersedes any prior one made by $U$, and $i$ preferably remains $U$'s representative until $U$ makes a different choice.[48] A user $U$ may also elect $i$ as his representative from the very moment he enters the system. For instance, if $U$ plans to enter the system via a payment $\wp$ from another user, $U$ may ask that user to include in $\wp$ a signature od $U$ indicating that $U$ chooses $i$ as his representative.

[48] Of course, here and elsewhere, ambiguity and ties are broken in some pre-specified way. For instance, if $PAY^r$ contains one signature of $U$ indicating that $U$ votes all his money to potential verifier $i$, and another signature indicting that $i$ votes all his money to a different potential verifier $j$, then $U$'s choice of representative is ignored, or, alternatively, $U$ de facto votes for $i$ if the corresponding signed statement precedes the one corresponding to $j$ in -say- the lexicographic order.

The money so voted to $i$ by $U$ (and possibly other users) and that directly owned by $i$ can be treated equally. For instance, if the verifiers were to be selected from the users in $PK^x$, according to the money owned at round $x$, then $U$ (and all other users who have chosen to "vote" their money to a representative) would have considered to have 0 money for the purpose of this selection, while the money according to which $i$ would be selected would be $a_i^x + VM_i^x,$

where $a_i^x$ is the money that $i$ personally own in round $x$, and $VM_i^x$ is the total amount of money "voted" to $i$ (by all users) at round $x$. For instance, if $U$ is the only user voting his money to $i$ in that round, then $VM_i^x = a_U^x.$ If the set of users voting their money to $i$ in round $x$ were $S$, then $VM_i^x = \sum_{j \in S} a_j^x.$ Of course, one way to select $i$ according to the money owned by him and voted to him at round $x$ consists of selecting $i$, via secret cryptographic sortition, with probability

$$\frac{a_i^x + VM_i^x}{\sum_{k \in PK^x} a_k^x} \ .$$

It also possible to treat the money directly owned by $i$ differently from the money voted to $i$. For instance, i could be chosen according to the amount of money $a_i^x + c \cdot VM_i^x,$ where $c$ is a given coefficient. For instance, when $c = 0.5$, the money directly owned by $i$ counts twice as much that voted to him.

It is also possible for a user $U$ to vote to $i$ only part of the money he owns. For instance, $U$ may choose to vote to $i$ only 3/4 of his money, and have the balance counted for having himself selected for $SV^{r,s}$. In this case, $U$ contributes only $0.75 a_U^x$ to $VM_i^x;$ and $U$ is selected in $SV^{r,s}$ with probability $0.25 a_U^x.$

There may be rewards offered to a user $i$ as a consequence of his being selected to belong in $SV^{r,s}$, and $i$ can share them with the users who voted part of their money to him. For instance, $i$ may receive a reward $R$ if he becomes the leader of a block. In this case, may correspond to $U$ part of this reward. For instance, if the money voted by $U$ to $i$ is $m$, then the fraction of $R$ paid $i$ to $U$ may be

$$\frac{m}{a_i^x + VM_i^x} \ .$$

Users' ability to choose and change representatives may help keeping representatives honest. For instance, if $U$ votes his money to $i$, but suspects that, whenever $i$ is the leader of a block $B^r$, the payset of $PAY^r$ is too often empty or "meager", $U$ may change his representative.

An ordinary user $U$ may also specify multiple representatives, voting to each one of them a different percentage of his money. Of course, a pre-specified procedure is used to prevent $U$ from voting more money than he actually has.

Another way to choose a representative is for a user $U$ to generate a separate public-secret digital signature pair $(pk_U', sk_U'),$ and transfer to $pk_U'$ (e.g., via a digital signature that enters a block in the blockchain) the power of representing $U$ for leader/verifier selection purposes. That is, $pk_U'$ cannot make payments on $U$'s behalf (in fact, $pk_U'$ may never have directly money), but can act as a leader or a verifier on $U$'s behalf, and can be selected as a leader/verifier according to the money that $U$ at the relevant round $x$. For instance, $pk_U'$ may be selected with probability

$$a_U^x / \sum_{k \in PK^x} a_k^x \ .$$

(This assumes that $U$ delegates all his leader/verifier rights/authorities, but of course, as discussed above, $U$ can delegate only part of his rights/authorities.) To delegates another user or entity $i$ to serve in his stead as a leader/verifier, $U$ gives $sk_U'$ to $i$. This makes it very clear how to split between $U$ and $i$ (in whatever determined proportions) any rewards that $pk_U'$ may "earn", because it is $pk_U'$ itself to be directly selected, rather than having $U$ contribute to the selection probability of $i$, as discussed earlier.

Note that it is not necessary that $U$ generates $(pk_U', sk_U')$ himself. For instance, $i$ can generate $(pk_U', sk_U'),$ and give $pk_U'$ to $U$ to sign, if $U$ wishes to choose $i$ as his representative.

In particular, a user $U$ may choose a bank $i$ as his representative, in any of the approaches discussed above. One advantage of choosing representatives is that the latter may have much faster and secure communication networks than typical users. If all ordinary users chose (or were required to choose) a proper representative, the generation of a block would be much sped up. The block may then be propagated on the network to which ordinary users have access. Else, if $i$ represents $U$, tne $i$ may give the new blocks directly to $U$, or give $U$ evidence that the payments he cares about have entered the blockchain.

**Potential Verifiers** So far, in Algorand, each user $i$ can be selected as a leader of a verifier in some round r. However, it is easily realizable by those skilled in the art that the above is not a restriction. Indeed, Algorand can have a set users, who can join at any time in a permissionless way and make and receive payments (more generally transactions) as usual, and a special class of *potential verifiers,* from whom round leaders and verifiers are selected. These two sets can be overlapping (in which case at least some potential verifier can also make and receive payments), or separate (in which case a potential verifier can only, if selected, act as a leader or a verifier). In a sense, in Algorand as described in the previous sections, each user is a potential verifier. Algorand may also have users or potential verifiers $i$ who have two separate amount of money, only one of which counts for $i$ to be selected as a leader or a verifier.

The class of potential verifiers can be made permissioned. In this case, the probability of selecting a verifier/leader $i$ among a given set $S$ of potential verifier need not depend on the amount of money $i$ owns. For instance, $i$ can be selected from $S$ via cryptographic sortition with uniform probability.

Alternatively, all potential verifiers can be always selected (and/or only one of then is selected as a round leader). In this case, the can use the protocol $BA^*$ to reach agreement on a new block, or more generally, they may use an efficient and preferably player-replaceable protocol.

## 12 Permissioned Algorand

In this section we discuss a permissioned version of Algorand that balances privacy and traceability, enables a new class of incentives, and provides a new, and *non-controlling,* role for banks or other external entities. This permissioned version relies on the classical notion recalled below.

### 12.1 Digital Certificates

Assume that the public key $pk$ of a party $R$, who has the authority to register users in the system, is publicly known. Then, after identifying a user $i$ and verifying that a public key $pk_i$ really belongs to $i$, $R$ may issue a *digital certificate,* $C_i$, guaranteeing that, not only is $pk_i$ a legitimate public key in the system, but also that some suitable additional information $info_i$ holds about $i$. In this case a certificate has essentially the following form:

$$C_i = SIG_R(R, pk_i, info_i).$$

The information specified in $info_i$ may be quite varied. For instance, it may specify $i$'s role in the system and/or the date of issuance of the certificate. It might also specify an expiration date, that is, the date after which one should no longer rely on $C_i$. If no such a date is specified, then $C_i$ is *non-expiring.* Certificates have long been used, in different applications and in different ways.

### 12.2 Algorand with (Non-Expiring) Certificates

In Algorand, one may require that each user $i \in PK^r$ has digital certificate $C_i$ issued by a suitable entity $R$ (e.g., by a bank in a pre-specified set). When making a round-$r$ payment $\wp$ to another user $j$, $i$ may forward $C_i$ and/or $C_j$ along with $\wp$, or include one or both of them in $\wp$ itself: that is, symbolically,

$$\wp = SIG_i(r, r', i, j, a, C_i, C_j, I, H(\mathcal{I})) \ .$$

Assuming the latter practice,

- A payment $\wp$ is considered valid at a round, and thus may enter $PAY^r$, only if it also includes the certificates of both its payer and its payee.
  Moreover, if the certificates have expiration dates $r = [t_1, t_2]$, then $t_2$ must be smaller than the earliest expiration date.
- At the same time, if such a payment belongs to $PAY^r$, then its corresponding money transfer is executed unconditionally.

**A Role for Non-Expiring Certificates** Once the certificate $C_i$ of a user $i$ expires, or prior to its expiration, as long as $i$ is "in good standing", $R$ may issue a new certificate $C_i'$ with a later expiration date.

In this case, therefore, $R$ has significant control over $i$'s money. It cannot confiscate it for its personal use (because doing so would require being able to forge $i$'s digital signature), but he can prevent $i$ from spending it. In fact, in a round $r$ following the expiration date of $C_i$, no payment of $i$ may enter $PAY^r$.

Note that this power of $R$ corresponds to the power of a proper entity $E$ -e.g., the government- to freeze a user's traditional bank account. In fact, in a traditional setting, such $E$ might even appropriate $i$'s money.

A main attraction of cryptocurrencies is exactly the impossibility, for any entity $E$, to separate a user from his money. Let us thus emphasize that *this impossibility continues to hold* in a certificate-based version of Algorand in which all certificates are *non-expiring.* Indeed, a user $i$ wishing to make a payment to another user $j$ in a round $r$ can always include the non-expiring certificates $C_i$ and $C_j$ in a round-$r$ payment $\wp$ to $j$, and $\wp$ will appear in $PAY^r$, if the leader $\ell^r$ of the round is honest. In sum,

*non-expiring certificates cannot be used to separate a user from his money, but may actually be very valuable to achieve other goals.*

### 12.3 Preventing Illegal Activities Via (Non-Expiring) Certificates

The payer and the payee of a payment made via a traditional check are readily identifiable by every one holding the check. Accordingly, checks are not ideal for money laundering or other illegal activities. Digital certificates, issued by a proper registration agent, could be used in Algorand to ensure that only some given entities can identify the owner $i$ of a given public key $pk_i$, and only under proper circumstances, without preventing $i$ from making the payments he wants. Let us give just a quick example.

There may be multiple registration authorities in the system. For concreteness only, let them be approved *banks,* whose public keys are universally known (or have been certified, possibly via a certificate chain) by another higher authority whose public key is universally known, and let $G$ be a special entity, referred to as the *government.*

To join the system as the owner of a digital public key, $i$ needs to obtain a certificate $C_i$ from one of the approved banks. To obtain it, after generating a public-secret signature pair ($pk_i, sk_i$), $i$ asks an approved bank $B$ to issue a certificate for $pk_i$. In order to issue such a certificate, $B$ is required to identify $i$, so as to produce some identifying information $ID_i$.[49] Then, $B$ computes $H(ID_i)$, and (preferably) makes it a separate field of the certificate. For instance, ignoring additional information, $B$ computes and gives $i$

$$C_i = SIG_B(B, pk_i, H(ID_i)).$$

Since $H$ is a random oracle, no one can recover the owner's identity from $C_i$. Only the bank knows that $pk_i$'s owner is $i$. However, if the government wishes to investigate-say- the payer of a payment $\wp = SIG_{pk_i}(r, pk_i, pk_{i'}, a, C_i, C_{i'}, I, H(\mathcal{I}))$, it retrieves from $\wp$ both the relevant certificate $C_i$ and the bank $B$ that has issued $C_i$, and then asks or compels $B$, with proper authorization (e.g., a court order), to produce the correct identifying information $ID_i$ of $i$. [49] Going "overboard", such $I_i$ may include $i$'s name and address, a picture of $i$, the digital signature of $i$'s consent -if it was digital-, or $i$ can be photographed together with his signed consent, and the photo digitized for inclusion in $I_i$. For its own protection and that of $i$ as well, the bank may also obtain and keep a signature of $i$ testifying that $I_i$ is indeed correct.

Note that the bank cannot reveal an identifying piece of information $ID_i'$ that is different from that originally inserted in the certificate, because $H$ is collision-resilient. Alternatively, instead of $H(ID_i$, it suffices to use any "commitment" to $ID_i$, in the parlance of cryptography.

One particular alternative to store, in $C_i$, an encryption of $ID_i$, $E(ID_i$, preferably using a private- or public-key encryption scheme $E$, that is uniquely decodable. In particular, $ID_i$ may be encrypted with a key known only to the bank $B$: in symbols, $E(ID_i) = E_B(ID_i)$. This way, the government needs $B$'s help to recover the identifying information $ID_i$.

Alternatively, $E$ may be a public-key encryption scheme, and $ID_i$ may be encrypted with a public key of the government, who is the only one to know the corresponding decryption key. In symbols, $E(ID_i) = E_G(ID_i)$. In this case the goverment needs not to have $B$'s help to recover $ID_i$. In fact, the identities of the payers and the payees of all payments are transparent to $G$. However, no one else may learn $ID_i$ from $E_G(ID_i)$, besides the government and the bank be that has compute $E_G(ID_i)$ from $ID_i$. Moreover, if the encryption $E_G(ID_i)$ is probabilistic, then even someone who has correctly guessed who the owner $i$ of $pk_i$ may be would be unable to confirm his guess.

Let us stress that neither $B$ nor $G$, once the certificate $C_i$ has been issued, has any control over $i$'s digital signatures, because only $i$ knows the secret key $sk_i$ corresponding to $pk_i$. In addition, neither $B$ or $G$ can understand the sensitive information $\mathcal{I}$ of the payment $\wp$ of $i$, because only $H(\mathcal{I})$ is part of $\wp$. Finally, neither $B$ nor $G$ is involved in processing the payment $\wp$, only the randomly selected verifiers are.

In sum, the discussed law-enforcement concern about Bitcoin-like systems is put to rest, without totally sacrificing the privacy of the users. In fact, except for $B$ and $G$, $i$ continues to enjoy the same (pseudo) anonymity he enjoys in Bitcoin, and similar systems, relative to any one else: banks, merchants, users, etc.

Finally, by using more sophisticated cryptographic techniques, it is also possible to increase user privacy while maintaining his traceability under the appropriate circumstances.[50]

[50]For instance, focusing on the last scenario, once $i$ has obtained from bank $B$ a certificate $C_i = SIG_B(B,pk_i,E_G(ID_i))$, it is also possible for $i$ to obtain another certificate $C'_i = SIG_B(B, pk'_i, E'_G(ID_i))$, for a different public $pk'_i$, for which $B$ no longer knows that $ID_i$ is the decryption of $E'_G(ID_i)$.

## 12.4 New Roles for Banks

Key certification in Algorand is a new role for the banks. A role that a bank $B$ can easily perform for its customers. Indeed, $B$ already knows them very well, and typically interacts with them from time to time. By certifying a key $i$ of one of its customers, $B$ performs a simple but valuable (and possibly financially rewarded) service.

Another role a bank $B$ may have in Algorand is that, properly authorized by a customer $i$, $B$ can transfer money from $i$'s traditional bank accounts to a digital key the digital $pk_i$ that $i$ owns in Algorand. (In fact, $B$ and all other banks do so "at the same exchange rate", Algorand may be used as a very distributed, convenient, and self-regulated payment system, based on a national currency.) One way for a bank $B$ to transfer money to $pk_i$ is to make a payment to $pk_i$ from a digital key $pk_B$ that $B$ owns in Algorand. In fact, banks may, more easily than their customers, convert national currency into Algorand at a public exchange.[51]

Finally, since banks are often trusted, a user $i$, retaining full control of the payments he makes, may wish to delegate a bank $B$ to act on his behalf as a verifier, sharing with $B$ his verification incentives.[52]

## 12.5 Rewards from Retailers Only

Whether or not the registration authorities are banks, and whether or not law-enforcement concerns are addressed, a permissioned deployment of Algorand enables one to identify (e.g., within its certificate $C_i$) that a given key $pk_i$ belongs to a *merchant.*

A merchant, who currently accepts credit card payments, has already accepted his having to pay transaction fees to the credit card companies. Thus, he may prefer paying a 1% fee in Algorand to paying the typically higher transaction fee in a credit card system (in addition to preferring to be paid within minutes, rather than days, and in much less disputable ways.)

Accordingly, a certificate-based Algorand may ensure that

*(1) all rewards a small percentage of the payments made to merchants only, and yet*
*(2) the verifiers are incentivized to process* all *other payments as well.*

For instance, letting $A'$ be the total amount paid to retails in the payments of $PAY^r$, one.

[51] Going a step further, the Government may also be allowed to print money in Algorand, and may transfer it, in particular, to banks, or, if the banks are sufficiently regulated, it may allow them to generate Algorand money within certain parameters.

[52] "Representative" mechanisms for doing just that are described in Appendix ??. That section is devoted to implementations of Algornand with a specially constructed communication network. However, the delegation mechanisms described there may be adopted no matter what the underlying network may be. could compute a *maximum potential reward R'* (e.g., $R' = 1\%A'$). The leader and the verifiers, however, will not collectively receive the entire amount $R'$, but only a fraction of $R'$ that grows with the total number (or the total amount, or a combination thereof) of all payments in $PAY^r$. For example, keeping things very simple, if the total number of payments in $PAY^r$ is m, then the actual reward that will be distributed will be $R'(1-1/m)$. As before, this can be done automatically by deducting a fraction $1\%(1-1/m)$ from the amount paid to each retailer, and partitioning this deducted amount among the leader and verifiers according to a chosen formula.

## 13 Variants

Let us discuss some possible variants to Algorand.

### 13.1 Alternative Verifier-Selection Mechanisms

So far, Algorand selects the leader $\ell_r$ and the verifier set $SV^r$ of a round r automatically, from quantities depending on previous rounds, making sure that $SV^r$ has a prescribed honest majority. We wish to point out, however, alternative ways to select the verifiers and the leader.

One such way, of course, is via a cryptographic protocol run by all users. This approach, however, may be slow when the number of users in the system is high. Let us thus consider two classes of alternative mechanisms: *chained* , *nature-based*, and *trusted-party.* (One may also mix these mechanisms with those already discussed.)

### Chained Mechanisms

Inductively assuming that each $SV^r$ has an honest majority, we could have $SV^r$ itself (or more generally some of the verifiers of the rounds up to r) select the verifier set and/or the leader of round r. For instance, they could do so via multi-party secure computation. Assuming that the initial verifier set is chosen so as to have an honest majority, we rely on boot-strapping: that is, the honest majority of each verifier set implies the honest majority of the next one. Since a verifier set is small with respect to the set of all users, his members can implement this selection very quickly.

Again, it suffices for each round to select a sufficiently long random string, from which the verifier set and the leader are deterministically derived.

### Nature-Based Mechanisms

The verifier set $SV^r$ and the leader $\ell^r$ of a given round r can be selected, from a prescribed set of users $PV^{r-k}$, in a pre-determined manner from a random value $v_r$ associated to the round $r$. In particular, $v_r$ may be a *natural and public random value.* By this we mean that it is the widely available result of a random process that is hardly controllable by any given individual. For instance, $v_r$ may consist of the temperatures of various cities at a given time (e.g., at the start of round r, or at a given time of the previous round), or the numbers of stock of given security traded at a given time at a given stock exchange, and so on.

Since natural and public random value may not be sufficiently long, rather than setting

$$SV^r \overset{v_r}{\leftarrow} PV^{r-k} \ ,$$

we may instead set

$$SV^r \overset{H(v_r)}{\leftarrow} PV^{r-k} \ ,$$

elongating $H(v_r)$ in a suitable peseudo-random fashion, is needed, as already discussed.

### Trustee-Based Mechanisms

An alternative approach to selecting $SV^r$ involves one or more distinguished entities, the *trustees,* selected so as to guarantee that at least one of them is honest. The trustees may not get involved with building the payset $PAY^r$, but may choose the verifier set $SV^r$ and/or the leader $\ell^r$.

The simplest trustee-based mechanisms, of course, are the single-trustee ones. When there is only one trustee, $T$, he is necessarily honest. Accordingly, he can trivially select, digitally sign, and make available $SV^r$ (or a sufficiently random string $s_r$ from which $SV^r$ is derived) at round $r$.

This a simple mechanism, however, puts so much trust on $T$. To trust him to a lesser extent, $T$ may make available a single string, $s_r$, uniquely determined by the round $r$, that only he can produce: for instance, $s^r = SIG_T(r)$. Then, every user can compute the random string $H(SIG_T(v_T))$, from which $SV^r$ is derived.

This way, $T$ does not have the power to control the set $SV^r$. Essentially, he has a single strategic decision at his disposal: making $SIG_T(r)$ available or not. Accordingly, it is easier to check whether $T$ is acting honestly, and thus to ensure that he does so, with proper incentives or punishments.

The problem of this approach is (the lack of) unpredictability. Indeed, $T$ may compute $SIG_T(r)$ way in advance, and secretly reveal it to someone, who thus knows the verifier set of a future round, and has sufficient time to attack or corrupt its members.

To avoid this problem, we may rely on secure hardware. Essentially, we may have $T$ be a tamper-proof device, having a public key posted "outside" and a matching secret key locked "inside", together with the program that outputs the proper digital signatures at the proper rounds. This approach, of course, requires trusting that the program deployed inside the secure hardware has no secret instructions to divulge future signatures in advance.

A different approach is using a natural public random value $v_r$ associated to each round $r$. For instance, $T$ may be asked to make available $SIG_T(v_r)$. This way, since the value $v_r$ of future rounds $r$ is not known to anyone, $T$ has no digital signature to divulge in advance.

The only thing that $T$ may still divulge, however, is its own secret signing key. To counter this potential problem we can rely on $k$ trustees. If they could be chosen so as to ensure that a suitable majority of them are honest, then they can certainly use multi-party secure computation to choose $SV^r$ at each round $r$. More simply, and with less trust, at each round $r$, we may have each trustee $i$ make available a single string, uniquely associated to $r$ and that only $i$ can produce, and then compute $SV^r$ for all such strings. For instance, each trustee $i$ could make available the string $SIG_i(r)$, so that one can compute the random string $s^r=H(SIG_1(r),..., SIG_k(r))$, from which the verifier set $SV^r$ is derived. In this approach we might rely on incentives and punishments to ensure that each digital signature $SIG_i(r)$ is produced, and rely on the honesty of even a single trustee $i$ to ensure that the sequence $s^1$, $s^2$,... remains unpredictable.

The tricky part, of course, is making a required string "available". If we relied on propagation protocols then a malicious trustee may start propagating it deliberately late in order to generate confusion. So, trustee-based mechanisms must rely on the existence of a "guaranteed broadcast channel", that is, a way to send messages so that, if one user receives a message $m$, then he is guaranteed that everyone else receives the same $m$.

Finally, rather than using secure computation at each round, one can use a secure computation pre-processing step. This step is taken at the start of the system, by a set of trustees, selected so as to have an honest majority. This step, possibly by multiple stages of computation, produces a public value $pv$ and a secret value $v_i$ for each trustee $i$. While this initial computation may take some time, the computation required at each round $r$ could be trivial. For instance, for each round $r$, each trustee $i$, using his secret value $v_i$, produces and propagates a (preferably digitally signed) single reconstruction string $s_i^r$, such that, given any set of strings $S^r$ that contains a majority of the correct reconstruction strings, anyone can unambiguously construct $SV^r$ (or a random value from which $SV^r$ is derived). The danger of this approach, of course, is that a fixed set of trustees can be more easily attacked or corrupted.

### 13.2 More Sophisticated Cryptographic Tools

Algorand can also benefit from more sophisticated cryptographic tools. In particular,

1. *Combinable Signatures.* Often, in Algorand , some piece of data $D$ must be digitally signed by multiple parties. To generate a more compact authenticated record, one can use combinable digital signatures. In such signatures, multiple public keys -e.g., $PK_1$, $PK_2$ and $PK_3$ could be combined into a single public key $PK = PK_{1,2,3}$- and signatures of the same data $D$ relative to different public keys can be combined into a single signature relative to the corresponding combined public key. For instance, $SIG_1(D)$, $SIG_2(D)$ and $SIG_3(D)$ could be transformed into a single digital signature $s = SIG_{1,2,3}(D)$, which can be verified by anyone relative to public key $PK_{1,2,3}$. A compact record of the identifiers of the relevant public key, in our example the set {1,2,3}, can accompany $s$, so that anyone can quickly gather $PK_1$, $PK_2$ and $PK_3$, compute $PK = PK_{1,2,3}$, and verify the signature s of $D$ based on $PK$.
This allows to turn multiple related propagations into a single propagation. In essence, assume that, during a propagation protocol, a user has received $SIG_{1,2,3}(D)$ together with a record {1,2,3} as well as $SIG_{4,5}(D)$ together with a record {4,5}. Then he might as well propagate $SIG_{1,2,3,4,5}(D)$ and the record {1,2,3,4,5}.

2. *Tree-Hash-and-Sign.* When a signature authenticates multiple pieces of data, it may be useful to be able to extract just a signature of a single piece of data, rather than having to keep or send the entire list of signed items. For instance, a player may wish to keep an authenticated record of a given payment $P \in PAY^r$ rather than the entire authenticated $PAY^r$. To this end, we can first generate a Merkle tree storing each payment $P \in PAY^r$ in a separate leaf, and then digitally sign the root. This signature, together with item $P$ and its authenticating path, is an alternative signature of essentially $P$ alone.

3. *Certified Email.* One advantage of the latter way of proceeding is that a player can send his payment to $\ell$ by

certified email,[53] preferably in a sender-anonymous way, so as to obtain a receipt that may help punish $\ell$ if it purposely decides not to include some of those payments in $PAY_\ell^r$. [53]E.g., by the light-weight certified email of US Patent 5,666,420.

## 14 Scope

Software implementations of the system described herein may include executable code that is stored in a computer readable medium and executed by one or more processors. The computer readable medium may be non-transitory and include a computer hard drive, ROM, RAM, flash memory, portable computer storage media such as a CD- ROM, a DVD-ROM, a flash drive, an SD card and/or other drive with, for example, a universal serial bus (USB) interface, and/or any other appropriate tangible or non- transitory computer readable medium or computer memory on which executable code may be stored and executed by a processor. The system described herein may be used in connection with any appropriate operating system.

Other embodiments of the invention will be apparent to those skilled in the art from a consideration of the specification or practice of the invention disclosed herein. It is intended that the specification and examples be considered as exemplary only, with key aspects of the invention being indicated by the following clauses.

Clause 1. In a transaction system in which transactions are organized in blocks, a method for an entity to construct a new block $B^r$ of valid transactions, relative to a sequence of prior blocks $B^0, B^1, ... , B^{r1}$, comprising:

> having the entity determine a quantity Q from the prior blocks;
> having the entity use a secret key in order to compute a string S uniquely associated to Q and the entity;
> having the entity compute from S a quantity T that is at least one of: S itself, a function of S, and hash value of S;
> having the entity determine whether T possesses a given property; and
> if T possesses the given property, having the entity digitally sign $B^r$ and make available S and a digitally signed version of $B^r$.

Clause 2. A method as in clause 1, wherein the secret key is a secret signing key corresponding to a public key of the entity and S is a digital signature of Q by the entity.

Clause 3. A method as in clause 1, wherein T is a number and satisfies the property if T is less than a given number p.

Clause 4. A method as in clause 2, wherein S is made available by making S deducible from $B^r$.

Clause 5. A method as in clause 2, wherein each user has a balance in the transaction system and p varies for each user according to the balance of each user.

Clause 6. In a transaction system in which transactions are organized in blocks and blocks are approved by a set of digital signatures, a method for an entity to approve a new block of transactions, $B^r$, given a sequence of prior blocks, $B^0, ... , B^{r-1}$, comprising:

> having the entity determine a quantity Q from the prior blocks;
> having the entity compute a digital signature S of Q;
> having the entity compute from S a quantity T that is at least one of: S itself, a function of S, and hash value of S;
> having the entity determine whether T possesses a given property; and
> if T possesses the given property, having the entity make S available to others.

Clause 7. A method as in clause 6, wherein T is a binary expansion of a number and satisfies the given property if T is less than a pre-defined threshold, p, and wherein the entity also makes S available.

Clause 8. A method as in clause 6, wherein the entity has a balance in the transaction system and p varies according to the balance of the entity.

Clause 9. A method as in clause 8, wherein the entity acts as an authorized representative of at least an other entity.

Clause 10. A method as in clause 9, wherein p depends on at least one of: the balance of the entity and a combination of the balance of the entity and a balance of the other entity.

Clause 11. A method as in clause 9, wherein the other user authorizes the user with a digital signature.

Clause 12. A method as in clause 6, wherein the entity digitally signs $B^r$ only if $B^r$ is an output of a Byzantine agreement protocol executed by a given set of entities.

Clause 13. A method as in clause 12, wherein a particular one of the entities belongs to the given set of entities if a digital signature of the particular one of the entities has a quantity determined by the prior blocks that satisfies a given property.

Clause 14. In a transaction system in which transactions are organized in a sequence of generated and digitally signed blocks, $B^0, \dots, B^{r-1}$, wherein each block $B^r$ contains some information $INFO^r$ that is to be secured and contains securing information $S^r$, a method to prevent contents of a block from being undetectably altered, the method comprising:

every time that a new block $B^i$ is generated, inserting information $INFO_i$ of $B^i$ into a leaf $i$ of a binary tree;
merklefying the binary tree to obtain a Merkle tree $Ti$; and
determining the securing information $S^i$ of block $B^i$ to include a content $R_i$ of a root of $T_i$ and an authenticating path of contents of the leaf $i$ in $T_i$.

Clause 15. A method as in clause 14, wherein securing information of $S^{i-1}$ of a preceding block $B^{i1}$ is stored and the securing information $S^i$ is obtained by hashing, in a predetermined sequence, values from a set including at least one of: the values of $S^{i1}$, the hash of $INFO^i$, and a given value.

Clause 16. A method as in clause 15, wherein a first entity proves to a second entity having the securing information $S^z$ of a block $B^z$ that the information $INFO^r$ of the block $B^r$ preceding a block $B^z$ is authentic by causing the second entity to receive the authenticating path of $INFO^i$ in the Merkle tree $T_z$.

Clause 17. In a payment system in which users have a balance and transfer money to one another via digitally signed payments and balances of an initial set of users are known, where a first set of user payments is collected into a first digitally signed block, $B^1$, a second set of user payments is collected into a second digitally signed block, $B^2$, becoming available after $B^1$, etc., a method for an entity E to provide verified information about a balance $a_i$ that a user $i$ has available after all the payments the user $i$ has made and received at a time of an rth block, $B^r$, the method comprising:

computing, from information deducible from information specified in the sequence of block $B^0, \dots, B^{r-1}$, an amount $a_x$ for every user $x$;
computing a number, n, of users in the system at the time of an rth block, $B^r$ being made available;
ordering the users $x$ in a given order;
for each user x, if $x$ is the $i$th user in the given order, storing $a_x$ in a leaf $i$ of a binary tree T with at least n leaves;
determining Merkle values for the tree T to compute a value R stored at a root of T; producing a digital signature S that authenticates R; and making S available as proof of contents of any leaf $i$ of T by providing contents of every node that is a sibling of a node in a path between leaf $i$ and the root of T.

Clause 18. In a payment system in which users have a balance and transfer money to one another via digitally signed payments and balances of an initial set of users are known, where a first set of user payments is collected into a first digitally signed block, $B^1$, a second set of user payments is collected into a second digitally signed block, $B^2$, becoming available after $B^1$, etc., a method for a set of entities E to provide information that enables one to verify the balance $a_i$ that a user $i$ has available after all the payments the user $i$ has made and received at a time of an rth block, $B^r$, the method comprising:

determining the balance of each user $i$ after the payments of the first $r$ blocks;
generating a Merkle-balanced-search-tree $T^r$, wherein the balance of each user is a value to be secured of at least one node of $T^r$;
having each member of the set of entities generate a digital signature of information that includes the securing value $hv_\varepsilon$ of the root of $T^r$; and
providing the digital signatures of $hv_\varepsilon$ to prove the balance of at least one of the users after the payments of the first $r$.

Clause 19. A method as in clause 18, wherein the set of entities consists of one entity.

Clause 20. A method as in clause 18, wherein the set of entities are selected based on values of digital signatures thereof.

Clause 21. In a payment system in which users have a balance and transfer money to one another via digitally signed payments and balances of an initial set of users are known, where a first set of user payments is collected into a first digitally signed block, $B^1$, a second set of user payments is collected into a second digitally signed block, $B^2$, becoming available after $B^1$, etc., a method for an entity E to prove the balance $a_i$ that a user $i$ has available after all the payments the user $i$ has made and received at a time of an rth block, $B^r$, the method comprising:

obtaining digital signatures of members of a set of entities of the securing information $hv_\varepsilon$ of the root of a Merkle-balanced-search tree $T^r$, wherein the balance of each user is an information value of at least one node of $T^r$; and
computing an authentication path and the content of every node that a given search algorithm processes in order to search in $T^r$ for the user $i$; and
providing the authenticating paths and contents and the digital signatures to enable another entity to verify the balance of $i$.

Clause 22. Computer software, provided in a non-transitory computer-readable medium, comprising: executable code that implements the method of one of the preceding clauses 1-21.

## Claims

1. A method of enabling a first entity of a blockchain system to prove to other entities associated with the blockchain system that the first entity has been selected to perform a given task, comprising:

   following a first cryptographic procedure to generate a first string based on a pre-existing sequence of blocks of a blockchain,
   computing, using a secret cryptographic key, a proof string uniquely associated with the first string,
   following a second cryptographic procedure to determine a numerical quantity based on the proof string,
   determining whether the numerical quantity meets a given numerical threshold, and
   in response to the determination, propagating the proof string to the blockchain.

2. The method of claim 1, including at least one of the following features:

   - the blockchain system includes pre-existing Blocks $B^1$ ... $B^{r-1}$, and generating a Block $B^r$;
   - the first cryptographic procedure includes generating a signature $Q^r$ that is the hash digital signature of the leader of block $B^r$ of the pair ($Q^{r-1}$, r);
   - generating a first string based on a pre-existing sequence of blocks of a blockchain includes determining a quantity Q from the prior blocks;
   - the second cryptographic procedure for determining a numerical quantity based on the proof string includes computing from the proof spring S a quantity T that is at least one of: S itself, a function of S, and hash value of S;
   - determining whether the numerical quantity meets a given numerical threshold includes determining whether T possesses a given property;
   - propagating the proof string to the blockchain includes making available the proof string S.

3. The method of claims 1 or 2, wherein the first entity comprises a potential block proposer and the task comprises proposing a new block to be added to the blockchain, preferably the first entity is selected as block leader trusted with the task to assemble a new Block $B^r$ of valid transactions, to authenticate it and to propagate it.

4. The method of claim 3, wherein the first entity propagates the proof string together with the proposed new block to be added to the blockchain.

5. The method of one of the preceding claims, wherein the first entity comprises a potential verifier and the task comprises verifying the correctness of a portion of information to be posted on the blockchain, preferably by selecting a set of verifiers.

6. The method of claim 5, further comprising at least one of the following features:

- the portion of information to be posted on the blockchain comprises a new block $B^r$ to be added to the blockchain;
- the potential verifier propagates the proof string together with a result of its verification, preferably by digitally signing the new Block $B^r$.

7. The method of one of the preceding claims, wherein the first entity comprises a potential verifier and the task comprises correctly processing a set of transactions.

8. The method of claim 7, wherein the transactions are part of a proposed block of transactions to be posted on the blockchain.

9. The method of claim 7, wherein the potential verifier propagates the proof string together with a result of its verification.

10. The method of one of the preceding claims, wherein the proof string comprises a digital signature, preferably the digital signature of the first entity.

11. The method of one of the preceding claims, wherein the proof string is verifiable by other entities associated with the blockchain system, wherein the secret cryptographic key is unavailable to the other entities, preferably by hashing a signature and comparing it to a given threshold p.

12. The method of one of the preceding claims, wherein the first cryptographic procedure comprises determining a random quantity Q defined based on a previous first string of the pre-existing sequence of blocks of the blockchain.

13. The method of one of the preceding claims, wherein the second cryptographic procedure comprises a random oracle.

14. The method of one of the preceding claims, wherein the second cryptographic procedure comprises a cryptographic hash function.

15. The method of one of the preceding claims, wherein determining whether the numerical quantity meets a given numerical threshold p comprises determining whether the numerical quantity is less than the given numerical threshold.

20

24

22a   22b   • • •   22c

FIG. 1

Secret Cryptographic Sortition

$ESIG_b(B_b^r) \; \sigma_b^{r,1}$  $ESIG(B_d^r) \; \sigma_d^{r,1}$  $ESIG(B_h^r) \; \sigma_h^{r,1}$

Smallest Credential and Input Block for the Agreement Protocol

$\sigma_d^{r,1}$  $B_d^r$

FIG. 2

$$B_a^r \qquad\qquad B_e^r \qquad\qquad B_q^r$$

$$a \qquad\qquad c \qquad\qquad q$$

$$ESIG(m_a^{r,2})\ \sigma_a^{r,2} \qquad ESIG(m_e^{r,2})\ \sigma_e^{r,2} \qquad ESIG(m_q^{r,2})\ \sigma_q^{r,2}$$

Step 3 of Algorand

⋮

Step 8 of Algorand

$$b \qquad\qquad f \qquad\qquad x$$

$$ESIG_b(B^r)\sigma_b^{r,8} \qquad ESIG_f(B^r)\ \sigma_f^{r,8} \qquad ESIG_x(B^r)\ \sigma_x^{r,8}$$

FIG. 3

Fig. 4.A

Fig. 4.B

FIG. 4

FIG. 5

**EUROPEAN SEARCH REPORT**

Application Number

EP 20 20 1161

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LOI LUU ET AL: "SCP: A Computationally-Scalable Byzantine Consensus Protocol For Blockchains", IACR, INTERNATIONAL ASSOCIATION FOR CRYPTOLOGIC RESEARCH, vol. 20151214:030215, 14 December 2015 (2015-12-14), pages 1-16, XP061019809, * sections II-V; Figure 3, 4 * | 1-10 | INV. G06Q40/00 H04L9/32 G06Q20/38 G06Q20/40 G06Q30/02 |
| A | David Schwartz ET AL: "Ripple Labs Inc, 2014 The Ripple Protocol Consensus Algorithm", , 1 January 2014 (2014-01-01), XP055468556, Retrieved from the Internet: URL:https://ripple.com/files/ripple_consensus_whitepaper.pdf [retrieved on 2018-04-19] * the whole document * | 1-10 | |
| A | PAUL FELDMAN ET AL: "Byzantine agreement in constant expected time", FOUNDATIONS OF COMPUTER SCIENCE, 1984., 26TH ANNUAL SYMPOSIUM ON, IEEE, PISCATAWAY, NJ, USA, 21 October 1985 (1985-10-21), pages 267-276, XP031287968, ISBN: 978-0-8186-0844-5 * the whole document * | 1-10 | TECHNICAL FIELDS SEARCHED (IPC) H04L |

The present search report has been drawn up for all claims

| Place of search | Date of completion of the search | Examiner |
|---|---|---|
| Munich | 15 September 2021 | Spranger, Stephanie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 62331654 B
- US 62333340 B
- US 62343369 B
- US 62344667 B
- US 62346775 B
- US 62351011 B
- US 62353482 B
- US 62354195 B
- US 62363970 B
- US 62369447 B
- US 62378753 B
- US 62383299 B
- US 62394091 B
- US 62400361 B
- US 62403403 B
- US 62410721 B
- US 62416959 B
- US 62422883 B
- US 62455444 B
- US 62458746 B
- US 62459652 B